(19)

**Europäisches Patentamt**
**European Patent Office**
**Office européen des brevets**

(11) **EP 4 715 669 A1**

(12) **EUROPEAN PATENT APPLICATION**

(43) Date of publication:
25.03.2026 Bulletin 2026/13

(51) International Patent Classification (IPC):
*G06N 3/02* (2006.01)

(21) Application number: 25204784.0

(22) Date of filing: 22.12.2021

(52) Cooperative Patent Classification (CPC):
**H04L 25/0254; G06F 18/251; G06F 18/253;**
**G06N 3/045; G06N 3/0464; G06N 3/0475;**
**G06N 3/084; G06N 3/09; G06N 3/094; G06V 10/82**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: 24.12.2020 CN 202011556035

(62) Document number(s) of the earlier application(s) in
accordance with Art. 76 EPC:
**21909446.3 / 4 266 215**

(71) Applicant: **Huawei Technologies Co., Ltd.**
**Shenzhen, Guangdong 518129 (CN)**

(72) Inventors:
• **HUANGFU, Yourui**
**Shenzhen, 518129 (CN)**
• **WANG, Jian**
**Shenzhen, 518129 (CN)**
• **LI, Rong**
**Shenzhen, 518129 (CN)**

• **WANG, Jun**
**Shenzhen, 518129 (CN)**
• **BI, Xiaoyan**
**Shenzhen, 518129 (CN)**
• **MA, Jianglei**
**Shenzhen, 518129 (CN)**

(74) Representative: **Gill Jennings & Every LLP**
**The Broadgate Tower**
**20 Primrose Street**
**London EC2A 2ES (GB)**

Remarks:
•This application was filed on 25-09-2025 as a
divisional application to the application mentioned
under INID code 62.
•Claims filed after the date of filing of the application /
after the date of receipt of the divisional application
(Rule 68(4) EPC).

(54) **INFORMATION GENERATION METHOD AND RELATED APPARATUS**

(57) Embodiments of this application disclose an information generation method and a related apparatus. The method includes: A second device receives a first message and a third message, and sends a second message to a first device. The first message indicates all or a part of a first generator, the third message indicates all or a part of a third generator, an input supported by the first generator includes first information of a first type, an input supported by the third generator includes fourth information of the first type, and the first generator and the third generator are configured to train a neural network corresponding to a second generator; and the second message indicates all or a part of the second generator, and an input supported by the second generator includes the first information and the fourth information. According to embodiments of this application, information collected in a real scenario may be used to train a generation model, to implement communication-assisted detection and detection-assisted communication, so that a communication network develops towards a more intelligent and adaptive direction.

FIG. 5

## Description

This application claims priority to Chinese Patent Application No. 202011556035.5, filed with the China National Intellectual Property Administration on December 24, 2020 and entitled "INFORMATION GENERATION METHOD AND RELATED APPARATUS", which is incorporated herein by reference in its entirety.

## TECHNICAL FIELD

This application relates to the field of communication technologies, and in particular, to an information generation method and a related apparatus.

## BACKGROUND

In wireless communication technologies, transmission of a radio signal in space is affected by a wireless transmission environment. Therefore, a channel response needs to be measured (or estimated) at a receive end, and the sent radio signal is restored based on the channel response. Currently, when and where a communication device obtains channel estimation is not fully used. Even if the communication device is in a same scenario (which means a same place and a same environment) twice, the communication device does not make improvement based on information obtained last time during second communication.

In the future, wireless communication scenarios are increasingly diversified, such as self-driving, uncrewed aerial vehicles, radio perception, and augmented reality; and wireless communication technologies are used in all the scenarios. Therefore, as more and more wireless information can be collected, how to use the information to implement communication-assisted detection and detection-assisted communication, to cause a communication network to develop towards a more intelligent and adaptive direction becomes an urgent problem to be resolved.

## SUMMARY

Embodiments of this application provide an information generation method and a related apparatus, information collected in a real scenario may be fully used to train a generation model, so that the generation model can generate (or infer or predict) another part of information by using a part of information, thereby implementing communication-assisted detection and detection-assisted communication, and causing a communication network to develop towards a more intelligent and adaptive direction.

The following describes this application from different aspects. It should be understood that mutual reference may be made to the following implementations and beneficial effects of the different aspects.

According to a first aspect, this application provides an information generation method. The method includes: A first device sends a first message to a second device, and receives a second message from the second device. The first message indicates all or a part of a first generator. An input supported by the first generator includes first information of a first type. The first generator is configured to train a neural network corresponding to a second generator. The second message indicates all or a part of the second generator and an input supported by the second generator. The input supported by the second generator includes the first information of the first type and fourth information of the first type. The fourth information is different from the first information, and the first generator is different from the second generator.

It can be learned that, in this solution, information collected by a communication device is fully used to train a generation model, so that the generation model can generate (or infer or predict) another part of information by using a part of information, thereby implementing communication-assisted detection and detection-assisted communication, and causing a communication network to develop towards a more intelligent and adaptive direction.

With reference to the first aspect, in a possible design, after the first device receives the second message, the method further includes: The first device inputs, based on the input supported by the second generator, the fourth information of the first type into the second generator to generate fifth information of a second type.

It can be learned that, in this solution, information in a scenario for which the first device is not trained may be generated by using an all-scenario generation module (that is, the second generator) obtained by the second device through training.

With reference to the first aspect, in a possible design, before the first device sends the first message, the method further includes: The first device obtains a plurality of pieces of first information of the first type and third information of the second type that corresponds to each piece of first information, where one piece of first information and the third information corresponding to the first information form one first training sample; and the first device trains a first neural network by using a plurality of first training samples, to obtain the first generator, where the first generator is a trained first neural network. Both the first information and the third information are information of different types collected in a real environment.

Optionally, in a training process, the first information in the first training sample and data randomly selected from a latent space are used as an input of the first neural network; an output of the first neural network and the third information in the first training sample are used as an input of a first loss function; and a gradient of the first neural network is calculated by using an output of the first loss function, and the first neural network is trained by using a gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, each first training sample further includes one piece of information randomly selected from the latent space. The latent space refers to random noise.

With reference to the first aspect, in a possible design, before the first device sends the first message, the method further includes: The first device obtains a plurality of pieces of first information of the first type and third information of the second type that corresponds to each piece of first information, where one piece of first information and the third information corresponding to the first information form one first training sample; and the first device trains a first neural network and a second neural network by using a plurality of first training samples, to separately obtain the first generator and a first discriminator, where the first generator is a trained first neural network, and the first discriminator is a trained second neural network. The first neural network is a generator in a generative adversarial network, and the second neural network is a discriminator in the generative adversarial network.

Optionally, in a training process, the first information in the first training sample and data randomly selected from a latent space are used as an input of the first neural network; an output of the first neural network and the first information are inputted into the second neural network, to obtain a first output; the first information and the third information corresponding to the first information are inputted into the second neural network, to obtain a second output; the first output and a first label are inputted into a second loss function, to obtain an output of the second loss function; the second output and a second label are inputted into a third loss function, to obtain an output of the third loss function; the first output and a third label are inputted into a fourth loss function, to obtain an output of the fourth loss function; a gradient of the second neural network is calculated by using the output of the second loss function and the output of the third loss function, and the second neural network is trained by using a gradient descent algorithm; and a gradient of the first neural network is calculated by using the output of the fourth loss function, and the first neural network is trained by using the gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, each first training sample further includes one piece of information randomly selected from the latent space. The latent space refers to random noise.

It can be learned that, in this solution, a generation model is trained by using collected real information, so that the generation model can generate (or infer or predict) another part of information by using a part of information.

With reference to the first aspect, in a possible design, after the first device sends the first message, the method further includes: The first device receives a first update indication from the second device, where the first update indication indicates the first device to retrain the first generator; the first device re-obtains, in a current scenario, a current user profile, or a current wireless channel characteristic, a plurality of pieces of seventh information of the first type, eighth information of the second type that corresponds to each piece of seventh information, and a latent space; the first device retrains the first generator by using the plurality of pieces of seventh information, the eighth information corresponding to each piece of seventh information, and the latent space; and the first device sends a retrained first generator.

It can be learned that, in this solution, when an update indication is received, information is re-collected to train the first generator, so that the first generator obtained through re-training is applicable to a current scenario, a current user profile, or a current wireless channel characteristic.

According to a second aspect, this application provides an information generation method. The method includes: A third device sends a third message to a second device, and receives a fourth message from the second device. The third message indicates all or a part of a third generator, and an input supported by the third generator includes fourth information of a first type. The third generator is configured to train a neural network corresponding to a second generator. The fourth message indicates all or a part of the second generator. An input supported by the second generator includes first information of the first type and the fourth information of the first type. The fourth information is different from the first information, and the third generator is different from the second generator.

With reference to the second aspect, in a possible design, after the third device receives the fourth message, the method further includes: The third device inputs, based on the input supported by the second generator, the first information of the first type into the second generator to generate second information of a second type.

With reference to the second aspect, in a possible design, before the third device sends the third message, the method further includes: The third device obtains a plurality of pieces of fourth information of the first type and sixth information of the second type that corresponds to each piece of fourth information, where one piece of fourth information and the sixth information corresponding to the fourth information form one second training sample; and the third device trains a fifth neural network by using a plurality of second training samples, to obtain the third generator, where the third generator is a trained fifth neural network. Both the fourth information and the sixth information are information of different types collected in a real environment.

Optionally, in a training process, the fourth information in the second training sample and data randomly selected from a latent space are used as an input of the fifth neural network; an output of the fifth neural network and the sixth information in the second training sample are used as an input of a loss function; and a gradient of the fifth neural network is calculated by using an output of the loss function, and the fifth neural network is trained by using a gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, each second training sample further includes one piece of information randomly selected from the latent space. The latent space refers to random noise.

With reference to the second aspect, in a possible design, before the third device sends the third message, the method further includes: The third device obtains a plurality of pieces of fourth information of the first type and sixth information of the second type that corresponds to each piece of fourth information, where one piece of fourth information and the sixth information corresponding to the fourth information form one second training sample; and the third device trains a fifth neural network and a sixth neural network by using a plurality of second training samples, to separately obtain the third generator and a third discriminator, where the third generator is a trained fifth neural network, and the third discriminator is a trained sixth neural network. The fifth neural network is a generator in a generative adversarial network, and the sixth neural network is a discriminator in the generative adversarial network.

Optionally, in a training process, the fourth information in the second training sample and data randomly selected from a latent space are used as an input of the fifth neural network; an output of the fifth neural network and the fourth information are inputted into the sixth neural network, to obtain a fifth output; the fourth information and the sixth information corresponding to the fourth information are inputted into the sixth neural network, to obtain a sixth output; the fifth output and a first label are inputted into a loss function A, to obtain an output of the loss function A; the sixth output and a second label are inputted into a loss function B, to obtain an output of the loss function B; the fifth output and a third label are inputted into a loss function C, to obtain an output of the loss function C; a gradient of the sixth neural network is calculated by using the output of the loss function A and the output of the loss function B, and the sixth neural network is trained by using a gradient descent algorithm; and a gradient of the fifth neural network is calculated by using the output of the loss function C, and the fifth neural network is trained by using the gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, each second training sample further includes one piece of information randomly selected from the latent space. The latent space refers to random noise.

With reference to the second aspect, in a possible design, after the third device sends the third message, the method further includes: The third device receives a second update indication from the second device, where the second update indication indicates the third device to retrain the third generator; the third device re-obtains, in a current scenario, a current user profile, or a current wireless channel characteristic, a plurality of pieces of ninth information of the first type, tenth information of the second type that corresponds to each piece of ninth information, and a latent space; the third device retrains the third generator by using the plurality of pieces of ninth information, the tenth information corresponding to each piece of ninth information, and the latent space; and the third device sends a retrained third generator.

According to a third aspect, this application provides an information generation method. The method includes: A second device receives a first message and a third message, sends a second message to a first device, and sends a fourth message to a third device. The first message indicates all or a part of a first generator. The third message indicates all or a part of a third generator. An input supported by the first generator includes first information of a first type, and an input supported by the third generator includes fourth information of the first type. The first generator and the third generator are configured to train a neural network corresponding to a second generator. The second message or the fourth message indicates all or a part of the second generator. An input supported by the second generator includes the first information of the first type and the fourth information of the first type. The fourth information is different from the first information, and the first generator, the third generator, and the second generator are different from each other.

In this solution, information collected by a communication device (that is, the first device or the third device) is fully used to train a generation model, so that the generation model can generate (or infer or predict) another part of information by using a part of information, thereby implementing communication-assisted detection and detection-assisted communication, and causing a communication network to develop towards a more intelligent and adaptive direction. In addition, in this solution, generation models of a plurality of communication devices (that is, the first device and the third device) are further summarized, and the generation models are trained into a multi-scenario generation model (that is, the second generator). Through continuous summarization and training, the generation model gradually and automatically evolves into an all-scenario generation model in a communication network. This can not only resolve a problem that information collected by a single communication device is unvaried, but also quickly improve a generalization capability of the generation model.

With reference to the third aspect, in a possible design, before the second device sends the second message, the method further includes: The second device obtains a plurality of pieces of first information of the first type and a plurality of pieces of fourth information of the first type, where one piece of first information and one piece of second information of a second type that is obtained by inputting the first information into the first generator form one third training sample, one piece of fourth information and one piece of fifth information of the second type that is obtained by inputting the fourth information into the third generator form one fourth training sample, and a plurality of third training samples and a plurality of fourth training samples form one training sample set; and the second device trains a third neural network by using a plurality of training samples in the training sample set, to obtain the second generator, where the second generator is a trained third neural network. The second generator is separately configured to support generating second information of the second type based on the first information and generating fifth information of the second type based on the fourth information.

Optionally, each third training sample further includes one piece of information randomly selected from a latent space. Each fourth training sample further includes one piece of information randomly selected from the latent space.

With reference to the third aspect, in a possible design, before the second device sends the second message, the method further includes: The second device obtains a plurality of pieces of first information of the first type and a plurality of pieces of fourth information of the first type, where one piece of first information and one piece of second information of a second type that is obtained by inputting the first information into the first generator form one third training sample, one piece of fourth information and one piece of fifth information of the second type that is obtained by inputting the fourth information into the third generator form one fourth training sample, and a plurality of third training samples and a plurality of fourth training samples form one training sample set; and the second device trains a third neural network and a fourth neural network by using a plurality of training samples in the training sample set, to separately obtain the second generator and a second discriminator, where the second generator is a trained third neural network, and the second discriminator is a trained fourth neural network. The third neural network is a generator in a generative adversarial network, and the fourth neural network is a discriminator in the generative adversarial network.

Optionally, each third training sample further includes one piece of information randomly selected from a latent space. Each fourth training sample further includes one piece of information randomly selected from the latent space.

It can be learned that, in this solution, the third neural network is trained by using information collected by the first device and information collected by the third device, so that the trained third neural network gradually and automatically evolves into an all-scenario generation model.

With reference to the third aspect, in a possible design, after the second device receives the first message, the method further includes: The second device sends a first update indication to the first device, where the first update indication indicates the first device to retrain the first generator; and the second device receives a retrained first generator sent by the first device.

With reference to the third aspect, in a possible design, after the second device receives the third message, the method further includes: The second device sends a second update indication to the third device, where the second update indication indicates the third device to retrain the third generator; and the second device receives a retrained third generator sent by the third device.

It can be learned that, in this solution, when the second device finds that the first device or the third device needs to retrain the generator, the second device indicates, through indication information, the first device or the third device to retrain the generator, so that a generator obtained through retraining is applicable to a current scenario of each device.

According to a fourth aspect, this application provides an information generation apparatus. The information generation apparatus may be a first device or a chip in the first device. The information generation apparatus includes a transceiver module, configured to send a first message to a second device, where the first message indicates all or a part of a first generator, an input supported by the first generator includes first information of a first type, and the first generator is configured to train a neural network corresponding to a second generator. The transceiver module is further configured to receive a second message from the second device, where the second message indicates all or a part of the second generator, an input supported by the second generator includes the first information of the first type and fourth information of the first type, the fourth information is different from the first information, and the first generator is different from the second generator.

With reference to the fourth aspect, in a possible design, the information generation apparatus further includes a generation module, configured to input, based on the input supported by the second generator, the fourth information of the first type into the second generator to generate fifth information of a second type.

With reference to the fourth aspect, in a possible design, the information generation apparatus further includes an obtaining module and a training module. The obtaining module is configured to obtain a plurality of pieces of first information of the first type and third information of the second type that corresponds to each piece of first information, where one piece of first information and the third information corresponding to the first information form one first training sample. The training module is configured to train a first neural network by using a plurality of first training samples, to obtain the first generator, where the first generator is a trained first neural network.

Optionally, in a training process, the first information in the first training sample and data randomly selected from a latent space are used as an input of the first neural network; an output of the first neural network and the third information in the first training sample are used as an input of a first loss function; and a gradient of the first neural network is calculated by using an output of the first loss function, and the first neural network is trained by using a gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, each first training sample further includes one piece of information randomly selected from the latent space. The latent space refers to random noise.

With reference to the fourth aspect, in a possible design, the information generation apparatus further includes an obtaining module and a training module. The obtaining module is configured to obtain a plurality of pieces of first information of the first type and third information of the second type that corresponds to each piece of first information, where one piece of first information and the third information corresponding to the first information form one first training sample. The training module is configured to train a first neural network and a second neural network by using a plurality of first training samples, to separately obtain the first generator and a first discriminator, where the first generator is a trained first neural network, and the first discriminator is a trained second neural network. The first neural network is a generator in a generative adversarial network, and the second neural network is a discriminator in the generative adversarial network.

Optionally, in a training process, the first information in the first training sample and data randomly selected from a latent space are used as an input of the first neural network; an output of the first neural network and the first information are inputted into the second neural network, to obtain a first output; the first information and the third information corresponding to the first information are inputted into the second neural network, to obtain a second output; the first output and a first label are inputted into a second loss function, to obtain an output of the second loss function; the second output and a second label are inputted into a third loss function, to obtain an output of the third loss function; the first output and a third label are inputted into a fourth loss function, to obtain an output of the fourth loss function; a gradient of the second neural network is calculated by using the output of the second loss function and the output of the third loss function, and the second neural network is trained by using a gradient descent algorithm; and a gradient of the first neural network is calculated by using the output of the fourth loss function, and the first neural network is trained by using the gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, each first training sample further includes one piece of information randomly selected from the latent space. The latent space refers to random noise.

With reference to the fourth aspect, in a possible design, the transceiver module is further configured to receive a first update indication, where the first update indication indicates the information generation apparatus to retrain the first generator; the obtaining module is further configured to re-obtain a plurality of pieces of seventh information of the first type, eighth information of the second type that corresponds to each piece of seventh information, and a latent space; the training module is further configured to retrain the first generator by using the plurality of pieces of seventh information, the eighth information corresponding to each piece of seventh information, and the latent space; and the transceiver module is further configured to send a retrained first generator.

According to a fifth aspect, this application provides an information generation apparatus. The information generation apparatus may be a third device or a chip in the third device. The information generation apparatus includes a transceiver module, configured to send a third message to a second device, where the third message indicates all or a part of a third generator, an input supported by the third generator includes fourth information of a first type, and the third generator is configured to train a neural network corresponding to a second generator. The transceiver module is further configured to receive a fourth message from the second device, where the fourth message indicates all or a part of the second generator, an input supported by the second generator includes first information of the first type and the fourth information of the first type, the fourth information is different from the first information, and the third generator is different from the second generator.

With reference to the fifth aspect, in a possible design, the information generation apparatus further includes a generation module, configured to input, based on the input supported by the second generator, the first information of the first type into the second generator to generate second information of a second type.

With reference to the fifth aspect, in a possible design, the information generation apparatus further includes an obtaining module and a training module. The obtaining module is configured to obtain a plurality of pieces of fourth information of the first type and sixth information of the second type that corresponds to each piece of fourth information, where one piece of fourth information and the sixth information corresponding to the fourth information form one second training sample. The training module is configured to train a fifth neural network by using a plurality of second training samples, to obtain the third generator, where the third generator is a trained fifth neural network.

Optionally, in a training process, the fourth information in the second training sample and data randomly selected from a latent space are used as an input of the fifth neural network; an output of the fifth neural network and the sixth information in the second training sample are used as an input of a loss function; and a gradient of the fifth neural network is calculated by using an output of the loss function, and the fifth neural network is trained by using a gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, each second training sample further includes one piece of information randomly selected from the latent space. The latent space refers to random noise.

With reference to the fifth aspect, in a possible design, the information generation apparatus further includes an obtaining module and a training module. The obtaining module is configured to obtain a plurality of pieces of fourth information of the first type and sixth information of the second type that corresponds to each piece of fourth information, where one piece of fourth information and the sixth information corresponding to the fourth information form one second training sample. The training module is configured to train a fifth neural network and a sixth neural network by using a plurality of second training samples, to separately obtain the third generator and a third discriminator, where the third generator is a trained fifth neural network, and the third discriminator is a trained sixth neural network. The fifth neural network is a generator in a generative adversarial network, and the sixth neural network is a discriminator in the generative adversarial network.

Optionally, in a training process, the fourth information in the second training sample and data randomly selected from a latent space are used as an input of the fifth neural network; an output of the fifth neural network and the fourth information are inputted into the sixth neural network, to obtain a fifth output; the fourth information and the sixth information corresponding to the fourth information are inputted into the sixth neural network, to obtain a sixth output; the fifth output and a first label are inputted into a loss function A, to obtain an output of the loss function A; the sixth output and a second label are inputted into a loss function B, to obtain an output of the loss function B; the fifth output and a third label are inputted into a loss function C, to obtain an output of the loss function C; a gradient of the sixth neural network is calculated by using the output of the loss function A and the output of the loss function B, and the sixth neural network is trained by using a gradient descent algorithm; and a gradient of the fifth neural network is calculated by using the output of the loss function C, and the fifth neural network is trained by using the gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, each second training sample further includes one piece of information randomly selected from the latent space. The latent space refers to random noise.

With reference to the fifth aspect, in a possible design, the transceiver module is further configured to receive a second update indication, where the second update indication indicates the information generation apparatus to retrain the third generator; the obtaining module is further configured to re-obtain a plurality of pieces of ninth information of the first type, tenth information of the second type that corresponds to each piece of ninth information, and a latent space; the training module is further configured to retrain the third generator by using the plurality of pieces of ninth information, the tenth information corresponding to each piece of ninth information, and the latent space; and the transceiver module is further configured to send a retrained third generator.

According to a sixth aspect, this application provides an information generation apparatus. The information generation apparatus may be a second device or a chip in the second device. The information generation apparatus includes: a transceiver module, configured to receive a first message and a third message, where the first message indicates all or a part of a first generator, the third message indicates all or a part of a third generator, an input supported by the first generator includes first information of a first type, an input supported by the third generator includes fourth information of the first type, and the first generator and the third generator are configured to train a neural network corresponding to a second generator. The transceiver module is further configured to send a second message to a first device, where the second message indicates all or a part of the second generator, an input supported by the second generator includes the first information of the first type and the fourth information of the first type, the fourth information is different from the first information, and the first generator, the third generator, and the second generator are different from each other.

With reference to the sixth aspect, in a possible design, the information generation apparatus further includes an obtaining module and a training module. The obtaining module is configured to obtain a plurality of pieces of first information of the first type and a plurality of pieces of fourth information of the first type. The training module is configured to train a third neural network by using a plurality of training samples in a training sample set, to obtain the second generator, where the second generator is a trained third neural network. One piece of first information and one piece of second information of a second type that is obtained by inputting the first information into the first generator form one third training sample, one piece of fourth information and one piece of fifth information of the second type that is obtained by inputting the fourth information into the third generator form one fourth training sample, and a plurality of third training samples and a plurality of fourth training samples form one training sample set. The second generator is separately configured to support generating second information of the second type based on the first information and generating fifth information of the second type based on the fourth information.

Optionally, each third training sample further includes one piece of information randomly selected from a latent space. Each fourth training sample further includes one piece of information randomly selected from the latent space.

With reference to the sixth aspect, in a possible design, the information generation apparatus further includes an obtaining module and a training module. The obtaining module is configured to obtain a plurality of pieces of first information of the first type and a plurality of pieces of fourth information of the first type. The training module is configured to train a third neural network and a fourth neural network by using a plurality of training samples in a training sample set, to separately obtain the second generator and a second discriminator, where the second generator is a trained third neural network, and the second discriminator is a trained fourth neural network. One piece of first information and one piece of second information of a second type that is obtained by inputting the first information into the first generator form one third training sample, one piece of fourth information and one piece of fifth information of the second type that is obtained by inputting the fourth information into the third generator form one fourth training sample, and a plurality of third training samples and a plurality of fourth training samples form one training sample set. The third neural network is a generator in a generative adversarial network, and the fourth neural network is a discriminator in the generative adversarial network. The second generator is separately configured to support generating second information of the second type based on the first information and generating fifth information of the second type based on the fourth information.

Optionally, each third training sample further includes one piece of information randomly selected from a latent space. Each fourth training sample further includes one piece of information randomly selected from the latent space.

With reference to the sixth aspect, in a possible design, the transceiver module is further configured to send a first update indication to the first device, where the first update indication indicates the first device to retrain the first generator; and the transceiver module is further configured to receive a retrained first generator sent by the first device.

With reference to the sixth aspect, in a possible design, the transceiver module is further configured to send a second update indication to a third device, where the second update indication indicates the third device to retrain the third generator; and the transceiver module is further configured to receive a retrained third generator sent by the third device.

In an implementation of any one of the foregoing aspects, the input supported by the first generator is information of the first type, and an output is information of the second type; the input supported by the second generator is information of the first type, and an output is information of the second type; and the input supported by the third generator is information of the first type, and an output is information of the second type. The first type is a scenario type, and the second type is a wireless channel characteristic type; the first type is a user profile and scenario type, and the second type is a wireless channel characteristic type; the first type is a wireless channel characteristic type, and the second type is a user profile type; the first type is a wireless channel characteristic and scenario type, and the second type is a user profile type; the first type is a wireless channel characteristic type, and the second type is a scenario type; or the first type is a wireless channel characteristic and user profile type, and the second type is a scenario type.

Optionally, the wireless channel characteristic type includes one or more of the following subtypes: a channel impulse response information subtype and a channel state information subtype.

Channel impulse response information is information obtained by directly measuring a wireless channel, and includes one or more of the following information: a channel matrix, a channel impulse response, a channel frequency response, a multipath delay spread of a channel, a multipath composition of a channel, an amplitude of a channel, a phase of a channel, a real part of a channel impulse response, an imaginary part of a channel impulse response, a channel power delay spectrum, and a channel angular power spectrum.

Channel state information indicates a wireless channel state, and includes one or more of the following information: channel state information (channel state information, CSI), a measurement report (measurement report, MR), channel power, interference power, noise power, a signal to interference plus noise ratio, a channel quality indicator (channel quality indicator, CQI), reference signal received power (reference signal received power, RSRP), and reference signal received quality (reference signal received quality, RSRQ).

Optionally, information of the scenario type is information related to a wireless communication scenario. The wireless communication scenario is a description of a current wireless communication environment and an object in the environment. The scenario type includes one or more of the following types: an environment description information subtype and an environment perception information subtype.

Environment description information describes a wireless transmission environment, and includes one or more of the following information: a two-dimensional map, a three-dimensional map, longitude and latitude coordinates, point cloud data, an environment layout diagram, a size of an object in the environment, a relative location of an object in the environment, a material of an object in the environment, a location of an access network device in the environment, and traffic volume information.

Environment perception information is environment information obtained from a sensor, and includes one or more of the following information: a photographed image obtained by an optical sensor, depth information obtained by a depth camera, distance information obtained by a distance sensor, acceleration information obtained by an acceleration sensor, and data obtained by another sensor. The sensor includes an optical sensor, an inductive (Inductive) sensor, a capacitive (Capacitive) sensor, a magnetic sensor, a temperature sensor, an acceleration sensor, and a pressure sensor.

Optionally, information of the user profile type is information related to a user behavior profile. The user behavior profile refers to a summary of parameter selection and behavior rules of a user equipment (the first device or the third device) in an objective communication condition. The user profile type includes one or more of the following subtypes: a user parameter subtype and a user behavior information subtype.

A user equipment parameter refers to a communication parameter of the user equipment, and includes one or more of the following information: a hardware parameter and a software parameter of the user equipment, such as an equipment antenna parameter, an equipment physical layer parameter, an equipment model, average transmit power, an equipment battery level, an international mobile subscriber identity, and an equipment identity.

User behavior information describes a behavior of a user in a communication process, and includes one or more of the following information: a geographical location, historical location distribution, a moving speed, a moving path of a user equipment, and a service feature of the user equipment, such as a service type, user experience, an average delay, an average packet loss rate, a volume of received and sent data, and a historical access cell.

In an implementation of any one of the foregoing aspects, the first information is an environmental image of an environment in which the first device is located and geographical location information of the first device, the third information is a channel impulse response of a measurement channel when the first device is located in the environment and geographical location, and the second information is a channel impulse response generated by inputting the first information into the first generator. Similarly, the fourth information is an environmental image of an environment in which the third device is located and geographical location information of the third device, the sixth information is a channel impulse response of a measurement channel when the third device is located in the environment and geographical location, and the fifth information is a channel impulse response generated by inputting the fourth information into the third generator.

It can be learned that, the first generator and the third generator in this solution learn a relationship between an environmental image and geographical location information with a channel, and may be used by a communication system to evaluate a channel state.

In an implementation of any one of the foregoing aspects, the first information is an environmental image of an environment in which the first device is located and a channel impulse response of a measurement channel when the first device is located in the environment and geographical location, the third information is geographical location information of the first device, and the second information is geographical location information of the first device generated by inputting the first information into the first generator. Similarly, the fourth information is an environmental image of an environment in which the third device is located and geographical location information of the third device, the sixth information is a channel impulse response of a measurement channel when the third device is located in the environment and geographical location, and the fifth information is geographical location information of the third device generated by inputting the fourth information into the third generator.

It can be learned that, the first generator and the third generator in this solution learn a relationship between an environmental image and a channel impulse response with geographical location information, and may be used for device positioning.

In an implementation of any one of the foregoing aspects, the first message further indicates the input supported by the first generator. Optionally, that the first message indicates the input supported by the first generator includes: the first message includes one or more of the first information, an identifier of the first information, the first type, and an identifier of the first type.

It can be learned that, in this solution, the first message indicates the input supported by the first generator, so that the second device can be fully notified of a use method of the first generator. In addition, the first message carries the identifier of the first information, the first type, and the identifier of the first type, so that overheads of air interface resources can be reduced.

In an implementation of any one of the foregoing aspects, the third message indicates the input supported by the third generator. Optionally, that the third message indicates the input supported by the third generator includes: the third message includes one or more of the fourth information, an identifier of the fourth information, the first type, and the identifier of the first type.

It can be learned that, in this solution, the third message indicates the input supported by the third generator, so that the second device can be fully notified of a use method of the third generator. In addition, the third message carries the identifier of the fourth information, the first type, and the identifier of the first type, so that overheads of air interface resources can be reduced.

In an implementation of any of the foregoing aspects, the second message further indicates the input supported by the second generator. Optionally, that the second message indicates the input supported by the second generator includes: the second message includes one or more of the fourth information, the identifier of the fourth information, the first type, and the identifier of the first type. In this solution, the second message indicates information (namely, the fourth information) in an untrained scenario of the first device, so that the first device can use the second generator to generate the information in the untrained scenario, thereby assisting the first device in communication in this scenario.

In an implementation of any one of the foregoing aspects, the fourth message further indicates the input supported by the second generator. Optionally, that the fourth message indicates the input supported by the second generator includes: the fourth message includes one or more of the first information, the identifier of the first information, the first type, and the identifier of the first type. In this solution, the fourth message indicates information (namely, the first information) in an untrained scenario of the third device, so that the third device can use the second generator to generate the information in the untrained scenario, thereby assisting the third device in communication in this scenario.

In an implementation of any one of the foregoing aspects, the first message further includes an identifier of the first generator, and the identifier of the first generator corresponds to the input supported by the first generator. The third message further includes an identifier of the third generator, and the identifier of the third generator corresponds to the input supported by the third generator.

It can be learned that, in this solution, an ID of a generator is in a one-to-one correspondence with an input supported by the generator, to implicitly indicate the input supported by the generator, so that the second device obtains, based on the ID of the generator, the corresponding input supported by the generator, thereby avoiding independent upload and delivery of the input supported by the generator, and reducing signaling overheads and air interface resources.

In an implementation of any one of the foregoing aspects, the first message indicates that all of the first generator includes a structure and a parameter of the first generator, and the parameter includes a weight value and an offset value. The third message indicates that all of the third generator includes a structure and a parameter of the third generator, and the parameter includes a weight value and an offset value.

In an implementation of any one of the foregoing aspects, the first message indicates that the part of the first generator includes a structure of the first generator and parameters of some layers, and the parameter includes a weight value and an offset value. The third message indicates that the part of the third generator includes a structure of the third generator and parameters of some layers, and the parameter includes a weight value and an offset value.

It can be learned that in this solution, when a generator is transmitted, all parameters (a structure, a weight value and an offset value) or some parameters (a structure, and weight values and offset values of some layers) of the generator are transmitted.

According to a seventh aspect, this application provides a neural network training method. The method includes: A first device obtains a plurality of pieces of first information of a first type and third information of a second type that corresponds to each piece of first information, where one piece of first information and the third information corresponding to the first information form one first training sample; and the first device trains a first neural network by using a plurality of first training samples, to obtain a first generator; or the first device trains a first neural network and a second neural network by using a plurality of first training samples, to separately obtain a first generator and a first discriminator, where the first neural network is a generator in a generative adversarial network, and the second neural network is a discriminator in the generative adversarial network. The first generator is a trained first neural network, and the first discriminator is a trained second neural network. The first generator is configured to generate second information of the second type based on the first information. Both the first information and the third information are information of different types collected in a real environment.

Optionally, each first training sample further includes one piece of information randomly selected from a latent space. The latent space refers to random noise.

Optionally, in the process that the first device trains a first neural network by using a plurality of first training samples: the first information in the first training sample and data randomly selected from the latent space are used as an input of the first neural network; an output of the first neural network and the third information in the first training sample are used as an input of a first loss function; and a gradient of the first neural network is calculated by using an output of the first loss function, and the first neural network is trained by using a gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value.

Optionally, in the process that the first device trains a first neural network and a second neural network by using a plurality of first training samples: the first information in the first training sample and data randomly selected from the latent space are used as an input of the first neural network; an output of the first neural network and the first information are inputted into the second neural network, to obtain a first output; the first information and the third information corresponding to the first information are inputted into the second neural network, to obtain a second output; the first output and a first label are inputted into a second loss function, to obtain an output of the second loss function; the second output and a second label are inputted into a third loss function, to obtain an output of the third loss function; the first output and a third label are inputted into a fourth loss function, to obtain an output of the fourth loss function; a gradient of the second neural network is calculated by using the output of the second loss function and the output of the third loss function, and the second neural network is trained by using a gradient descent algorithm; and a gradient of the first neural network is calculated by using the output of the fourth loss function, and the first neural network is trained by using the gradient descent algorithm.

It can be learned that, in this solution, a generation model is trained by using collected real information, so that the generation model can generate (or infer or predict) another part of information by using a part of information.

With reference to the seventh aspect, in a possible design, after the first device obtains the first generator, the method further includes: The first device sends a first message to a second device, where the first message indicates all or a part of the first generator, and an input supported by the first generator includes the first information of the first type.

With reference to the seventh aspect, in a possible design, after the first device sends the first message to the second device, the method further includes: The first device receives a second message from the second device. The second message indicates all or a part of a second generator. An input supported by the second generator includes the first information of the first type and fourth information of the first type. The fourth information is different from the first information, and the first generator is different from the second generator. The second generator is separately configured to support generating second information of the second type based on the first information and generating fifth information of the second type based on the fourth information.

According to an eighth aspect, this application provides a neural network training apparatus. The neural network training apparatus may be a first device or a chip in the first device. The neural network training apparatus includes: an obtaining module, configured to obtain a plurality of pieces of first information of a first type and third information of a second type that corresponds to each piece of first information, where one piece of first information and the third information corresponding to the first information form one first training sample; and a training module, configured to train a first neural network by using a plurality of first training samples, to obtain a first generator; or a training module, configured to train a first neural network and a second neural network by using a plurality of first training samples, to separately obtain a first generator and a first discriminator, where the first neural network is a generator in a generative adversarial network, and the second neural network is a discriminator in the generative adversarial network. The first generator is a trained first neural network, and the first discriminator is a trained second neural network. The first generator is configured to generate second information of the second type based on the first information. Both the first information and the third information are information of different types collected in a real environment.

Optionally, each first training sample further includes one piece of information randomly selected from a latent space. The latent space refers to random noise.

With reference to the eighth aspect, in a possible design, the neural network training apparatus further includes a transceiver module, configured to send a first message to a second device, where the first message indicates all or a part of the first generator, and an input supported by the first generator includes the first information of the first type.

With reference to the eighth aspect, in a possible design, the neural network training apparatus further includes a transceiver module, configured to receive a second message from the second device. The second message indicates all or a part of a second generator. An input supported by the second generator includes the first information of the first type and fourth information of the first type. The fourth information is different from the first information, and the first generator is different from the second generator. The second generator is separately configured to support generating second information of the second type based on the first information and generating fifth information of the second type based on the fourth information.

In an implementation of the seventh aspect or the eighth aspect, the first type is a scenario type, and the second type is a wireless channel characteristic type; the first type is a user profile and scenario type, and the second type is a wireless channel characteristic type; the first type is a wireless channel characteristic type, and the second type is a user profile type; the first type is a wireless channel characteristic and scenario type, and the second type is a user profile type; the first type is a wireless channel characteristic type, and the second type is a scenario type; or the first type is a wireless channel characteristic and user profile type, and the second type is a scenario type.

In an implementation of the seventh aspect or the eighth aspect, the first information is an environmental image of an environment in which the first device is located and geographical location information of the first device, the third information is a channel impulse response of a measurement channel when the first device is located in the environment and geographical location, and the second information is a channel impulse response generated by inputting the first information into the first generator.

In an implementation of the seventh aspect or the eighth aspect, the first information is an environmental image of an environment in which the first device is located and a channel impulse response of a measurement channel when the first device is located in the environment and geographical location, the third information is geographical location information of the first device, and the second information is geographical location information of the first device generated by inputting the first information into the first generator.

In an implementation of the seventh aspect or the eighth aspect, the first message further indicates the input supported by the first generator. Optionally, that the first message indicates the input supported by the first generator includes: the first message includes one or more of the first information, an identifier of the first information, the first type, and an identifier of the first type.

In an implementation of the seventh aspect or the eighth aspect, the second message further indicates the input supported by the second generator. Optionally, that the second message indicates the input supported by the second generator includes: the second message includes one or more of the fourth information, an identifier of the fourth information, the first type, and the identifier of the first type.

In an implementation of the seventh aspect or the eighth aspect, the first message indicates that all of the first generator includes a structure and a parameter of the first generator, and the parameter includes a weight value and an offset value.

In an implementation of the seventh aspect or the eighth aspect, the first message indicates that the part of the first generator includes a structure of the first generator and parameters of some layers, and the parameter includes a weight value and an offset value.

In an implementation of the seventh aspect or the eighth aspect, the first message further includes an identifier of the first generator, and the identifier of the first generator corresponds to the input supported by the first generator.

According to a ninth aspect, this application provides another neural network training method. The method includes: A second device obtains a plurality of pieces of first information of a first type and a plurality of pieces of fourth information of the first type, where one piece of first information and one piece of second information of a second type that is obtained by inputting the first information into a first generator form one third training sample, one piece of fourth information and one piece of fifth information of the second type that is obtained by inputting the fourth information into a third generator form one fourth training sample, and a plurality of third training samples and a plurality of fourth training samples form one training sample set; and the second device trains a third neural network by using a plurality of training samples in the training sample set, to obtain a second generator, where the second generator is a trained third neural network; or the second device trains a third neural network and a fourth neural network by using a plurality of training samples in the training sample set, to separately obtain a second generator and a second discriminator, where the third neural network is a generator in a generative adversarial network, and the fourth neural network is a discriminator in the generative adversarial network. The second generator is a trained third neural network, and the second discriminator is a trained fourth neural network. The second generator is separately configured to support generating second information of the second type based on the first information and generating fifth information of the second type based on the fourth information. It should be understood that the first information is different from the second information, and the second information is also different from the fifth information. The first generator is from a first device, and the third generator is from a third device.

It can be learned that, in this solution, the third neural network is trained by using information collected from different devices, and the collected input and output of each generator may be mapped into a unified model. The trained second generator has both a distribution simulation capability for the second information and a distribution simulation capability for the fifth information.

With reference to the ninth aspect, before the second device obtains the plurality of pieces of first information of the first type and the plurality of pieces of fourth information of the first type, the method further includes: The second device receives a first message and a third message. The first message indicates all or a part of the first generator, and the third message indicates all or a part of the third generator. An input supported by the first generator includes the first information of the first type, and an input supported by the third generator includes the fourth information of the first type. The first generator and the third generator are configured to train a neural network corresponding to the second generator.

With reference to the ninth aspect, after the second device obtains the second generator, the method further includes: The second device sends a second message to the first device, and sends a fourth message to the third device. The second message or the fourth message indicates all or a part of the second generator. An input supported by the second generator includes the first information of the first type and the fourth information of the first type. The fourth information is different from the first information, and the first generator, the third generator, and the second generator are different from each other.

According to a tenth aspect, this application provides a neural network training apparatus. The neural network training apparatus may be a second device or a chip in the second device. The neural network training apparatus includes: an obtaining module, configured to obtain a plurality of pieces of first information of a first type and a plurality of pieces of fourth information of the first type, where one piece of first information and one piece of second information of a second type that is obtained by inputting the first information into a first generator form one third training sample, one piece of fourth information and one piece of fifth information of the second type that is obtained by inputting the fourth information into a third generator form one fourth training sample, and a plurality of third training samples and a plurality of fourth training samples form one training sample set; and a training module, configured to train a third neural network by using a plurality of training samples in the training sample set, to obtain a second generator, where the second generator is a trained third neural network; or a training module, configured to train a third neural network and a fourth neural network by using a plurality of training samples in the training sample set, to separately obtain a second generator and a second discriminator, where the third neural network is a generator in a generative adversarial network, and the fourth neural network is a discriminator in the generative adversarial network. The second generator is a trained third neural network, and the second discriminator is a trained fourth neural network. The second generator is separately configured to support generating second information of the second type based on the first information and generating fifth information of the second type based on the fourth information. It should be understood that the first information is different from the second information, and the second information is also different from the fifth information. The first generator is from a first device, and the third generator is from a third device.

With reference to the tenth aspect, the neural network training apparatus further includes a transceiver module, configured to receive a first message and a third message. The first message indicates all or a part of the first generator, and the third message indicates all or a part of the third generator. An input supported by the first generator includes the first information of the first type, and an input supported by the third generator includes the fourth information of the first type. The first generator and the third generator are configured to train a neural network corresponding to the second generator.

With reference to the tenth aspect, the neural network training apparatus further includes a transceiver module, configured to send a second message to the first device, and send a fourth message to the third device. The second message or the fourth message indicates all or a part of the second generator. An input supported by the second generator includes the first information of the first type and the fourth information of the first type. The fourth information is different from the first information, and the first generator, the third generator, and the second generator are different from each other.

In an implementation of the ninth aspect or the tenth aspect, the first type is a scenario type, and the second type is a wireless channel characteristic type; the first type is a user profile and scenario type, and the second type is a wireless channel characteristic type; the first type is a wireless channel characteristic type, and the second type is a user profile type; the first type is a wireless channel characteristic and scenario type, and the second type is a user profile type; the first type is a wireless channel characteristic type, and the second type is a scenario type; or the first type is a wireless channel characteristic and user profile type, and the second type is a scenario type.

In an implementation of the ninth aspect or the tenth aspect, the first information is an environmental image of an environment in which the first device is located and geographical location information of the first device, the third information is a channel impulse response of a measurement channel when the first device is located in the environment and geographical location, and the second information is a channel impulse response generated by inputting the first information into the first generator. Similarly, the fourth information is an environmental image of an environment in which the third device is located and geographical location information of the third device, the sixth information is a channel impulse response of a measurement channel when the third device is located in the environment and geographical location, and the fifth information is a channel impulse response generated by inputting the fourth information into the third generator.

In an implementation of the ninth aspect or the tenth aspect, the first information is an environmental image of an environment in which the first device is located and a channel impulse response of a measurement channel when the first device is located in the environment and geographical location, the third information is geographical location information of the first device, and the second information is geographical location information of the first device generated by inputting the first information into the first generator. Similarly, the fourth information is an environmental image of an environment in which the third device is located and geographical location information of the third device, the sixth information is a channel impulse response of a measurement channel when the third device is located in the environment and geographical location, and the fifth information is geographical location information of the third device generated by inputting the fourth information into the third generator.

In an implementation of the ninth aspect or the tenth aspect, the first message further indicates the input supported by the first generator. Optionally, that the first message indicates the input supported by the first generator includes: the first message includes one or more of the first information, an identifier of the first information, the first type, and an identifier of the first type.

In an implementation of the ninth aspect or the tenth aspect, the third message further indicates the input supported by the third generator. Optionally, that the third message indicates the input supported by the third generator includes: the third message includes one or more of the fourth information, an identifier of the fourth information, the first type, and the identifier of the first type.

In an implementation of the ninth aspect or the tenth aspect, the second message further indicates the input supported by the second generator. Optionally, that the second message indicates the input supported by the second generator includes: the second message includes one or more of the fourth information, the identifier of the fourth information, the first type, and the identifier of the first type.

In an implementation of the ninth aspect or the tenth aspect, the fourth message includes one or more of the first information, the identifier of the first information, the first type, and the identifier of the first type.

In an implementation of the ninth aspect or the tenth aspect, the first message indicates that all of the first generator includes a structure and a parameter of the first generator, and the parameter includes a weight value and an offset value. The third message indicates that all of the third generator includes a structure and a parameter of the third generator, and the parameter includes a weight value and an offset value.

In an implementation of the ninth aspect or the tenth aspect, the first message indicates that the part of the first generator includes a structure of the first generator and parameters of some layers, and the parameter includes a weight value and an offset value. The third message indicates that the part of the third generator includes a structure of the third generator and parameters of some layers, and the parameter includes a weight value and an offset value.

In an implementation of the ninth aspect or the tenth aspect, the first message further includes an identifier of the first generator, and the identifier of the first generator corresponds to the input supported by the first generator. The third message further includes an identifier of the third generator, and the identifier of the third generator corresponds to the input supported by the third generator.

According to an eleventh aspect, this application provides a communication apparatus. The communication apparatus may include a transceiver and a memory, and optionally include a processor. The memory is configured to store a computer program. The transceiver is configured to receive and send various signals. The computer program includes program instructions. When the processor runs the program instructions, the communication apparatus is caused to perform the information generation method described in the first aspect, the second aspect, the third aspect, any possible implementation of the first aspect, any possible implementation of the second aspect, or any possible implementation of the third aspect. The transceiver may be a radio frequency module, a combination of a radio frequency module and an antenna, or an input/output interface of a chip or a circuit in the communication apparatus.

According to a twelfth aspect, this application provides a communication apparatus. The communication apparatus may include a transceiver and a memory, and optionally include a processor. The memory is configured to store a computer program. The transceiver is configured to receive and send various signals. The computer program includes program instructions. When the processor runs the program instructions, the communication apparatus is caused to perform the neural network training method described in the seventh aspect, the ninth aspect, the any possible implementation of the seventh aspect, or any possible implementation of the ninth aspect. The transceiver may be a radio frequency module, a combination of a radio frequency module and an antenna, or an input/output interface of a chip or a circuit in the communication apparatus.

According to a thirteenth aspect, this application provides a readable storage medium. The readable storage medium stores program instructions. When the program instructions are run on a computer, the computer is caused to perform the information generation method described in the first aspect, the second aspect, the third aspect, any possible implementation of the first aspect, any possible implementation of the second aspect, or any possible implementation of the third aspect.

According to a fourteenth aspect, this application provides a readable storage medium. The readable storage medium stores program instructions. When the program instructions are run on a computer, the computer is caused to perform the neural network training method described in the seventh aspect, the ninth aspect, any possible implementation of the seventh aspect, or any possible implementation of the ninth aspect.

According to a fifteenth aspect, this application provides a program product including program instructions. When the program product runs, the information generation method described in the first aspect, the second aspect, the third aspect, any possible implementation of the first aspect, any possible implementation of the second aspect, or any possible implementation of the third aspect is performed.

According to a sixteenth aspect, this application provides a program product including program instructions. When the program product runs, a computer is caused to perform the neural network training method described in the seventh aspect, the ninth aspect, any possible implementation of the seventh aspect, or any possible implementation of the ninth aspect.

According to a seventeenth aspect, this application provides an apparatus. The apparatus may be implemented in a form of a chip, or may be implemented in a form of a device. The apparatus includes a processor. The processor is configured to read and execute a program stored in a memory, to perform the information generation method provided in one or more of the first aspect to the third aspect, or in one or more of any possible implementation of the first aspect to the third aspect. Alternatively, the processor is configured to read and execute a program stored in a memory, to perform the neural network training method provided in one or more of the seventh aspect and the ninth aspect, or in one or more of any possible implementation of the seventh aspect and the ninth aspect. Optionally, the apparatus further includes a memory, and the memory is connected to the processor by using a circuit. Further, optionally, the apparatus further includes a communication interface, and the processor is connected to the communication interface. The communication interface is configured to receive data and/or information that need/needs to be processed. The processor obtains the data and/or the information from the communication interface, processes the data and/or the information, and outputs a processing result through the communication interface. The communication interface may be an input/output interface.

Optionally, the processor and the memory may be physically independent units, or the memory may be integrated with the processor.

According to an eighteenth aspect, this application provides a communication system. The communication system includes one or more of the information generation apparatus described in the fourth aspect, the information generation apparatus described in the fifth aspect, the information generation apparatus described in the sixth aspect, the neural network training apparatus described in the eighth aspect, or the neural network training apparatus described in the tenth aspect.

By implementing embodiments of this application, information collected in a real scenario may be fully used to train a generation model, so that the generation model can generate (or infer or predict) another part of information by using a part of information, thereby implementing communication-assisted detection and detection-assisted communication, and causing a communication network to develop towards a more intelligent and adaptive direction.

## BRIEF DESCRIPTION OF DRAWINGS

To describe the technical solutions in embodiments of this application more clearly, the following briefly describes the accompanying drawings required for describing embodiments.

FIG. 1a is a simplified schematic diagram of a wireless communication system according to an embodiment of this application;

FIG. 1b is another simplified schematic diagram of a wireless communication system according to an embodiment of this application;

FIG. 2 is a schematic diagram of a neural network including three layers;

FIG. 3 is a schematic diagram of a neuron calculating an output based on inputs;

FIG. 4 is a schematic diagram of a back propagation algorithm;

FIG. 5 is a schematic flowchart of an information generation method according to an embodiment of this application;

FIG. 6a is a schematic diagram of a scenario information expression according to an embodiment of this application;

FIG. 6b is another schematic diagram of a scenario information expression according to an embodiment of this application;

FIG. 6c is still another schematic diagram of a scenario information expression according to an embodiment of this application;

FIG. 7 is a self-learning block diagram of a generation unit and a discrimination unit according to an embodiment of this application;

FIG. 8 is a schematic flowchart of a neural network training method according to an embodiment of this application;

FIG. 9 is a schematic flowchart of another neural network training method according to an embodiment of this application;

FIG. 10 is a training block diagram of a third neural network according to an embodiment of this application;

FIG. 11A and FIG. 11B are schematic diagrams of an input and an output of a neural network in different devices according to an embodiment of this application;

FIG. 12 is a schematic diagram of a structure of an information generation apparatus according to an embodiment of this application;

FIG. 13 is a schematic diagram of another structure of an information generation apparatus according to an embodiment of this application; and

FIG. 14 is a schematic diagram of a structure of a communication apparatus according to an embodiment of this application.

## DESCRIPTION OF EMBODIMENTS

The following describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that provide basically same functions or purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

To facilitate understanding of an information generation method provided in embodiments of this application, the following describes a system architecture of the information generation method provided in embodiments of this application. It may be understood that the system architecture described in embodiments of this application is intended to describe the technical solutions in embodiments of this application more clearly, and do not constitute any limitation on the technical solutions provided in embodiments of this application.

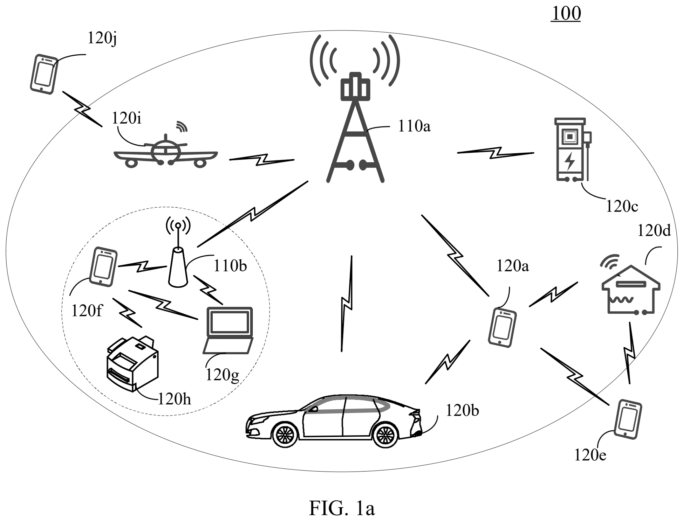

The information generation method provided in embodiments of this application may be applied to a wireless communication system such as 5G, 6G, or satellite communication. Refer to FIG. 1a. FIG. 1a is a simplified schematic diagram of a wireless communication system according to an embodiment of this application. As shown in FIG. 1a, the wireless communication system includes a radio access network 100. The radio access network 100 may be a next generation (for example, 6G or a higher version) radio access network, or a conventional (for example, 5G, 4G, 3G, or 2G) radio access network. One or more communication devices (120a to 120j, which are collectively referred to as 120) may be interconnected or connected to one or more network devices (110a and 110b, which are collectively referred to as 110) in the radio access network 100. Optionally, FIG. 1a is only a schematic diagram. The wireless communication system may further include another device, for example, may further include a core network device, a wireless relay device, and/or a wireless backhaul device, which is not shown in FIG. 1a.

Optionally, in an actual application, the wireless communication system may include a plurality of network devices (also referred to as access network devices), or may include a plurality of communication devices. One network device may simultaneously serve one or more communication devices. One communication device may also simultaneously access one or more network devices. Quantities of communication devices and network devices included in the wireless communication system are not limited in this embodiment of this application.

The network device may be an entity configured to transmit or receive a signal on a network side, for example, a base station. The network device may be an access device that accesses the wireless communication system by a communication device in a wireless manner. For example, the network device may be a base station. The base station may cover following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission and reception point (transmission and reception point, TRP), a transmission point (transmitting point, TP), a master eNB MeNB, a secondary eNB SeNB, a multi-standard radio (MSR) node, a home base station, a network controller, an access node, a wireless node, an access point (AP), a transmission node, a transceiver node, a baseband unit (BBU), a remote radio unit (RRU), an active antenna unit (AAU), a remote radio head (RRH), a central unit (CU), a distributed unit (DU), or a positioning node. The base station may be a macro base station, a micro base station, a relay node, a donor node, or the like, or a combination thereof. The base station may alternatively be a communication module, a modem, or a chip that is disposed in the foregoing device or apparatus. Alternatively, the base station may be a mobile switching center and a device that takes on a base station function in device-to-device (device-to-device, D2D), vehicle-to-everything (vehicle-to-everything, V2X), or machine-to-machine (machine-to-machine, M2M) communication, a network side device in a 6G network, or a device that takes on a base station function in a future communication system. The base station may support networks of a same or different access technologies. A specific technology and a specific device form used by the network device are not limited in this embodiment of this application.

The base station (BS) may be fixed or mobile. For example, the base stations 110a and 110b are stationary and are responsible for wireless transmission and reception in one or more cells from the communication device 120. A helicopter or uncrewed aerial vehicle 120i shown in FIG. 1a may be configured to serve as a mobile base station, and one or more cells may move according to a location of the mobile base station 120i. In other examples, the helicopter or uncrewed aerial vehicle (120i) may be configured to serve as a communication device communicating with the base station 110a.

The communication device may be an entity, such as a mobile phone, configured to receive or transmit a signal on a user side. The communication device may be configured to connect a person, an object, and a machine. The communication device 120 may be widely applied to various scenarios, for example, cellular communication, device-to-device D2D, vehicle-to-everything V2X, peer-to-peer P2P, machine-to-machine M2M, machine type communication (MTC), Internet of Things IoT, virtual reality (VR), augmented reality (AR), industrial control, autonomous driving, remote medical, a smart grid, a smart furniture, smart office, smart wearable, smart transportation, a smart city, an uncrewed aerial vehicle, a robot, remote sensing, passive sensing, positioning, navigation and tracking, and autonomous delivery and mobility. The communication device 120 may be a 3GPP-standard user equipment (UE), a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, a flight, a ship, a remote control device, a smart home device, or an industrial device. The communication device 120 may be a wireless device in the foregoing various scenarios or an apparatus disposed in a wireless device, for example, a communication module, a modem, or a chip in the foregoing device. The communication device may also be referred to as a terminal, a terminal device, a user equipment (user equipment, UE), a mobile station (mobile station, MS), or a mobile terminal (mobile terminal, MT). The communication device may alternatively be a communication device in a future wireless communication system. The communication device may be used in a dedicated network device or a general-purpose device. A specific technology and a specific device form used by the communication device are not limited in this embodiment of this application.

Optionally, the UE may be configured to serve as a base station. For example, the UE may serve as a scheduling entity that provides sidelink signals between UEs in V2X, D2D, or P2P. As shown in FIG. 1a, a cellular phone 120a and a car 120b communicate with each other by using sidelink signals. The cellular phone 120a communicates with a smart home device 120d without relaying a communication signal by using the base station 110a.

Optionally, the wireless communication system usually includes cells. Each cell includes a base station (base station, BS), and the base station provides a communication service for a plurality of mobile stations (mobile stations, MSs). The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack.

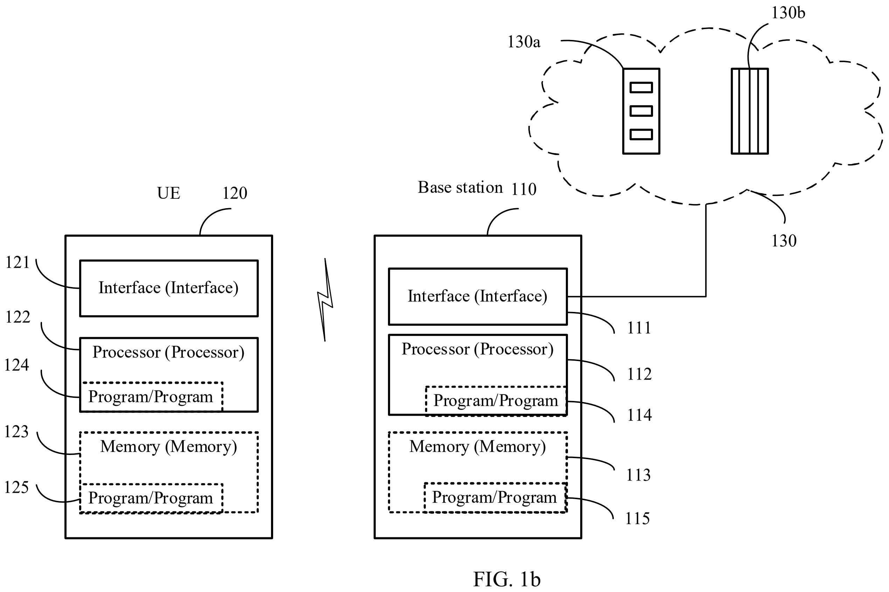

Refer to FIG. 1b. FIG. 1b is another simplified schematic diagram of a wireless communication system according to an embodiment of this application. For the sake of simplicity, FIG. 1b shows only a base station 110, a UE 120, and a network 130. The base station 110 includes an interface 111 and a processor 112. The processor 112 may optionally store a program 114. Optionally, the base station 110 may include a memory 113. The memory 113 may optionally store a program 115. The UE 120 includes an interface 121 and a processor 122. The processor 122 may optionally store a program 124. The UE 120 may optionally include a memory 123. Optionally, the memory 123 may store a program 125. These components work together to provide various functions described in the present invention. For example, the processor 112 and the interface 121 work together to provide a wireless connection between the base station 110 and the UE 120. The processor 122 and the interface 121 work together to implement downlink transmission and/or uplink transmission of the UE 120.

The network 130 may include one or more network nodes 130a and 130b to provide a core network function. The network nodes 130a and 130b may be next generation (for example, 6G or a higher version) core network nodes, or conventional (for example, 5G, 4G, 3G, or 2G) core network nodes. For example, the network nodes 130a and 130b may be access management functions (AMFs), or mobility management entities (MMEs). The network 130 may further include one or more network nodes in a public switched telephone network (PSTN), a packet data network, an optical network, or an Internet Protocol (IP) network. The network 130 may be a wide area network (WAN), a local area network (LAN), a wireless local area network (WLAN), a wired network, a wireless network, a metropolitan area network, and another network, so that communication can be performed between the UE 120 and/or the base station 110.

A processor (for example, the processor 112 and/or the processor 122) may include one or more processors and be implemented as a combination of computing devices. The processor (for example, the memory 112 and/or the memory 122) may separately include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit, or other proper hardware, firmware, and/or a combination of hardware and software, configured to perform various functions described in this application. The processor (for example, the memory 112 and/or the memory 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the base station 110 and/or the UE 120 to execute a software program and process data in the software program.

The interface (for example, the interface 111 and/or 121) may include an interface for implementing communication with one or more computer devices (for example, UEs, BSs, and/or network nodes). In some embodiments, the interface may include a wire for coupling a wired connection, or a pin for coupling a wireless transceiver, or a chip and/or a pin for a wireless connection. In some embodiments, the interface may include a transmitter, a receiver, a transceiver, and/or an antenna. The interface may be configured to use any available protocol (such as a 3GPP standard).

The program in this application is used for representing software in a broad sense. A non-limiting example of the software is program code, a program, a subprogram, an instruction, an instruction set, code, a code segment, a software module, an application program, or a software application program. The program may run in a processor and/or a computer, so that the base station 110 and/or the UE 120 perform various functions and/or processes described in this

application.

The memory (for example, the memory 113 and/or the memory 123) may store data manipulated by the processors 112 and 122 when executing the software. The memories 113 and 123 may be implemented by using any storage technology. For example, the memory may be any available storage medium that can be accessed by a processor and/or a computer. A non-limiting example of the storage medium includes a RAM, a ROM, an EEPROM, a CD-ROM, a removable medium, an optical disc memory, a magnetic disk storage medium, a magnetic storage device, a flash memory, a register, a state memory, a remote mounted memory, a local or remote storage component, or any other medium that can carry or store software, data, or information and accessible by a processor/computer.

The memory (for example, the memory 113 and/or the memory 123) and the processor (for example, the processor 112 and/or the processor 122) may be separately disposed or integrated. The memory may be configured to connect to the processor, so that the processor can read information from the memory, and store and/or write information into the memory. The memory 113 may be integrated into the processor 112. The memory 123 may be integrated into the processor 122. The processor (for example, the processor 113 and/or the processor 123) and the memory (for example, the memory 112 and/or the memory 122) may be disposed in an integrated circuit (for example, the integrated circuit may be disposed in a UE, a base station, or another network node).

The foregoing content briefly describes the system architecture in embodiments of this application. To better understand the technical solutions in embodiments of this application, the following briefly describes a neural network (neural network) and a generative adversarial network (generative adversarial network, GAN) including two neural networks.

1. Neural network

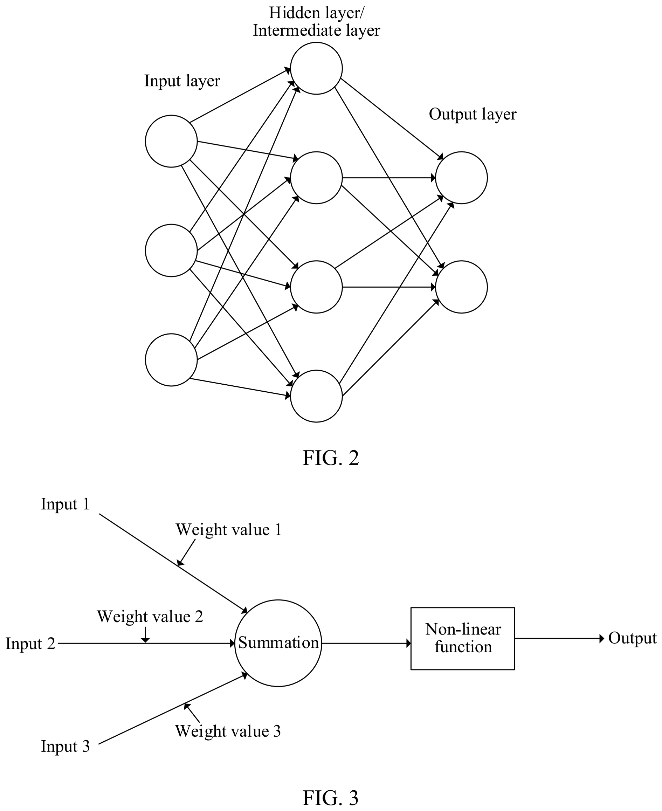

A neural network is a neural network that simulates a human brain to implement machine learning technologies similar to artificial intelligence. The neural network includes at least three layers: an input layer, an intermediate layer (also referred to as a hidden layer), and an output layer. A deeper neural network may include more hidden layers between the input layer and the output layer. A simplest neural network is used as an example to describe an internal structure and an implementation of the neural network. Refer to FIG. 2. FIG. 2 is a schematic diagram of a neural network including three layers. As shown in FIG. 2, the neural network includes three layers: an input layer, an intermediate layer, and an output layer. The input layer includes three neurons, the hidden layer includes four neurons, and the output layer includes two neurons. Each connection line between neurons corresponds to a weight (a value is referred to as a weight value), and the weight value may be updated through training. Each neuron may further correspond to an offset value, and the offset value may be updated through training. Updating the neural network refers to updating these weight values and offset values. After the structure of the neural network is known, that is, how an output of a previous neuron is inputted into a subsequent neuron, and the weight values and the offset values are known, all information of the neural network is known.

It can be learned from FIG. 2 that each neuron may have a plurality of input connection lines, and each neuron calculates an output based on an input. Refer to FIG. 3. FIG. 3 is a schematic diagram of a neuron calculating an output based on inputs. As shown in FIG. 3, one neuron includes three inputs, one output, and two computing functions, and an output calculation formula may be represented as follows:

Output = Non-linear function (Input 1*Weight value 1 + Input 2*Weight value 2 + Input 3*Weight value 3 + Offset value).........(1-1)

The non-linear function may be a softmax function, a tanh function (also referred to as a tangent trigonometric function), or a sigmoid function. It should be understood that the softmax function is a normalized exponential function, and can "compress" a K-dimensional vector z including any real number into another K-dimensional real vector $\sigma(z)$, so that a range of each element is between (0,1), and a sum of all elements is 1. A function expression of the softmax function is shown in the following formula (1-2). The tanh function is also referred to as a tangent trigonometric function, and a function expression of the tanh function is shown in the following formula (1-3). The sigmoid function is also referred to as an S-shaped growth curve. The sigmoid function has a single-increment characteristic and a single-increment characteristic of an inverse function, and is usually used as an activation function of a neural network. The sigmoid function may map a real number to an interval of (0,1), and a function expression of the sigmoid function is shown in the following formulas (1-4).

$$S_i = \frac{e^i}{\sum e^j} \quad \text{............................................................} (1\text{-}2)$$

$$f(x) = \tanh(x) = \frac{e^x - e^{-x}}{e^x + e^{-x}} \quad\text{.................................................................} \quad (1\text{-}3)$$

$$f(x) = \frac{1}{1 + e^{-x}} \quad\text{..............................................................................}\quad (1\text{-}4)$$

Each neuron may have a plurality of output connection lines, and an output of one neuron is used as an input of a next neuron. It should be understood that the input layer has only an output connection line, each neuron at the input layer is a value inputted into the neural network, and a value of each neuron is directly used as an input of all output connection lines. The output layer has only an input connection line, and a calculation manner of the foregoing formula (1-1) is used. Optionally, the output layer may not include calculation of a non-linear function, that is, the foregoing formula (1-1) may be converted into: Output = Input 1*Weight value 1 + Input 2*Weight value 2 + Input 3*Weight value 3 + Offset value.

A neural network training method may be as follows: A loss function is defined, which is usually used for calculating a difference between an output of a neural network and target data. A smaller loss function indicates that the output of the neural network better fits the target data. An example in which a mean square error is used as the loss function is as follows:

$$\text{loss} = (y_{out} - y_{target})^2 \quad\text{................................................................................}\quad (1\text{-}5)$$

$y_{out}$ represents the output of the neural network, $y_{target}$ represents the target data, and a minimum loss function (that is, loss in the formula (1-5)) is to minimize a difference between values of $y_{out}$ and $y_{target}$. It should be understood that, in addition to the mean square error loss function, the loss function may alternatively be a cross entropy loss function or an absolute value loss function. A type of the loss function is not limited in this application.

Optionally, a derivative in mathematics is usually used to minimize the loss function. However, because there are more than one parameter of the loss function, a large amount of operation is performed to calculate that the derivative is equal to 0 after the derivative is calculated. Therefore, a gradient descent algorithm is usually used. The gradient descent algorithm calculates current gradients of the weight value and the offset value each time, and then causes the weight value and the offset value to forward in a reverse direction of the gradients for a specific distance until the gradients are close to zero. Generally, when the gradients are close to zero, all the weight values and offset values are exactly in a state that the loss function is in a lowest value.

In a neural network model, costs for each time calculating a gradient is very high due to a complex structure. Therefore, a back propagation algorithm is also required. The back propagation algorithm uses the structure of the neural network to perform calculation. The algorithm does not calculate gradients of all weight values at a time. Instead, the algorithm propagates from the output layer to the input layer. First, a gradient of the output layer is calculated, a gradient of a connection weight value between the output layer and the intermediate layer is calculated, a gradient of the intermediate layer is calculated, then a gradient of a connection weight value between the intermediate layer and the input layer is calculated, and finally a gradient of the input layer is calculated. After the calculation is complete, the required gradients of weight values of all the connection lines are obtained.

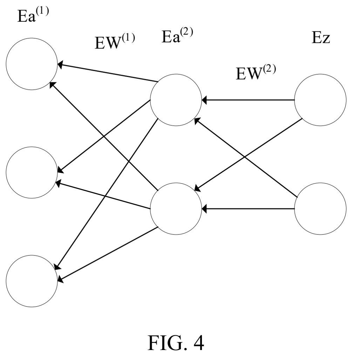

Refer to FIG. 4. FIG. 4 is a schematic diagram of a back propagation algorithm. As shown in FIG. 4, gradient calculation is performed from back to front, and back propagation is performed layer by layer. A prefix E represents a relative derivative. After obtaining the gradients of weight values of all the connection lines, the weight values may be updated. A manner of calculating an updated weight value is shown in the following formulas (1-6):

$$W_{new} = W_{old} - lr*E \quad\text{..............................................................................}\quad (1\text{-}6)$$

$W_{new}$ represents a new weight value, $W_{old}$ represents an old weight value (or an original weight value), E represents a gradient corresponding to the weight value, and lr represents a learning rate (learning rate). lr is used for controlling a speed at which the weight value moves in the reverse direction of the gradient. Generally, a value of lr is 0.1, 0.01, 0.001, 0.0001, 0.00001, or the like. lr may be preset when the neural network is constructed.

It should be understood that a method for updating the offset value is similar to a method for updating the weight value, and details are not described herein again.

2. Generative adversarial network

A generative neural network (generative neural network) is a special type of deep learning neural network. Different from classification tasks and prediction tasks that are mainly performed by a common neural network, the generative neural network may learn a probability distribution function that a group of training samples comply with, so that the generative neural network may be used for modeling random variables, and may also be used for establishing condition probability distribution between variables. Common generative neural networks include a generative adversarial network (generative adversarial network, GAN) and a variational autoencoder (variational autoencoder, VAE). This application focuses on the generative adversarial network.

The generative adversarial network (generative adversarial network, GAN) is an unsupervised learning method, and causes two neural networks to compete with each other for learning. The generative adversarial network may be divided into two parts by function: a generative network (referred to as a generator) and a discriminative network (referred to as a discriminator). An input of the generative network is a sample randomly selected from a latent space (latent space), and an output of the generative network needs to simulate a real sample in a training set as much as possible. The latent space (latent space) is random noise, such as Gaussian distribution random vectors. An input of the discriminative network is a real sample or the output of the generative network, and an objective is to distinguish the output of the generative network from the real sample as much as possible, while the generative network needs to deceive the discriminative network as much as possible. In other words, the generative network processes the inputted random noise, and outputs a generated sample. The discriminative network compares the generated sample outputted by the generative network with a training sample in the training set, determines whether the generated sample and the training sample comply with same probability distribution, and outputs a determination result of real or fake. The two networks compete with each other (the generative network intends to generate a sample that complies with distribution of the training set as much as possible, and the discriminative network intends to distinguish a difference between the generated sample and the training set as much as possible). The generative network and the discriminative network are jointly trained, and parameters are continuously adjusted to achieve a balanced state between the two networks. A final objective is that the discriminative network cannot determine whether the output of the generative network is real, that is, the generated sample outputted by the generative network completely complies with distribution of training samples, and the discriminative network considers that the generated sample and the training set comply with same distribution.

The generative adversarial network (GAN) is usually used for generating images, and includes a generator (generator) and a discriminator (discriminator). An input of the generator is a latent space, that is, random noise; and an output of the generator is a fake image. A real image is obtained from a real data set (real data set), and the fake image and the real image are inputted into the discriminator respectively, so that the discriminator distinguishes between real (real) and fake (fake). The generator and the discriminator compete with each other for training. In an ideal case, when the training ends, the generator may generate a fake image that is extremely similar to a real image. In this case, the discriminator cannot distinguish the authenticity of an inputted image, that is, probabilities that the discriminator determines the image as real and fake are both 0.5.

It should be understood that the generator is a generative network, and the generator and the generative network may be used interchangeably; and the discriminator is a discriminative network, and the discriminator and the discriminative network may also be used interchangeably.

As a combination of communication technologies and machine learning increases gradually, it is considered to implement channel modeling by using the generative adversarial network. Specifically, a method for performing channel modeling by using a GAN is similar to a process of generating an image by using a GAN. The latent space is inputted into the generator to output a fake channel, a real channel is obtained from channel data set that is actually measured, and the fake channel and the real channel are inputted into the discriminator, so that the discriminator determines the authenticity of the inputted channels. Finally, the generator may generate a fake channel that is extremely similar to the real channel. In this way, the generator is equivalent to implementing channel modeling, that is, a channel may be generated for any inputted latent space random value.

However, the foregoing method for performing channel modeling by using a GAN is merely simulation of a specific real channel data set, which is equivalent to mapping the entire latent space to the specific channel data distribution. Such a generator can only simulate the specific channel data. In other words, the generator obtained in this manner can only be used in this specific scenario. However, actual channel data is diversified, and the generator that can only generate specific channel data has a limited function, and cannot be generalized to another communication environment. For example, a generator that is trained by using rich multipath channels in an indoor environment cannot be used in an outdoor environment. It should be understood that, if a specific generator is trained for each specific scenario, the generator corresponding to each specific scenario needs to be stored, which requires a large storage space. This is not conducive to sharing of the generator corresponding to each specific scenario between devices (because a large amount of air interface resources are required), and has high implementation complexity.

In addition, the foregoing method for performing channel modeling by using a GAN further lacks a design of a signaling procedure of online training and using a generator in a network device. In addition, the foregoing method for performing channel modeling by using a GAN is only a migration of work of the GAN in an image field, and does not combine a feature of wireless communication. In the foregoing method for performing channel modeling by using a GAN, a communication device only focuses on itself and a current state, uses only experience information generated by itself, and makes no contribution to another communication device.

Therefore, an embodiment of this application provides an information generation method. Information collected by a communication device is fully used to train a generation model, so that the generation model can generate (or infer or predict) another part of information by using a part of information, thereby implementing communication-assisted detection and detection-assisted communication, and causing a communication network to develop towards a more intelligent and adaptive direction. In addition, in this embodiment of this application, considering that information collected by a single communication device is unvaried, to quickly improve a generalization capability of the generation model, generation models of a plurality of communication devices are summarized and trained into a multi-scenario generation model. In a communication network, the generation model is gradually and automatically evolved into an all-scenario generation model through continuous summarization and training. In other words, in this embodiment of this application, information in different scenarios may be generated by using the all-scenario generation model obtained through training, and there is no need to store a corresponding generator for each specific scenario. Therefore, a small storage space is required, so that the all-scenario generation model is shared between devices (because a small amount of air interface resources are required), and has low implementation complexity.

The following describes in detail the technical solutions provided in this application with reference to more accompanying drawings.

The technical solutions provided in this application are described in detail by using three embodiments. Embodiment 1 describes the information generation method in detail. Embodiment 2 describes a method for training a first neural network in a first device. Embodiment 3 describes a method for training a third neural network in a second device. It may be understood that the technical solutions described in Embodiment 1 to Embodiment 3 of this application may be randomly combined to form a new embodiment, and parts that have a same or similar concept or solution may be mutually referenced or combined. The following separately describes the embodiments in detail.

It should be understood that the first device and a third device in this application may be different communication devices, for example, different UEs, and the first device and the third device are located in different scenarios. For example, the first device is located in an indoor environment (an office, a residence, an indoor shopping mall, or the like), and the third device is located in an outdoor environment (a street or the like). The second device in this application may be a network device, for example, a base station.

**Embodiment 1**

Embodiment 1 of this application mainly describes a signaling interaction procedure of the information generation method on an air interface.

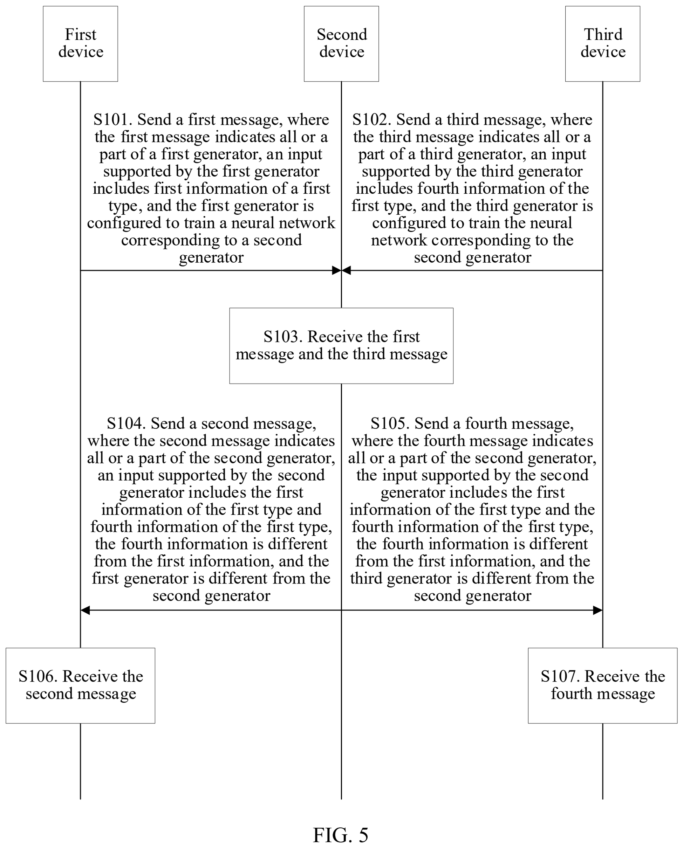

Refer to FIG. 5. FIG. 5 is a schematic flowchart of an information generation method according to an embodiment of this application. It should be understood that the information generation method is described by using an example in which the method is implemented in a communication system including one network device and a plurality of communication devices (for ease of description, two communication devices are used as an example). The first device and the third device are different communication devices and are located in different scenarios. The second device is a network device. As shown in FIG. 5, the information generation method includes but is not limited to the following steps.

S101. The first device sends a first message to the second device, where the first message indicates all or a part of a first generator, an input supported by the first generator includes first information of a first type, and the first generator is configured to train a neural network corresponding to a second generator.

Optionally, the first device obtains a plurality of pieces of first information of the first type and third information of a second type that corresponds to each piece of first information, and uses one piece of first information and the third information corresponding to the first information as one first training sample, to obtain a plurality of first training samples. Optionally, each first training sample further includes information randomly selected from a latent space. The first device may train a first neural network by using the plurality of first training samples, to obtain the first generator. The first generator is a trained first neural network. In other words, a structure (that is, a connection relationship between neurons of the neural network), a weight value, and an offset value of the first generator are the same as a structure, a weight value, and an offset value of the trained first neural network. Alternatively, the first device may train a first neural network and a second neural network by using the plurality of first training samples, to separately obtain the first generator and a first discriminator. The first generator is a trained first neural network, and the first discriminator is a trained second neural network. The first neural network is a generator in a generative adversarial network, and the second neural network is a discriminator in the generative adversarial network. A process in which the first device trains the first neural network and/or the second neural network is described in Embodiment 2 below, and details are not described herein.

After obtaining the first generator, the first device sends the first message to the second device. The first message indicates all or a part of the first generator, and optionally further indicates the input supported by the first generator. The input supported by the first generator may include the first information of the first type. The first generator is configured to train the neural network corresponding to the second generator. For a use manner of the first generator, refer to a training process of the neural network corresponding to the second generator in Embodiment 3. The first generator supports generating second information of the second type based on the first information of the first type.

Optionally, that the first message indicates all of the first generator may be implemented by carrying the connection relationship between all neurons (that is, the structure of the first generator), the weight value, and the offset value of the first generator in the first message. That the first message indicates a part of the first generator may be implemented by carrying the structure of the first generator (the connection relationship between neurons at all layers), and weight values and offset values of some layers in the first message.

It should be understood that, if the first message indicates all of the first generator (for example, the first message includes the structure, the weight value, and the offset value of the first generator), the second device may obtain a complete first generator, and the second device does not need to perform training again. If the first message indicates a part of the first generator (for example, the first message includes the structure of the first generator, and the weight values and the offset values of some layers), the second device can obtain only the part of the first generator, and the second device needs to restore the other part of the first generator, to obtain complete parameters of the first generator.

In a possible implementation, it is assumed that the first generator includes a total of six layers (it should be understood that a quantity of layers of the first generator herein is merely an example, and the quantity of layers of the first generator is not limited in this embodiment of this application. In an actual application, the quantity of layers of the first generator may be set based on a specific situation). The first message includes a structure of the six layers and weight values and offset values of the first three layers. Therefore, after receiving the part of the first generator, the second device fixes the weight values and the offset values of the first three layers, to obtain weight values and offset values of the last three layers.

In another possible implementation, the second device prestores a second generator. It is assumed that the second generator includes six layers (it should be understood that a quantity of layers of the second generator herein is merely an example, and the quantity of layers of the second generator is not limited in this embodiment of this application. In an actual application, the quantity of layers of the second generator may be set based on a specific situation). The second device sends a structure of the second generator and weight values and offset values of the first three layers to the first device and the third device. The first device and the third device separately train weight values and offset values of the last three layers based on the received structure of the second generator and the weight values and the offset values of the first three layers, and separately obtain the first generator and a third generator. The first device sends the weight values and the offset values of the last three layers of the first generator to the second device, and the second device restores the complete first generator based on the received weight values and the offset values of the last three layers of the first generator with reference to the weight values and the offset values of the first three layers of the second generator. The third device performs a similar step, and details are not described herein again.

Optionally, that the first message further indicates the input supported by the first generator may be implemented by carrying one or more of the first information, an identifier of the first information, the first type, and an identifier of the first type in the first message, or may be implemented by carrying an identifier of the first generator in the first message. The identifier of the first generator corresponds to the input (that is, the first information of the first type) supported by the first generator. It should be understood that, if the first message includes one or more of the identifier of the first information, the first type, the identifier of the first type, or the identifier of the first generator, the second device may obtain the first information based on the one or more pieces of information carried in the first message.

Optionally, the first message may include one or more messages. For example, a message A included in the first message may indicate all or a part of the first generator, and a message B included in the first message may indicate the input supported by the first generator. Optionally, the message B may include the identifier of the first generator, and include one or more of the first information, the identifier of the first information, the first type, and the identifier of the first type, to indicate the input supported by the first generator. The message A and the message B are sent to the second device in two different messages, and the first generator corresponds to the input (that is, the first information of the first type) supported by the first generator, that is, the first generator corresponds to the first information. Therefore, the message A may also carry the identifier of the first generator. The identifier may distinguish a correspondence between an input supported by each generator and each generator. That is, although the first generator and the input supported by the first generator may be indicated by using two messages (or may be separately transmitted on an air interface), the first generator and the input supported by the first generator are bound; otherwise, the first generator cannot be used, that is, a device (herein is the second device) that stores the first generator needs to store the input supported by the first generator simultaneously.

For example, signaling (for example, the message A) indicating all or a part of the first generator is shown in the following Table 1, and signaling (for example, the message B) indicating the input supported by the first generator is shown in the following Table 2.

**Table 1**

| Generator ID | Generator Content |
|---|---|
| 0x 4f284 | Model parameters (that is, structure and weight value) of the first generator |

**Table 2**

| Generator ID | Inputs supported by the generator |
|---|---|
| 0x 4f284 | First information/Identifier of the first information/First type/Identifier of the first type |

It can be learned that, based on a unique generator ID, a generator may correspond to an input supported by the generator.

Optionally, the input supported by the first generator is information of the first type, and an output is information of the second type. The first type and the second type have the following several possibilities: (a) The first type is a scenario type, and the second type is a wireless channel characteristic type; or the first type is a user profile and scenario type, and the second type is a wireless channel characteristic type. In other words, the first generator outputs/generates information related to a wireless channel characteristic based on inputted scenario-related information. (b) The first type is a wireless channel characteristic type, and the second type is a user profile type; or the first type is a wireless channel characteristic and scenario type, and the second type is a user profile type. In other words, the first generator outputs/generates user-related information based on inputted wireless channel characteristic-related information. (c) The first type is a wireless channel characteristic type, and the second type is a scenario type; or the first type is a wireless channel characteristic and user profile type, and the second type is a scenario type. In other words, the first generator outputs/generates scenario-related information based on inputted wireless channel characteristic-related information.

It should be understood that, because the first generator is configured to generate information in a wireless environment, a wireless channel that is actually measured is information that needs to be used when the first neural network corresponding to the first generator is trained.

Optionally, when the first type is the wireless channel characteristic type, the information of the first type is information related to wireless channel characteristics. The wireless channel characteristics are characteristics of a wireless channel. The wireless channel characteristic type is an information type related to wireless channel characteristics, and includes one or more of the following subtypes: a channel impulse response information subtype and a channel state information subtype.

When the first type is the channel impulse response information subtype, the information of the first type is information related to channel impulse response information. The channel impulse response information is information obtained by directly measuring a wireless channel, or may be a reflection of a wireless channel state after processing is performed based on a result obtained by measuring a wireless channel. The channel impulse response information may include one or more of the following information: a channel matrix, a channel impulse response, a channel frequency response, a multipath delay spread of a channel, a multipath composition of a channel, an amplitude of a channel, a phase of a channel, a real part of a channel impulse response, an imaginary part of a channel impulse response, a channel power delay spectrum, and a channel angular power spectrum. The channel matrix is a channel impulse response under multiple-input multiple-output (multiple-input multiple-output, MIMO).

When the first type is the channel state information subtype, the information of the first type is information related to channel state information. The channel state information indicates a wireless channel state, and may be a direct result obtained by measuring a wireless channel, for example, channel power or reference signal received power (reference signal received power, RSRP), or may be a reflection of a wireless channel state after processing is performed based on a result obtained by measuring a wireless channel, for example, a measurement report or channel state information. The channel state information may include one or more of the following information: channel state information (channel state information, CSI), a measurement report (measurement report, MR), channel power, interference power, noise power, a signal to interference plus noise ratio, a channel quality indicator (channel quality indicator, CQI), reference signal received power (reference signal received power, RSRP), and reference signal received quality (reference signal received quality, RSRQ).

Optionally, when the first type is the scenario type, the information of the first type is information related to a wireless communication scenario. The wireless communication scenario is a description of a current wireless communication environment and an object in the environment. The scenario type includes one or more of the following subtypes: an environment description information subtype and an environment perception information subtype.

When the first type is the environment description information subtype, the information of the first type is information related to environment description information. The environment description information describes a wireless transmission environment, and includes one or more of the following information: a two-dimensional map, a three-dimensional map, longitude and latitude coordinates, point cloud data, an environment layout diagram, a size of an object in the environment, a relative location of an object in the environment, a material of an object in the environment, a location of an access network device in the environment, and traffic volume information.

The point cloud data (point cloud data) is a set of vectors in a three-dimensional coordinate system. In addition to having a geometric location, the point cloud data may further include color information and intensity information. The color information is usually to obtain a color image by using a camera, and then assign color information (RGB) of a pixel at a corresponding location to a corresponding point in a point cloud. The intensity information is an echo intensity collected by a receiving apparatus of a laser scanner. The intensity information is related to a surface material, roughness, an incident angle direction of a target, emission energy of an instrument, and laser wavelength.

When the first type is the environment perception information subtype, the information of the first type is information related to environment perception information. The environment perception information is environment information obtained from a sensor, and includes one or more of the following information: a photographed image obtained by an optical sensor, depth information obtained by a depth camera, distance information obtained by a distance sensor, acceleration information obtained by an acceleration sensor, and data obtained by another sensor. The sensor includes an optical sensor, an inductive (Inductive) sensor, a capacitive (Capacitive) sensor, a magnetic sensor, a temperature sensor, an acceleration sensor, and a pressure sensor.

Optionally, when the first type is the user profile type, the information of the first type is information related to a user behavior profile. The user behavior profile refers to a summary of parameter selection and behavior rules of a user equipment (the first device or the third device) in an objective communication condition. The user profile type refers to an information type related to a user behavior profile, and includes one or more of the following subtypes: a user parameter subtype and a user behavior information subtype.

When the first type is the user parameter subtype, the information of the first type is information related to a user equipment parameter. The user equipment parameter refers to a communication parameter of a user equipment, and includes one or more of the following information: a hardware parameter and a software parameter of the user equipment, such as a device antenna parameter and a device physical layer parameter, a hardware parameter of the equipment, average transmit power, an equipment battery level, an international mobile subscriber identity, and an equipment identity.

The physical layer parameter is an algorithm, a configured parameter, or a decision of a physical layer (physical layer) of a communication device, for example, a beam selection result, a modulation and coding scheme (modulation and coding scheme, MCS) selection result, or a precoding matrix selection result. The hardware parameter of the equipment is, for example, precision of an analog-to-digital conversion (ADC) module used in the equipment.

When the first type is the user behavior information subtype, the information of the first type refers to information related to user behavior information. The user behavior information describes a behavior of a user in a communication process, and includes one or more of the following information: a geographical location, historical location distribution, a moving speed, a moving path of a user equipment, and a service feature of the user equipment, such as a service type, user experience, an average delay, an average packet loss rate, a volume of received and sent data, and a historical access cell.

It should be understood that the user profile and scenario type refers to a user profile type plus a scenario type. In other words, the information of the first type includes two parts: one part is user profile type information, and the other part is scenario type information. The wireless channel characteristic and scenario type refers to a wireless channel characteristic type plus a scenario type. In other words, the information of the first type includes two parts: one part is wireless channel characteristic type information, and the other part is scenario type information. The wireless channel characteristic and user profile type refers to a wireless channel characteristic type and a user profile type. In other words, the information of the first type includes two parts: one part is wireless channel characteristic type information, and the other part is user profile type information.

In an example, the first information is an environmental image (for example, a top view) of an environment in which the first device is located and geographical location information (for example, a location obtained by a global positioning system) of the first device. The third information (a real value used when the first neural network is trained, or information of the second type that corresponds to the first information in the first training sample) is a power delay spectrum of a measurement channel when the first device is located in the environment and geographical location. The second information is a channel power delay spectrum that is outputted/generated by the first generator based on the inputted environmental image and geographical location information. In other words, the first generator can output the channel power delay spectrum based on the inputted environmental image and geographical location information. That is, the first generator is configured to generate a channel (for example, used by a communication system to evaluate a channel status), namely, the first generator learns a relationship between the environmental image and geographical location information with the channel.

It should be understood that the second information and the third information have similar probability distribution, that is, the output of the first generator has similar probability distribution to the real value used during training. For example, it is assumed that channel power delay spectrum data is learned in a training process of the first neural network, and it is assumed that channel delays of the data are uniformly distributed from 30 nanoseconds to 300 nanoseconds. In this case, outputs of the first neural network (that is, the first generator) that is finally trained should also be uniformly distributed within this range. It should be understood that the uniform distribution is merely an example, and there may also be another distribution type. Actually, the distribution type may be a probability that a channel delay is 50 nanoseconds and a probability that a channel delay is 100 nanoseconds.

In another example, the first information is an environmental image (for example, a top view) of an environment in which the first device is located and a channel impulse response of a measurement channel when the first device is located in the environment and geographical location. The third information (a real value used when the first neural network is trained, or information of the second type that corresponds to the first information in the first training sample) is real geographical location information (for example, a location obtained by a global positioning system) of the first device in the environment. The second information is the geographic location information of the first device that is outputted/generated by the first generator based on the inputted environmental image and the channel impulse response of the measurement channel. In other words, the first generator can output the geographical location information of the first device based on the input environmental image and the channel impulse response of the measurement channel. That is, the first generator is configured to generate geographical location information (for example, used in a positioning scenario), namely, the first generator learns a relationship between the environmental image and the channel impulse response with the geographical location information.

It should be understood that the second information and the third information have similar probability distribution, that is, the output of the first generator has similar probability distribution to the real value used during training. For example, it is assumed that location data of user equipments in a building is learned in a training process of the first neural network, and it is assumed that 50% of locations of the user equipments in the data are in an office A and 50% are in a conference room B. In this case, nearly half of outputs of the first neural network (that is, the first generator) that is finally trained should be in the office A and half of the outputs are in the conference room B.

In still another example, the first information is a channel impulse response of a measurement channel when the first device is located in an environment and a geographical location. The third information (a real value used when the first neural network is trained, or information of the second type that corresponds to the first information in the first training sample) is environment perception information (for example, a distance between the first device and an obstacle in front) of the first device in the environment. The second information is the distance between the first device and the obstacle in front that is outputted/generated by the first generator based on the inputted channel impulse response of the measurement channel. In other words, the first generator can output the distance between the first device and the obstacle in front based on the inputted channel impulse response of the measurement channel. That is, the first generator is configured to generate distance perception information (for example, used in a ranging scenario), namely, the first generator learns a relationship between the channel impulse response with distance perception information.

It should be understood that the second information and the third information have similar probability distribution, that is, the output of the first generator has similar probability distribution to the real value used during training. For example, it is assumed that the distance between the first device and the obstacle in front is learned in a training process of the first neural network, and it is assumed that distance data is uniformly distributed from 0.3 m to 300 m. In this case, outputs of the first neural network (that is, the first generator) that is finally trained should also be uniformly distributed within this range.

S102. The third device sends a third message to the second device, where the third message indicates all or a part of a third generator, an input supported by the third generator includes fourth information of the first type, and the third generator is configured to train the neural network corresponding to the second generator.

Optionally, the third device obtains a plurality of pieces of fourth information of the first type and sixth information of the second type that corresponds to each piece of fourth information, and uses one piece of fourth information and the sixth information corresponding to the fourth information as one second training sample, to obtain a plurality of second training samples. Optionally, each second training sample further includes information randomly selected from the latent space. The third device may train a fifth neural network by using the plurality of second training samples, to obtain the third generator. The third generator is a trained fifth neural network. In other words, a structure (that is, a connection relationship between neurons of the neural network), a weight value, and an offset value of the third generator are the same as a structure, a weight value, and an offset value of the trained fifth neural network. Alternatively, the third device may train a fifth neural network and a sixth neural network by using the plurality of second training samples, to separately obtain the third generator and a third discriminator, where the third generator is a trained fifth neural network, and the third discriminator is a trained sixth neural network. The fifth neural network is a generator in a generative adversarial network, and the sixth neural network is a discriminator in the generative adversarial network. For a process in which the third device trains the fifth neural network and/or the sixth neural network, refer to descriptions of training the first neural network and/or the second neural network in the following Embodiment 2. Details are not described herein again.

After obtaining the third generator, the third device sends the third message to the second device. The third message indicates all or a part of the third generator, and optionally further indicates the input supported by the third generator. The input supported by the third generator may include the fourth information of the first type. The third generator is configured to train the neural network corresponding to the second generator. For a use manner of the third generator, refer to a training process of the neural network corresponding to the second generator in Embodiment 3. The third generator supports generating fifth information of the second type based on the fourth information of the first type.

Optionally, that the third message indicates all of the third generator may be implemented by carrying the connection relationship between all neurons (that is, the structure of the third generator), the weight value, and the offset value of the third generator in the third message. That the third message indicates a part of the third generator may be implemented by carrying the structure of the third generator (the connection relationship between neurons at all layers), and weight values and offset values of some layers in the third message.

It should be understood that, if the third message indicates all of the third generator (for example, the third message includes the structure, the weight value, and the offset value of the third generator), the second device may obtain a complete third generator, and the second device does not need to perform training again. If the third message indicates a part of the third generator (for example, the third message includes the structure of the third generator, and the weight values and the offset values of some layers), the second device can obtain only the part of the third generator, and the second device needs to assign a value to a weight value and an offset value of the other part of the third generator. A method for obtaining an assigned parameter may be reading a prestored neural network parameter, or may be obtaining another message that carries a neural network parameter, or may be assigning an initial parameter and then updating the parameter through training.

Optionally, that the third message further indicates the input supported by the third generator may be implemented by carrying one or more of the fourth information, an identifier of the fourth information, the first type, and the identifier of the first type in the third message, or may be implemented by carrying an identifier of the third generator in the third message. The identifier of the third generator corresponds to the input (that is, the fourth information of the first type) supported by the third generator. It should be understood that, if the third message includes one or more of the identifier of the fourth information, the first type, the identifier of the first type, or the identifier of the third generator, the second device may need to obtain the fourth information based on the one or more pieces of information carried in the third message.

Optionally, the third message may include one or more messages. For example, a message C included in the first message may indicate all or a part of the first generator, and a message D included in the third message may indicate the input supported by the third generator. Optionally, the message D may include the identifier of the third generator, and include one or more of the fourth information, the identifier of the fourth information, the first type, and the identifier of the first type, to indicate the input supported by the third generator. The message C and the message D are sent to the second device in two different messages, and the third generator corresponds to the input (that is, the fourth information of the first type) supported by the third generator, that is, the third generator corresponds to the fourth information. Therefore, the message C also needs to carry the identifier of the third generator. The identifier may distinguish a correspondence between an input supported by each generator and each generator. That is, although the third generator and the input supported by the third generator may be indicated by using two messages (or may be separately transmitted on an air interface), the third generator and the input supported by the third generator are bound; otherwise, the third generator cannot be used, that is, a device (herein is the second device) that stores the third generator needs to store the input supported by the third generator simultaneously.

Optionally, the input supported by the third generator is information of the first type, and an output is information of the second type. For the first type and the second type, refer to corresponding descriptions of the "first type" and the "second type" in step S101. Details are not described herein again.

Optionally, the fourth information and the first information are different information of a same type, the sixth information and the third information are also different information of a same type, and the fifth information and the second information are information of a same type generated by different generators. Refer to the foregoing corresponding descriptions, and details are not described herein again.

It should be understood that the input supported by the third generator and the input supported by the first generator are information of a same type, and the outputs are also information of a same type. For example, the input supported by the first generator is an environmental image of an environment in which the first device is located and geographical location information of the first device, and the output is a channel power delay spectrum generated based on the input. The input supported by the third generator is an environmental image of an environment in which the third device is located and geographical location information of the third device, and the output is a channel power delay spectrum generated based on the input. A difference between the first generator and the third generator lies in that: the first generator and the third generator are trained by using information in different wireless environments. For example, the first generator is trained by using information in an indoor environment (an office, a residence, an indoor shopping mall, or the like), and the third generator is trained by using information in an outdoor environment (a street, or the like). In other words, the two generators are used in different scenarios.

It may be understood that an execution sequence of step S101 and step S102 is not limited. Step S101 may be performed before step S102, or step S102 may be performed before step S101, or step S101 and step S102 may be performed simultaneously or concurrently.

S103. The second device receives the first message and the third message.

Specifically, the second device receives the first message from the first device and the third message from the third device. The first message indicates all or a part of the first generator, and optionally, further indicates the input supported by the first generator. The third message indicates all or a part of the third generator, and optionally, further indicates the input supported by the third generator. The input supported by the first generator includes the first information of the first type, and the input supported by the third generator includes the fourth information of the first type. The first generator and the third generator are configured to train the neural network corresponding to the second generator.

S104. The second device sends a second message to the first device, where the second message indicates all or a part of the second generator, an input supported by the second generator includes the first information of the first type and the fourth information of the first type, the fourth information is different from the first information, and the first generator is different from the second generator.

S105. The second device sends a fourth message to the third device, where the fourth message indicates all or a part of the second generator, the input supported by the second generator includes the first information of the first type and the fourth information of the first type, the fourth information is different from the first information, and the third generator is different from the second generator.

Optionally, the second device obtains a plurality of pieces of first information of the first type and a plurality of pieces of fourth information of the first type, combines one piece of first information and one piece of second information of the second type that is obtained by inputting the first information into the first generator into one third training sample, to obtain a plurality of third training samples; and combines one piece of fourth information and one piece of fifth information of the second type that is obtained by inputting the fourth information into the third generator into one fourth training sample, to obtain a plurality of fourth training samples. The second device uses the plurality of third training samples and the plurality of fourth training samples as one training sample set. Optionally, each third training sample further includes one piece of information randomly selected from the latent space, and each fourth training sample further includes one piece of information randomly selected from the latent space.

The second device trains a third neural network by using a plurality of training samples in the training sample set, to obtain the second generator. The second generator is a trained third neural network. In other words, a structure (that is, a connection relationship between neurons of the neural network) and a weight value of the second generator are the same as a structure and a weight value of the trained third neural network.

Alternatively, the second device trains a third neural network and a fourth neural network by using a plurality of training samples in the training sample set, to separately obtain the second generator and a second discriminator, where the second generator is a trained third neural network, and the second discriminator is a trained fourth neural network. The third neural network is a generator in a generative adversarial network, and the fourth neural network is a discriminator in the generative adversarial network. The first generator and the third generator are configured to train the neural network corresponding to the second generator. A process in which the second device trains the third neural network and/or the fourth neural network is described in Embodiment 3 below, and details are not described herein.

It can be learned that the training sample set of the third neural network includes both information collected by the first device and information collected by the third device. In addition, generation models of a plurality of communication devices are summarized, and are trained into a multi-scenario generation model (that is, the second generator). Through continuous summarization and training, the generation model gradually and automatically evolves into an all-scenario generation model in a communication network.

After obtaining the second generator, the second device sends the second message to the first device, and further sends the fourth message to the third device. The second message or the fourth message indicates all or a part of the second generator and the input supported by the second generator. The input supported by the second generator includes the first information of the first type and the fourth information of the first type. The fourth information is different from the first information, and the first generator, the second generator, and the third generator are different from each other. The second generator is separately configured to support generating second information of the second type based on the first information and generating fifth information of the second type based on the fourth information. It should be understood that the second information is also different from the fifth information.

Optionally, if the first message or the message B indicates the input supported by the first generator, the first message or the message B carries the first information. In other words, if the first message or the message B includes a plurality of pieces of first information, the second device obtains the plurality of pieces of first information from the received first message or message B. The third message (or the message D included in the third message) is similar to the first message (or the message B included in the first message). If the third message or the message D indicates the input supported by the third generator, the third message or the message D carries the fourth information. In other words, if the third message or the message D includes a plurality of pieces of fourth information, the second device obtains the plurality of pieces of fourth information from the received third message or message D.

Optionally, if the first message or the message B included in the first message indicates the input supported by the first generator, the first message or the message B carries the identifier of the first information. In other words, if the first message or the message B includes the identifier of the first information, the second device may obtain information corresponding to the identifier of the first information from a mapping relationship table between an identifier and information, where the information includes a plurality of pieces of first information. The mapping relationship table between an identifier and information may be standardized and prestored in the second device. It should be understood that the third message (or the message D included in the third message) is similar to the first message (or the message B included in the first message). If the third message or the message D indicates the input supported by the third generator, the third message or the message D carries the identifier of the fourth information. In other words, if the third message or the message D includes the identifier of the fourth information, the second device may obtain information corresponding to the identifier of the fourth information from the mapping relationship table between an identifier and information.

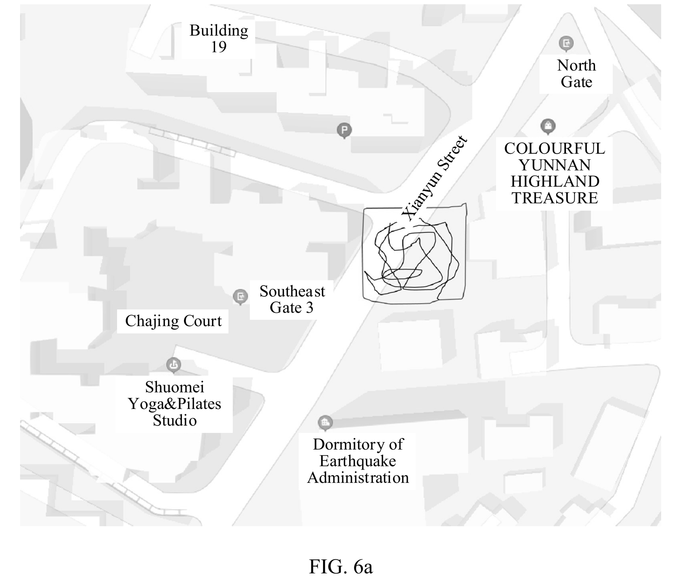

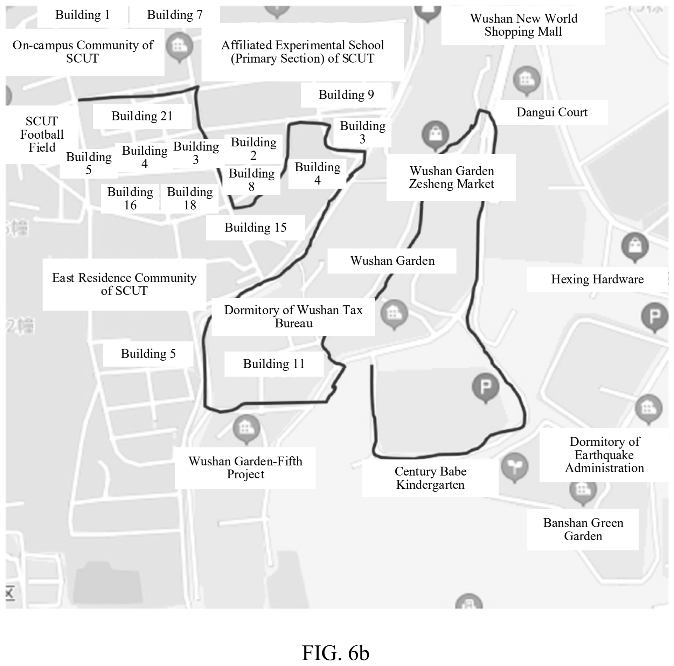

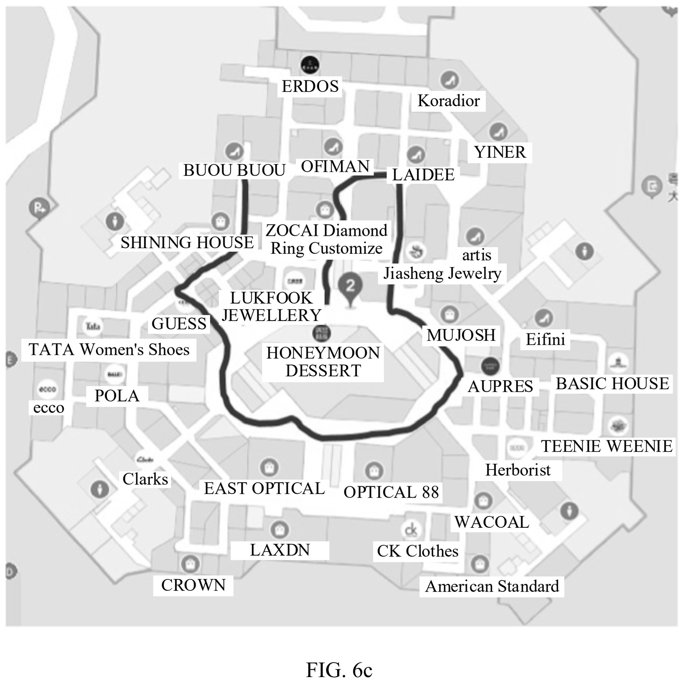

In an example, it is assumed that the first information is user profile and scenario type information. In other words, the first type of the first information is the user profile and scenario type. As shown in the following Table 3, the first message or the message B includes a scenario sequence number 1 (that is, the identifier of the first information), and the second device selects, from a map library, a map with a range of 500 m*500 m (which may be a preset size) of an area in which the first device is located. The map may be a three-dimensional map, that is, include building height information or point cloud data. The second device randomly places a first device marker on a main road on the map, to form a scenario information expression (it should be understood that the scenario information expression herein includes a plurality of pieces of first information). Further, the first message or the message B further includes a main movement range of the first device, so that the second device may obtain a more specific scenario information expression of the first device. For example, if the main movement range of the first device is a subgrid 1, the scenario information expression obtained by the second device may be shown in FIG. 6a. FIG. 6a is a schematic diagram of a scenario information expression according to an embodiment of this application. FIG. 6b is another schematic diagram of a scenario information expression according to an embodiment of this application. FIG. 6c is still another schematic diagram of a scenario information expression according to an embodiment of this application.

**Table 3**

| Scenario sequence number | Objective environment | User profile | Scenario information expression |
|---|---|---|---|
| 1 | Outdoor 500 m*500 m | Main movement range: Subgrid 1 | As shown in FIG. 6a |
| 2 | Outdoor 5 km*5 km | Main movement range: Main roads | As shown in FIG. 6b |
| 3 | Indoor of shopping center 1 | Main movement range: Third floor | As shown in FIG. 6c |

It should be understood that, when the first information is a map, the first device and the second device need to access same map data, and specify same grid division for the map. The first device and the second device need to have same understanding of stipulations of main roads, buildings, and floors. For example, the first device and the second device access an interface of a map database, and send, to the interface, an instruction for obtaining map data, where the instruction includes information such as a scenario sequence number (that is, the identifier of the first information), a location of the second device, and a location of the first device. The interface of the map database feeds back unified map data to the second device and the first device based on the instruction. The map database internally specifies how to feed back unified map data based on an instruction. For example, the map data is divided into grids in terms of longitude and latitude at a granularity of 500 m, and a grid is searched for based on the longitude and latitude of the first device, to obtain map data of 500 m*500 m of the grid. The map database divides a main road, a small road, an expressway, and the like based on a road width, and feeds back a location of a corresponding road based on an instruction input. The map database may number shopping centers in each grid and differentiate floors based on indoor maps. The map database may ensure that the second device and the first device can obtain the same scenario information expression. In other words, the map database may ensure that the second device and the first device can obtain the same first information.

It can be learned that in this embodiment of this application, the input supported by the first generator and the input supported by the third generator are compressed as much as possible for indication, the identifier of the first information is only carried in the first message (or the message B), and the identifier of the fourth information is only carried in the third message (or the message D), so that overheads of air interface resources can be reduced.

Optionally, if the first message or the message B indicates the input supported by the first generator, the first message or the message B carries the first type or the identifier of the first type. In other words, if the first message or the message B includes the first type or the identifier of the first type, the second device obtains, based on a mapping relationship between an information type and information, a plurality of pieces of first information of the first type or obtains a plurality of pieces of first information corresponding to the identifier of the first type. The mapping relationship table between a type and information may be standardized and prestored in the second device. Alternatively, the second device does not prestore a mapping relationship between a type and information, but prestores a mapping between a type and a method for obtaining information corresponding to the type. The second device searches for, based on the first type or the identifier of the first type that is included in the first message or the message B, a method for obtaining information corresponding to the first type, and obtains a plurality of pieces of first information based on the found method.

For example, when the first device communicates with the second device, a channel transmission environment of the first device is a channel transmission environment of the second device. Especially in a time division duplex (TDD) system, a measurement channel of the first device and a measurement channel of the second device have similar distribution. In this case, if the first message or the message B indicates that the first type is a wireless channel characteristic type, the second device may obtain, based on the type by using a channel measurement method, a channel corresponding to the type as the first information.

Optionally, if the first message or the message B indicates the input supported by the first generator, the first message or the message B carries the identifier of the first generator. In other words, if the first message or the message B includes the identifier of the first generator, the second device determines, based on a mapping relationship between a generator identifier and an information type, an information type corresponding to the identifier of the first generator, and then obtains, based on a predefined mapping relationship between an information type and information, a plurality of pieces of first information corresponding to the information type corresponding to the identifier of the first generator. Both the mapping relationship between a generator identifier and an information type and the mapping relationship between an information type and information may be standardized and prestored in the second device. It should be understood that, the third message (or the message D) is similar to the first message (or the message B). If the third message or the message D indicates the input supported by the third generator, the third message or the message D carries the identifier of the third generator. In other words, if the third message or the message D includes the identifier of the third generator, the second device determines, based on the mapping relationship between a generator identifier and an information type, an information type corresponding to the identifier of the third generator, and then obtains, based on the predefined mapping relationship between an information type and information, a plurality of pieces of fourth information corresponding to the information type corresponding to the identifier of the third generator.

In an example, it is assumed that the first information is scenario type information. It is assumed that there are 64 possible types of scenario type information, the generator ID implicitly indicates the type of the first information, and an identifier of the type may be a remainder m obtained by dividing a value of the generator ID by 64. In this way, the uniqueness of the generator ID is ensured, and the type of the first information is implicitly indicated, thereby implicitly indicating the first information.

It can be learned that, in this embodiment of this application, the type of the first information is implicitly indicated in the generator ID, so that the second device obtains the first information based on the type, thereby avoiding independent upload and delivery of the first information, and reducing signaling overheads and air interface resources.

Optionally, if the first message indicates only all or a part of the first generator, and does not indicate the input supported by the first generator, that is, the first device notifies the second device only of all or a part of the first generator, neither of the identifier of the first generator nor of the first information. The second device knows some information of the first device. The second device may infer, based on the known information of the first device, a training sample used when the first device trains the first neural network (the training sample includes the first information).

In an example, it is assumed that the first information is user profile and scenario type information. It is assumed that the second device knows information such as an approximate activity range of the first device and a behavior profile of the first device. In this case, the second device may infer the first information used when the first device trains the first neural network. In this case, the first device does not need to send information related to the first information, but only needs to send the first generator, and the second device automatically adds corresponding information to the first generator internally. Similarly, when delivering the second generator, the second device may not send the fourth information. When receiving the second generator, the first device configures, by default, the second generator to be used in a current scenario, a preset scenario, or a requested scenario. Before sending the second message, the second device may receive a first request from the first device, to request a generator corresponding to a scenario. The second device may deliver a second generator applicable to various scenarios, or may deliver a generator that is used only in a specific scenario.

Optionally, if the first message indicates all of the first generator (for example, the first message includes the structure, the weight value, and the offset value of the first generator), the second device obtains a complete first generator. If the first message indicates a part of the first generator (for example, the first message includes the structure of the first generator, and the weight values and offset values of some layers), the second device can obtain only the part of the first generator. In this case, the second device trains the first generator by using the obtained plurality of pieces of first information of the first type and the third information of the second type that corresponds to each piece of first information, so as to restore the other part of the first generator, to obtain complete parameters of the first generator.

Optionally, the third message is similar to the first message. If the third message indicates all of the third generator (that is, the third message carries the structure, the weight value, and the offset value of the third generator), the second device obtains a complete third generator. If the third message indicates a part of the third generator (for example, the third message includes the structure of the third generator, and the weight values and offset values of some layers), the second device can obtain only the part of the third generator. In this case, the second device trains the other part of layers of the third generator by using the obtained plurality of pieces of fourth information of the first type and the sixth information of the second type that corresponds to each piece of fourth information, so as to restore the other part of the third generator, to obtain complete parameters of the third generator.

Optionally, that the second message or the fourth message indicates all of the second generator may be implemented by carrying the connection relationship between all neurons (that is, the structure of the second generator), the weight value, and the offset value of the second generator in the second message or the fourth message. That the second message or the fourth message indicates a part of the second generator may be implemented by carrying the structure of the second generator (the connection relationship between neurons at all layers), and weight values and offset values of some layers in the second message or the fourth message.

It should be understood that, if the second message or the fourth message indicates all of the second generator (for example, the second message or the fourth message includes the structure, the weight value, and the offset value of the second generator), the first device and the third device may obtain a complete second generator, and the first device and the third device do not need to perform training again. If the second message or the fourth message indicates a part of the second generator (for example, the second message or the fourth message includes the structure of the second generator, and the weight values and the offset values of some layers), the first device or the third device can obtain only the part of the second generator, and the first device or the third device needs to restore the other part of the second generator, to obtain complete parameters of the second generator.

Optionally, that the second message indicates the input supported by the second generator may be implemented by carrying one or more of the fourth information, the identifier of the fourth information, the first type, and the identifier of the first type in the second message, or may be implemented by carrying an identifier of the second generator in the second message. The identifier of the second generator corresponds to the input (that is, the first information and the fourth information of the first type) supported by the second generator. Although the input supported by the second generator includes the first information and the fourth information of the first type, because the second message is sent to the first device, the second message may not carry information related to the first information. It should be understood that, if the second message includes one or more of the identifier of the fourth information, the first type, the identifier of the first type, or the identifier of the second generator, the first device may need to obtain the fourth information based on the one or more pieces of information carried in the second message.

It should be understood that the fourth message is similar to the second message. That the fourth message indicates the input supported by the second generator may be implemented by carrying one or more of the first information, the identifier of the first information, the first type, and the identifier of the first type in the fourth message, or may be implemented by carrying the identifier of the second generator in the fourth message. The identifier of the second generator corresponds to the input (that is, the first information and the fourth information of the first type) supported by the second generator. Although the input supported by the second generator includes the first information and the fourth information of the first type, because the fourth message is sent to the third device, the fourth message may not carry information related to the fourth information. It should be understood that, if the fourth message includes one or more of the identifier of the first information, the first type, the identifier of the first type, or the identifier of the second generator, the third device may need to obtain the first information based on the one or more pieces of information carried in the fourth message.

Optionally, the input supported by the second generator is information of the first type, and an output is information of the second type. For meanings of the first type and the second type, refer to corresponding descriptions of the "first type" and the "second type" in step S101. Details are not described herein again.

It may be understood that an execution sequence of step S104 and step S105 is not limited. Step S104 may be performed before step S105, or step S105 may be performed before step S104, or step S104 and step S105 may be performed simultaneously or concurrently.

S106. The first device receives the second message.

S107. The third device receives the fourth message.

Specifically, the first device receives the second message from the second device. The third device receives the fourth message from the second device. The second message and the fourth message indicate all or a part of the second generator, and optionally further indicate the input supported by the second generator. The input supported by the second generator includes the first information of the first type and the fourth information of the first type. The fourth information is different from the first information, and the first generator is different from the second generator.

Optionally, if the second message or the fourth message indicates all of the second generator (that is, the second message or the fourth message carries the structure and the weight value of the second generator), the first device or the third device obtains a complete second generator. If the second message or the fourth message indicates a part of the second generator (for example, the second message or the fourth message includes the structure of the second generator and weight values of some layers), the first device or the third device can obtain only the part of the second generator. The first device trains the other part of layers of the second generator by using the obtained plurality of third training samples and the obtained plurality of fourth training samples, or the third device trains the other part of layers of the second generator by using the obtained plurality of third training samples and the obtained plurality of fourth training samples, to obtain weight values of the another part of layers of the second generator layer.

After receiving the second message, the first device may input, based on the input supported by the second generator, the fourth information of the first type into the second generator to generate fifth information of the second type. In other words, after obtaining the second generator, the first device may generate, by using the second generator, information in a scenario for which the first device is not trained.

In an example, it is assumed that the first generator is obtained through training in an indoor environment such as an indoor shopping mall. In other words, both the first information and the third information used during training are information collected by the first device in the indoor shopping mall. It is assumed that the third generator is obtained through training in an outdoor environment such as a street. In other words, both the fourth information and the sixth information used during training are information collected by the third device on the street. It is assumed that the first device predetermines that the first device is to move from the indoor shopping mall to the street, or that the first device has moved from the indoor shopping mall to the street. In this case, the first device may input the fourth information into the second generator to generate the fifth information, so as to assist the first device in communication on the street and adjust a communication parameter of the first device.

For example, the first device inputs a building layout diagram on a street and a possible location of the user equipment into the second generator, to generate a large quantity of channel impulse responses, inputs these channel impulse responses as a channel model into a link simulator in the first device, and explores a better physical layer parameter, for example, a channel coding configuration parameter, in the channel model by using a machine learning method such as reinforcement learning. The better channel coding configuration parameter obtained through exploration is used for communication of the first device on the street.

It may be understood that an execution sequence of step S106 and step S107 is not limited. Step S106 may be performed before step S107, or step S107 may be performed before step S106, or step S106 and step S107 may be performed simultaneously or concurrently.

It can be learned that, in this embodiment of this application, information collected by a communication device (that is, the first device or the third device) is fully used to train a generation model, so that the generation model can generate (or infer or predict) another part of information by using a part of information, thereby implementing communication-assisted detection and detection-assisted communication, and causing a communication network to develop towards a more intelligent and adaptive direction. In addition, in this embodiment of this application, generation models of a plurality of communication devices (that is, the first device and the third device) are further summarized, and the generation models are trained into a multi-scenario generation model (that is, the second generator). Through continuous summarization and training, the generation model gradually and automatically evolves into an all-scenario generation model in a communication network. This can not only resolve a problem that information collected by a single communication device is unvaried, but also quickly improve a generalization capability of the generation model. In addition, when the all-scenario generation model is compared with a plurality of single-scenario generation models, complexity of a neural network is not linearly superimposed due to function superposition. That is, even if functions are superimposed, a parameter of a neural network of the all-scenario generation model is much less than a sum of parameters of neural networks of the plurality of single-scenario generation models. Therefore, a parameter storage requirement and an air interface transmission requirement of the neural network can be reduced.

## Embodiment 2

Embodiment 2 of this application mainly describes a method for training the first neural network or the first neural network and the second neural network in the first device. It should be understood that a method for training the fifth neural network and/or the sixth neural network in the third device is similar to the method for training the first neural network and/or the second neural network in the first device, and details are not described herein again.

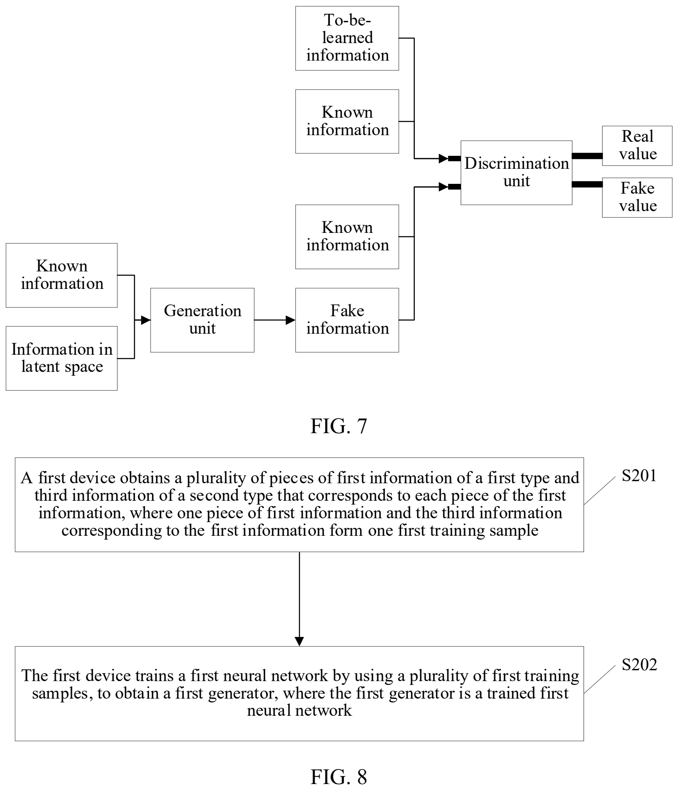

Optionally, the first device includes a generation unit and a discrimination unit, which respectively correspond to the first neural network and the second neural network. Refer to FIG. 7. FIG. 7 is a self-learning block diagram of a generation unit and a discrimination unit according to an embodiment of this application. The following separately describes an input and an output of the two units, and how to generate unknown information (for example, the second information) by using known information (for example, the first information). As shown in FIG. 7, to-be-learned information (for example, the third information) and the known information (for example, the first information) are spliced and then inputted into the discrimination unit, and the discrimination unit continuously narrows a difference between the output of the discrimination unit and a real value through training. The known information and information in a latent space are spliced and then inputted into the generation unit, and the generation unit outputs fake information. The fake information and the known information are spliced and then inputted into the discrimination unit. The discrimination unit continuously narrows a difference between the output of the discrimination unit and a fake value through training, and the generation unit continuously narrows the difference between the output of the discrimination unit and the real value through training. Through training of the discrimination unit and the generation unit, the fake information generated by the generation unit based on the known information is very close to the to-be-learned information corresponding to the known information. In this case, the discrimination unit cannot correctly determine whether the inputted information is generated by the generation unit or the real to-be-learned information. In other words, a learning objective of the generation unit is to cause the outputted fake information to be similar to the real to-be-learned information as much as possible, so as to deceive the discrimination unit. That is, the discrimination unit cannot distinguish whether the inputted information is generated by the generation unit or the real to-be-learned information.

An implementation of the generation unit and the discrimination unit may be a neural network, and may use any neural network structure, such as a convolutional neural network, a fully connected neural network, an attention mechanism-based neural network, or a long short-term memory neural network. In this case, the generation unit may be referred to as a generative network, and the discrimination unit may be referred to as a discriminative network. An output of the generation network is flexible and can be changed correspondingly based on known information of different types. An output of the discriminative network is relatively fixed, and generally only one value is outputted. When the value is closer to a real value label, it is considered that the discriminative network determines that the input is a real value. On the contrary, when the output value is closer to a fake value label, it is considered that the discriminative network determines that the input is a fake value. For example, the output of the discriminative network is a value between 0 and 1, the real value label is 1, and the fake value label is 0. When the value of the output of the discriminative network is closer to 1, it indicates that the discriminative network is more likely to determine that the input of the discriminative network is a real value. When the value of the output of the discriminative network is closer to 0, it indicates that the discriminative network is more likely to determine that the input of the discriminative network is a fake value.

Splicing means that two pieces of data are combined by adding a dimension to form a multidimensional data. For example, when the known information is a 256*256 grayscale image, a data volume of the image is 256*256, which is a two-dimensional matrix. A dimension of random noise (or random noise, or a latent space) is also designed to be 256*256, that is, the random noise includes 256*256 random values, which is also a two-dimensional matrix. In this case, the random noise and the known information are spliced to form a 256*256*2 three-dimensional tensor, and a dimension of a third dimension of the three-dimensional tensor is 2, which corresponds to the random noise and the known information respectively.

The following specifically describes the method for training the first neural network and the second neural network.

Refer to FIG. 8. FIG. 8 is a schematic flowchart of a neural network training method according to an embodiment of this application. The neural network training method may be applied to a communication device, and specifically may be applied to a first device or a third device. In FIG. 8, the first device is used as an example for description. As shown in FIG. 8, the neural network training method includes but is not limited to the following steps.

S201. The first device obtains a plurality of pieces of first information of a first type and third information of a second type that corresponds to each piece of first information, where one piece of first information and the third information corresponding to the first information form one first training sample.

Specifically, the first device collects a plurality of pieces of first information of the first type and third information of the second type that corresponds to each piece of first information. It should be understood that, both the first information and the third information are information of different types collected in a real environment. Optionally, the first device generates a latent space. It should be understood that, the latent space (latent space) is random noise. In this application, Gaussian distribution random vectors are used. The first device uses one piece of first information and the third information corresponding to the first information as one training sample, and marks the training sample as a first training sample, so that a plurality of first training samples may be obtained. Optionally, each first training sample may further include one piece of data randomly selected from the latent space. The plurality of first training samples are different from each other. It should be understood that a quantity of the first training samples is equal to a quantity of the first information.

For example, the first information collected by the first device may include an environmental image obtained by the first device by photographing by using a camera and geographical location information obtained by the first device by using a global positioning system, and the third information collected by the first device may be a channel impulse response measured by the first device in a current environment and geographical location.

In an example, the first information is an environmental image (for example, a top view) of an environment in which the first device is located and geographical location information (for example, a location obtained by a global positioning system) of the first device. The third information is a power delay spectrum of a measurement channel when the first device is located in the environment and geographical location. The first type corresponding to the first information is a user profile and scenario type, and the second type corresponding to the third information is a wireless channel characteristic type.

In another example, the first information is an environmental image (for example, a top view) of an environment in which the first device is located and a channel impulse response of a measurement channel when the first device is located in the environment and geographical location. The third information is real geographical location information (for example, a location obtained by a global positioning system) of the first device in the environment. The first type corresponding to the first information is a wireless channel characteristic and scenario type, and the second type corresponding to the third information is a user profile type.

In another example, the first information is an environmental image (for example, a top view) of an environment in which the first device is located and a channel impulse response of a measurement channel when the first device is located in the environment and geographical location, and the third information is people flow distribution of a current cell. Alternatively, the first information is current channel information of the first device, and the third information is heart rate distribution of a user wearing the first device. Alternatively, the first information is channel information measured by the first device (the first device is an in-vehicle terminal), and the third information is distance distribution between a vehicle and an obstacle. The first type corresponding to the first information is a wireless channel characteristic type, and the second type corresponding to the third information is a user profile type or a scenario type.

S202. The first device trains a first neural network by using a plurality of first training samples, to obtain a first generator, where the first generator is a trained first neural network.

Optionally, the first device uses the first information in the first training sample and data randomly selected from the latent space as an input of the first neural network; uses an output of the first neural network and the third information in the first training sample as an input of a first loss function; and calculates a gradient of the first neural network by using an output of the first loss function, and trains the first neural network by using a gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value. The trained first neural network is denoted as a first generator. In other words, a structure of the first generator is the same as a structure of the trained first neural network, and a weight value and an offset value of the first generator are also the same as a weight value and an offset value of the trained first neural network.

Optionally, the first device trains a first neural network (that is, a generator in a GAN) and a second neural network (that is, a discriminator in the GAN) by using the plurality of first training samples, to separately obtain a first generator and a first discriminator. The trained first neural network is denoted as a first generator, and the trained second neural network is denoted as a first discriminator. In other words, a structure, a weight value, and an offset value of the first generator are the same as a structure, a weight value, and an offset value of the trained first neural network, and a structure, a weight value, and an offset value of the first discriminator are the same as a structure, a weight value, and an offset value of the trained second neural network. In a training process, the first information in the first training sample and data randomly selected from a latent space are used as an input of the first neural network; an output of the first neural network and the first information are inputted into the second neural network, to obtain a first output; the first information and the third information corresponding to the first information are inputted into the second neural network, to obtain a second output, where the output of the first neural network and the first information, and the first information and the third information corresponding to the first information are inputted into the second neural network at different times; the first output and a first label (that is, a fake value label) are inputted into a second loss function, to obtain an output of the second loss function; the second output and a second label (that is, a first real value label) are inputted into a third loss function, to obtain an output of the third loss function; the first output and a third label (that is, a second real value label, which may be the same as or different from the first real value label) are inputted into a fourth loss function, to obtain an output of the fourth loss function; a gradient of the second neural network is calculated by using the output of the second loss function and the output of the third loss function, and the second neural network is trained by using a gradient descent algorithm; and a gradient of the first neural network is calculated by using the output of the fourth loss function, and the first neural network is trained by using the gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value. The trained first neural network is denoted as a first generator, and the trained second neural network is denoted as a first discriminator.

Optionally, when any one of the following cases or a similar case occurs, the first generator needs to be retrained: a. Scenario information of the first device when the first device initially trains a generator changes. For example, when the first device is located at a same geographical location, a surrounding environment of the first device changes. For example, the surrounding environment was previously an open outdoor environment but now has many buildings, or for example, the surrounding environment was previously a lawn but now has many tall trees planted. b. A volume of data used when the first device initially trains a generator is small. c. A neural network structure used when the first device initially trains a generator changes, where the neural network structure is a connection relationship between neurons. d. Parameters of the device when the device initially trains a generator are greatly different from those of a current device. For example, device parameters of two devices differ greatly. For example, one device has four antennas, and the other device has 64 antennas. e. A behavior of the first device when the first device initially trains a generator is different from a behavior of a current device. For example, one device is a walking speed, and the other device is a cycling speed. In other words, a change of one or more of a scenario, a user profile, or a wireless channel characteristic causes an output obtained after information of these types is inputted into the generator to deviate from real distribution, and the generator needs to be retrained.

In an implementation, when the first device finds that the first generator needs to be retrained, or receives a request, for example, a first update indication, from the second device for retraining the first generator, the first device may re-obtain a plurality of pieces of seventh information of the first type and eighth information of the second type that corresponds to each piece of seventh information, and optionally obtain a latent space. The first device retrains the first generator by using the plurality of pieces of seventh information, the eighth information corresponding to each piece of seventh information, and the latent space, and sends the retrained first generator to the second device through signaling. It should be understood that the seventh information herein is equivalent to the first information, and the eighth information is equivalent to the third information.

The first device may choose, based on specific content of the first update indication or pre-setting of the first device, to retrain the first generator from the very beginning, or continue to train the first generator based on the original first generator. The first device may alternatively choose, based on specific content of the first update indication, to train the first generator by using historical data, or collect new data to train the first generator.

It can be learned that, in embodiments of this application, collected information is used to train a generation model, so that the generation model can generate (or infer or predict) another part of information by using a part of information, thereby implementing communication-assisted detection and detection-assisted communication, and causing a communication network to develop towards a more intelligent and adaptive direction.

For ease of understanding the method for training the first neural network, the following provides descriptions by using an example. In the following example, the first information is an environmental image of an environment in which the first device is located and geographical location information of the first device, and the third information is a real channel (that is, a channel impulse response of a measurement channel when the first device is located in the environment and geographical location).

In an example, the first neural network is a generator in a generative adversarial network, and the second neural network is a discriminator in the generative adversarial network.

A first iteration is started (the following steps are repeated in each iteration):

(1) Load a data batch (batch) from a data set. The data batch includes batch_size (a data batch size) samples. Each sample includes one piece of first information and a real channel (that is, third information) corresponding to the first information, and the sample is equivalent to a real value (real). The first information includes an environmental image and a user location (the user location herein is the geographical location of the first device).
(2) Input the real value (that is, the first information and the real channel) into the second neural network (or the discriminator D in the adversarial network is generated), to output outD_real (that is, the second output is obtained).
(3) Calculate a loss value lossD_real based on outD_real (that is, the second output) and a real value label (that is, the second label), where the loss function (that is, the third loss function) uses a cross entropy, and the real value label is 1.
(4) Calculate a gradient based on the returned lossD_real (that is, the output of the third loss function).
(5) Generate batch_size Gaussian distribution random vectors z (that is, the latent space).
(6) Replace the real channel in the sample with z to form a first fake sample. In other words, the first fake sample includes the first information and the Gaussian distribution random vectors.
(7) Input the first fake sample into the first neural network (or the generator G in the generative adversarial network), to output a channel fake value (fake).
(8) Replace the real channel in the sample with the fake value outputted by the first neural network, to form a second fake sample, and input the second fake sample into the second neural network, to output outD_fake is output (that is, obtain the first output). In other words, the second fake sample includes the output of the first neural network and the first information.
(9) Calculate a loss value lossD_fake based on outD_fake (that is, the first output) and a fake value label (that is, the first label), where the loss function (that is, the second loss function) uses a cross entropy, and the fake value label is 0.
(10) Calculate a gradient based on the returned lossD_fake (that is, the output of the second loss function).
(11) Use an Adam optimizer to update parameters (herein are a weight value and an offset value) of the second neural network based on the gradient values calculated in step (4) and step (10).

(12) Input the second fake sample into the second neural network, to output outDG.

(13) Calculate a loss value lossDG (that is, the output of the fourth loss function) based on outDG and a real value label (that is, the third label), where the loss function uses a cross entropy, and the real value label is 1.

(14) Calculate a mean absolute error based on the second fake sample and the sample to obtain 11loss.

(15) lossMix = lossDG + 11loss.

(16) Calculate a gradient based on the returned lossMix.

(17) Use the Adam optimizer to update parameters (herein are a weight value and an offset value) of the first neural network and the second neural network based on the gradient value calculated in step (16).

The loss function (loss function) is also referred to as a cost function or an objective function, and represents outputting a target value after calculation is performed on an input, and a training objective may be to minimize the target value or maximize the target value. The loss function may be a formula. For example, the loss function may be a mean square error formula, to calculate a mean square error for two inputted groups of values.

The foregoing calculating a gradient based on a loss means that, to cause training to be performed in a better direction, a loss function generally needs to be minimized, and a direction in which the loss function decreases to a maximum extent may be found by calculating the gradient of the loss function, so as to achieve the objective of minimizing the loss function more quickly. Updating a neural network parameter along this gradient direction is subtracting a derivative of a learning rate multiplied by the loss function (refer to the foregoing formulas (1-6)) from an original neural network parameter. The learning rate may be preset and represent a decreasing speed along the gradient direction. A smaller value indicates a slower decreasing speed.

It should be understood that the foregoing example describes only a single iteration process. In an actual training process, iteration may be performed for a plurality of times until the training reaches a preset condition, and the iteration is stopped and the training ends. In this case, it indicates that the training is completed.

It should be further understood that, a training procedure of the third neural network in the second device is the same as the foregoing training procedure of the first neural network, and a difference lies in that a real channel of each sample in the data set is generated by the first generator based on the first information.

In an optional embodiment, the generator includes a neural network, the neural network has a plurality of layers, each layer includes a plurality of neurons, a connection between neurons has a weight value, and each neuron includes an offset value. Therefore, to reduce overheads of transmitting the generator, in a possible implementation, a neural network corresponding to the generator may keep a weight value and an offset value of at least one layer unchanged during training, and only train a layer whose weight value and offset value are not fixed. For example, scenario information of a plurality of communication devices in a same office is very close to each other. If the communication devices are completely trained separately, large computing resources and spectrum resources are consumed. In this case, all communication devices may use a pre-trained neural network that is prestored in the communication devices and that is suitable for the scenario, perform fine adjustment based on the pre-trained neural network, and change some weight values and offset values of the pre-trained neural network by inputting information collected by the communication devices. In this way, each communication device only needs to share some weight values and offset values that are changed after fine adjustment, and does not need to send all weight values and offset values.

In another possible implementation, if a communication device does not prestore a pre-trained neural network suitable for a current scenario, the second device may send, to the current communication device, an all-scenario generator (for example, the foregoing second generator) or a generator historically trained by another communication device in the same scenario. During sending, only some weight values and offset values of the generator may be sent, and the communication device trains remaining weight values and offset values.

For example, it is assumed that the generator is a five-layer neural network structure, and the second device sends the first three layers to all communication devices. After receiving the first three layers, each communication device fixes the first three layers, trains only the last two layers, and sends weight values and offset values of the trained last two layers to the second device.

It can be learned that, during training, weight values and offset values of some layers are fixed, and weight values and offset values of only the other layers are trained, so that fixed layer parts of generators of all communication devices can be unified, and uplink sending overheads can be further reduced.

Optionally, each time the generator is updated, only a weight value and an offset value of one layer may be updated. For example, when determining that the generator needs to be updated, the communication device continues to train the generator by using continuously collected data, but weight values and offset values of the first four layers are fixed, and only a weight value and an offset value of the last one layer are trained. After training is completed, only the weight value and the offset value of the last one layer of the generator need to be sent to the second device, and the weight values and the offset values of the first four layers do not need to be repeatedly sent. In this way, air interface overheads can be greatly reduced.

**Embodiment 3**

Embodiment 3 of this application mainly describes a method for training the third neural network or the third neural network and a fourth neural network in the second device.

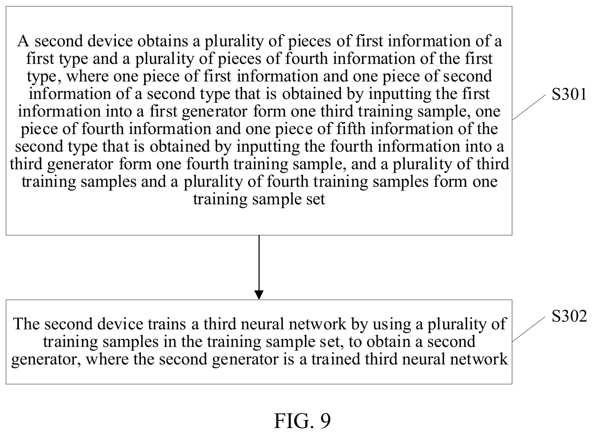

Refer to FIG. 9. FIG. 9 is a schematic flowchart of another neural network training method according to an embodiment of this application. The neural network training method may be applied to a network device, and specifically may be applied to the second device. As shown in FIG. 9, the neural network training method includes but is not limited to the following steps.

S301. The second device obtains a plurality of pieces of first information of a first type and a plurality of pieces of fourth information of the first type. One piece of first information and one piece of second information of a second type that is obtained by inputting the first information into a first generator form one third training sample, one piece of fourth information and one piece of fifth information of the second type that is obtained by inputting the fourth information into a third generator form one fourth training sample, and a plurality of third training samples and a plurality of fourth training samples form one training sample set.

Specifically, the second device obtains a plurality of pieces of first information of the first type and a plurality of pieces of fourth information of the first type. For an obtaining manner, refer to corresponding descriptions in Embodiment 1. Details are not described herein again. It should be understood that, both the first information and the fourth information are different information of a same type collected in a real environment. Optionally, the second device generates a latent space. It should be understood that, the latent space (latent space) is random noise. In this application, Gaussian distribution random vectors are used. The second device combines one piece of first information and one piece of second information of the second type that is obtained by inputting the first information into the first generator into one third training sample, to obtain a plurality of third training samples; and combines one piece of fourth information and one piece of fifth information of the second type that is obtained by inputting the fourth information into the third generator into one fourth training sample, to obtain a plurality of fourth training samples. The second device uses the plurality of third training samples and the plurality of fourth training samples as one training sample set. Optionally, each third training sample further includes one piece of information randomly selected from the latent space, and each fourth training sample further includes one piece of information randomly selected from the latent space. Each training sample in the training sample set is different from each other.

In an example, the first information is an environmental image (for example, a top view) of an environment in which the first device is located and geographical location information (for example, a location obtained by a global positioning system) of the first device. The second information is a channel power delay spectrum that is outputted/generated by the first generator based on the inputted environmental image and geographical location information. Similarly, the fourth information is an environmental image of an environment in which the third device is located and geographical location information of the third device. The fifth information is a channel power delay spectrum that is outputted/generated by the third generator based on the inputted environmental image and geographical location information. The first type corresponding to the first information and the fourth information is a user profile and scenario type, and the second type corresponding to the second information and the fifth information is a wireless channel characteristic type.

In another example, the first information is an environmental image (for example, a top view) of an environment in which the first device is located and a channel impulse response of a measurement channel when the first device is located in the environment and geographical location. The second information is geographic location information of the first device that is outputted/generated by the first generator based on the inputted environmental image and the channel impulse response of the measurement channel. Similarly, the fourth information is an environmental image of an environment in which the third device is located and a channel impulse response of a measurement channel when the third device is located in the environment and geographical location. The fifth information is geographic location information of the third device that is outputted/generated by the third generator based on the inputted environmental image and the channel impulse response of the measurement channel. The first type corresponding to the first information and the fourth information is a wireless channel characteristic and scenario type, and the second type corresponding to the second information and the fifth information is a user profile type.

In still another example, the first information is an environmental image of an environment in which the first device is located and a channel impulse response of a measurement channel when the first device is located in the environment and geographical location, and the second information is people flow distribution generated by the first generator based on the inputted environmental image. Similarly, the fourth information is an environmental image of an environment in which the third device is located and a channel impulse response of a measurement channel when the third device is located in the environment and geographical location, and the fifth information is people flow distribution generated by the third generator based on the inputted environmental image. Alternatively, the first information is current channel information of the first device, and the second information is heart rate distribution of a user wearing the first device that is generated by the first generator based on the inputted channel information. Similarly, the fourth information is current channel information of the third device, and the fifth information is heart rate distribution of a user wearing the third device that is generated by the third generator based on the inputted channel information. Alternatively, the first information is channel information measured by the first device (the first device is an in-vehicle terminal), and the second information is distance distribution between a vehicle and an obstacle that is outputted by the first generator based on the inputted channel information. Similarly, the fourth information is channel information measured by the third device (the third device is also an in-vehicle terminal), and the fifth information is distance distribution between a vehicle and an obstacle that is outputted by the third generator based on the inputted channel information. The first type corresponding to the first information and the fourth information is a wireless channel characteristic type, and the second type corresponding to the second information and the fifth information is a user profile type or a scenario type.

S302. The second device trains a third neural network by using a plurality of training samples in the training sample set, to obtain a second generator, where the second generator is a trained third neural network.

Specifically, the second device uses the first information/the fourth information of each training sample in the training sample set and data randomly selected from the latent space as an input of the third neural network; uses an output of the third neural network and the second information obtained by inputting the first information into the first generator/the fifth information obtained by inputting the fourth information into the third generator as an input of a fifth loss function; and calculates a gradient of the third neural network by using an output of the fifth loss function, and trains the third neural network by using a gradient descent algorithm. When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value. The trained third neural network is denoted as a second generator. In other words, a structure of the second generator is the same as a structure of the trained third neural network, and a weight value and an offset value of the second generator are also the same as a weight value and an offset value of the trained third neural network.

Optionally, the second device trains a third neural network (that is, a generator in a GAN) and a fourth neural network (that is, a discriminator in the GAN) by using the plurality of training samples in the training sample set, to separately obtain a second generator and a second discriminator. The trained third neural network is denoted as a second generator, and the trained fourth neural network is denoted as a second discriminator. In other words, a structure, a weight value, and an offset value of the second generator are the same as a structure, a weight value, and an offset value of the trained third neural network, and a structure, a weight value, and an offset value of the second discriminator are the same as a structure, a weight value, and an offset value of the trained fourth neural network.

In a training process, a single iteration process is used as an example. It is assumed that a third training sample is obtained from the training sample set in this iteration: the first information of each training sample in the training sample set and data randomly selected from the latent space are used as an input of the third neural network; an output of the third neural network and the first information are inputted into the fourth neural network, to obtain a third output; the first information and the second information that is obtained by inputting the first information into the first generator are inputted into the fourth neural network, to obtain a fourth output, where the output of the third neural network and the first information, and the first information and the second information that is obtained by inputting the first information into the first generator are inputted into the fourth neural network at different times; the third output and a fourth label (that is, a fake value label) are inputted into a sixth loss function, to obtain an output of the sixth loss function; the fourth output and a fifth label (that is, a real value label 1) are inputted into a seventh loss function, to obtain an output of the seventh loss function; the third output and a sixth label (that is, a real value label 2, which may be the same as or different from the real value label 1) are inputted into an eighth loss function, to obtain an output of the eighth loss function; a gradient of the fourth neural network is calculated by using the output of the sixth loss function and the output of the seventh loss function, and the fourth neural network is trained by using a gradient descent algorithm; and a gradient of the third neural network is calculated by using the output of the eighth loss function, and the third neural network is trained by using the gradient descent algorithm.

It should be understood that, in the training process, if a fourth training sample is obtained from the training sample set in a next iteration, the first information in the foregoing iteration process is replaced with the fourth information, the first generator is replaced with the third generator, and the second information is replaced with the fifth information.

When the training reaches a preset condition, the training ends. In this case, the training is completed. The preset condition may be one or more of the following: a value of a loss function reaches a preset value, a total quantity of training samples used for training reaches a preset value, a training time reaches a preset value, or a quantity of training times reaches a preset value. The trained third neural network is denoted as a second generator, and the trained fourth neural network is denoted as a second discriminator.

Optionally, the second generator is configured to support generating second information of the second type based on the first information and generating fifth information of the second type based on the fourth information.

It can be learned that because the training sample set of the third neural network includes both the information collected by the first device and the information collected by the third device, the collected input and output of each generator may be mapped into a unified model through training of the third neural network. The trained second generator has both a distribution simulation capability of the first generator for the third information and a distribution simulation capability of the third generator for the sixth information.

For ease of understanding the method for training the third neural network, the following provides descriptions by using an example. In the following example, the first information is an environmental image of an environment in which the first device is located and geographical location information of the first device, the second information is a channel impulse response (or referred to as a fake channel) obtained by inputting the first information into the first generator, the fourth information is an environmental image of an environment in which the third device is located and geographical location information of the third device, and the fifth information is a channel impulse response (or referred to as a fake channel) obtained by inputting the fourth information into the third generator.

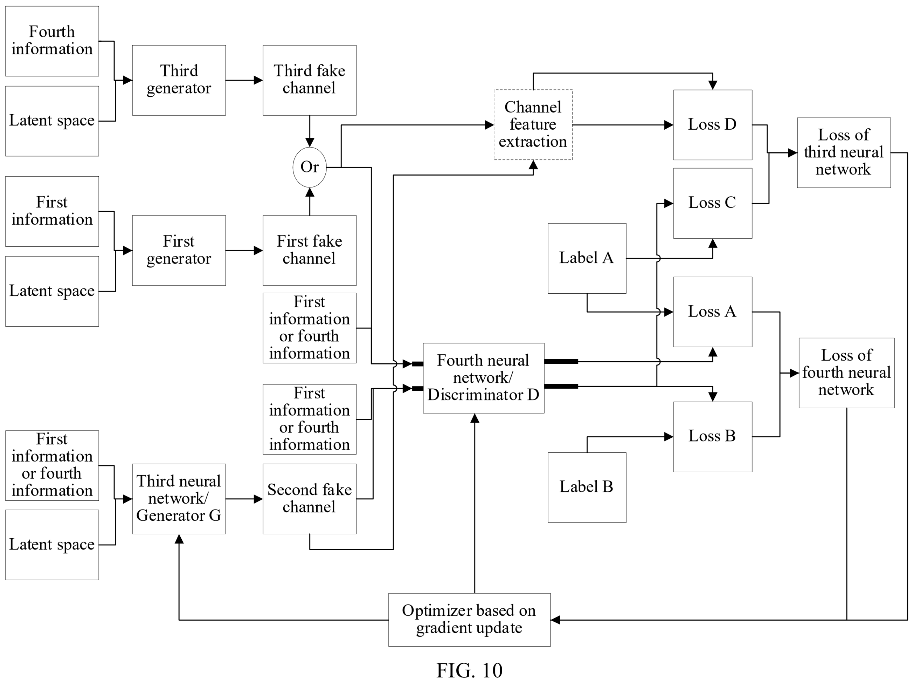

In an example, the third neural network is a generator in a generative adversarial network, and the fourth neural network is a discriminator in the generative adversarial network. Refer to FIG. 10. FIG. 10 is a training block diagram of a third neural network according to an embodiment of this application. The second device receives a plurality of pieces of first information and a first generator from the first device, and receives a plurality of pieces of fourth information and a third generator from the third device. As shown in FIG. 10, the following steps are repeated in each iteration:

(1) Input the first information and one piece of data randomly selected from a latent space into the first generator, to output a first fake channel (that is, the second information); or input the fourth information and one piece of data randomly selected from a latent space into the third generator, to output a third fake channel (that is, the fifth information).

(2) Input the first information (or the fourth information) and one piece of data randomly selected from the latent space into the third neural network (a generator G in a generative adversarial network), to output a second fake channel.

(3) Input the first fake channel (or the third fake channel) and the first information (or the fourth information) into the fourth neural network (a discriminator D in the generative adversarial network), to output a first discrimination result (that is, the fourth output).

(4) Input the second fake channel and the first information (or the fourth information) into the fourth neural network, to output a second discrimination result (that is, the third output).

(5) Input the first discrimination result (that is, the fourth output) and a label A (that is, the fifth label, or the real value label 1) into a loss function A (that is, the seventh loss function), to obtain a loss A (that is, the output of the seventh loss function). The loss function A is a cross entropy.

(6) Input the second discrimination result (that is, the third output) and a label B (that is, the fourth label, or the fake value label) into a loss function B (that is, the sixth loss function), to obtain a loss B (that is, the output of the sixth loss function). The loss function B is a cross entropy.

(7) Input the second discrimination result (that is, the third output) and a label C (that is, the sixth label, or the real value label 2) into a loss function C (that is, the eighth loss function), to obtain a loss C (that is, the output of the eighth loss function). The loss function C is a cross entropy.

(8) Input the first fake channel (or the third fake channel) and the second fake channel into a loss function D, to obtain a loss D. The loss function D is a cross entropy.

(9) Add the loss A and the loss B to obtain a loss of the fourth neural network.

(10) Add the loss C and the loss D to obtain a loss of the third neural network.

(11) Calculate a first gradient based on the loss of the fourth neural network, and update a fourth neural network parameter (herein referred to as a weight value and an offset value) by using an optimizer (any optimizer based on random gradient descent, such as an Adam optimizer) and the first gradient.

(12) Calculate a second gradient based on the loss of the third neural network, and update a third neural network parameter (herein referred to as a weight value and an offset value) by using an optimizer (any optimizer based on random gradient descent, such as an Adam optimizer) and the second gradient.

Optionally, when the loss C is calculated in the foregoing step (7), the second discrimination result and the label C may alternatively be inputted into the loss function C, to obtain the loss C. The label A is 1, the label B is 0, and the label C is -1.

When the loss D is calculated in the foregoing step (8), the first fake channel (or the third fake channel) and the second fake channel may be first inputted into a channel feature extractor to separately obtain a first fake channel feature (or a third fake channel feature) and a second fake channel feature, and then the first fake channel feature (or the third fake channel feature) and the second fake channel feature are inputted into the loss function D, to obtain the loss D. The channel feature extractor may alternatively be a neural network.

The foregoing step (10) may alternatively be: directly using the loss C as the loss of the third neural network.

It should be understood that the foregoing example describes only a single iteration process. In an actual training process, iteration may be performed for a plurality of times until the training reaches a preset condition, and the iteration is stopped and the training ends. In this case, it indicates that the training is completed.

It should be further understood that, each iteration is started from randomly selecting one piece of information from the plurality of pieces of first information and the plurality of pieces of fourth information. If the first information is selected, the first information is correspondingly used in step (1) to step (12); and if the fourth information is selected, the fourth information is correspondingly used in step (1) to step (12).

It can be learned that, during training, the second device may not need to use a real measurement channel as a real value input of a discriminator, but generate, by using the first generator and the third generator that are trained by the first device and the third device, a fake channel that is extremely similar to a real channel as a real value input. This can reduce overheads of sending a real measurement channel on an air interface, that is, sending a megabyte (Megabyte, MB) level generator instead of sending a gigabyte (Gigabyte, GB) level real measurement channel.

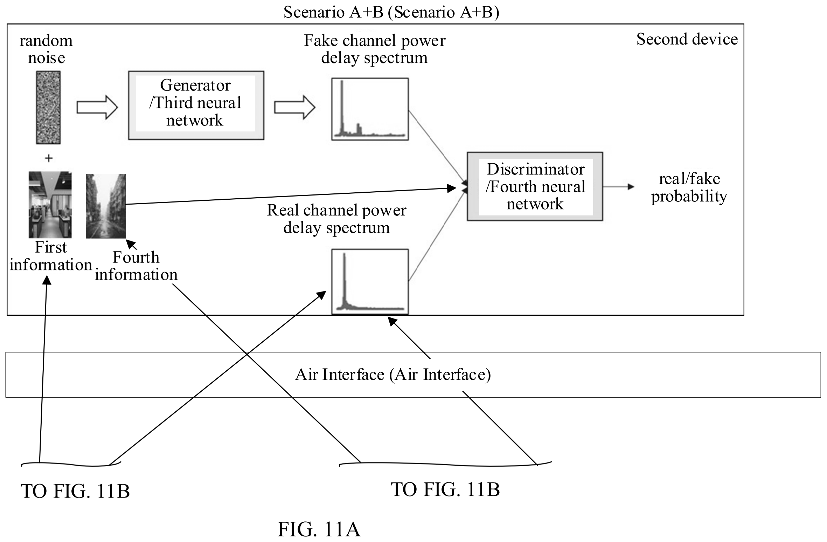

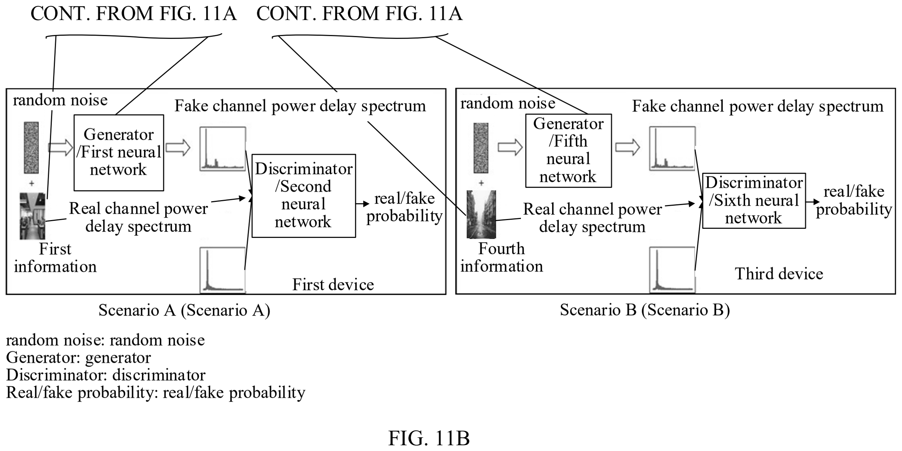

In an example with reference to Embodiment 2 and Embodiment 3, an input and an output when a neural network is trained in different devices are described. Refer to FIG. 11A and FIG. 11B. FIG. 11A and FIG. 11B are schematic diagrams of an input and an output of a neural network in different devices according to an embodiment of this application. As shown in FIG. 11A and FIG. 11B, the first information is an environmental image (or referred to as a first environmental image) of an environment in which the first device is located and geographical location information (or referred to as a first user location) of the first device, and the fourth information is an environmental image (or referred to as a third environmental image) of an environment in which the third device is located and geographical location information (or referred to as a third user location) of the third device. The third information is a real channel power delay spectrum (that is, a power delay spectrum of a measurement channel when the first device is located in the environment and geographical location), and the sixth information is also a real channel power delay spectrum (that is, a channel power delay spectrum of a measurement channel when the third device is located in the environment and geographical location). As shown in FIG. 11A and FIG. 11B, the first device and the third device may be communication devices, and the second device may be an access network device. Therefore, communication transmission between the first device and the second device needs to pass through an air interface (air interface), and communication transmission between the third device and the second device are also similar.

In the first device, an input of the generator (the first neural network) is random noise (that is, a latent space) and the first information, an output of the generator (the first neural network) is a fake channel power delay spectrum, and the first information includes the first environmental image and the first user location. A real value input of the discriminator (the second neural network) is the first information and the third information corresponding to the first information, and a fake value input is the output of the generator (the first neural network) and the first information. The third information is a real channel power delay spectrum. The generator (the first neural network) and the discriminator (the second neural network) are trained, and the trained generator (the first neural network) and the trained discriminator (the second neural network) are respectively denoted as a first generator and a first discriminator.

In the third device, an input of the generator (the fifth neural network) is random noise (that is, a latent space) and the fourth information, an output of the generator (the fifth neural network) is a fake channel power delay spectrum, and the fourth information includes the third environmental image and the third user location. A real value input of the discriminator (the sixth neural network) is the fourth information and the sixth information corresponding to the fourth information, and a fake value input is the output of the generator (the fifth neural network) and the fourth information. The sixth information is a real channel power delay spectrum. The generator (the fifth neural network) and the discriminator (the sixth neural network) are trained, and the trained generator (the fifth neural network) and the trained discriminator (the sixth neural network) are respectively denoted as a third generator and a third discriminator.

In the second device, an input of the generator (the third neural network) is random noise and the first information from the first device or the fourth information from the third device, and an output is a fake channel power delay spectrum. The first information includes the first environmental image and the first user location, and the fourth information includes the third environmental image and the third user location. A real value input of the discriminator (the fourth neural network) is the first information and the second information obtained by inputting the first information into the first generator, or a real value input of the discriminator (the fourth neural network) is the fourth information and the fifth information obtained by inputting the fourth information into the third generator, and a fake value input of the discriminator (the fourth neural network) is the output of the generator (the third neural network) and the first information, or a fake value input is the output of the generator (the third neural network) and the fourth information. The second information is a channel power delay spectrum outputted by the first generator based on the inputted first information, and the fifth information is a channel power delay spectrum outputted by the third generator based on the inputted fourth information. The generator (the third neural network) and the discriminator (the fourth neural network) are trained, and the trained generator (the third neural network) and the trained discriminator (the fifth neural network) are respectively denoted as a second generator and a second discriminator.

Signaling interaction between the first device, the second device, and the third device is as follows: The first device sends the first generator to the second device, and further sends the first information to the second device. The third device sends the third generator to the second device, and further sends the fourth information to the second device. The second device sends the second generator to the first device and the third device, further sends the fourth information from the third device to the first device, and sends the first information from the first device to the third device. In other words, the second device shares an all-scenario model (that is, the second generator).

It can be learned from FIG. 11A and FIG. 11B that the first information/the fourth information needs to be inputted into the generator and the discriminator, that is, the input and the output of the generator correspond to each other. In addition, in this application, a trained generator (the first generator or the third generator) is used to provide a real value for a discriminator (the fourth neural network) that is being trained, so that overheads of transmitting a real measurement channel by a communication network can be reduced as much as possible in cooperation with the communication network.

It should be understood that the plus sign in FIG. 11A does not represent value addition, but refers to a splicing operation. That is, the first device splices the first information and the random noise and uses the spliced information as an input of the generator; and the third device splices the fourth signal and the random noise and uses the spliced information as an input of another generator.

It can be learned that, in this application, the first information/the fourth information is added as a condition input, and the first information/the fourth information not only needs to be inputted into the generator as a condition, but also needs to be inputted into the discriminator as a condition. An input of the discriminator is a combination of the fake channel power delay spectrum and the first information/the fourth information, or a combination of the real channel power delay spectrum and the first information/the fourth information. An effect that can be implemented is that the generator has a condition input, and when a scenario is given, the generator outputs a channel corresponding to the scenario, provided that the generator has completed training in a corresponding scenario or a similar scenario.

The foregoing content describes in detail the method in this application. To better implement the foregoing solutions in embodiments of this application, an embodiment of this application further provides a corresponding apparatus or device.

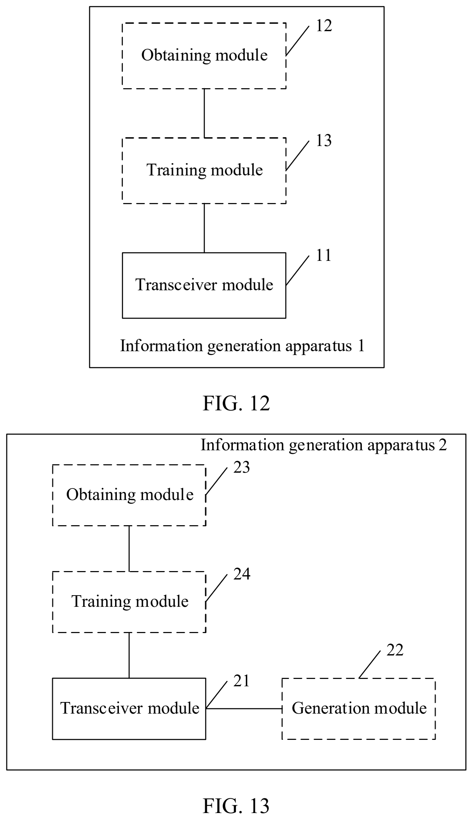

Refer to FIG. 12. FIG. 12 is a schematic diagram of a structure of an information generation apparatus according to an embodiment of this application. The information generation apparatus may be a second device or a chip or a circuit that may be disposed in the second device. As shown in FIG. 12, the information generation apparatus 1 may include: a transceiver module 11, configured to receive a first message and a third message, where the first message indicates all or a part of a first generator and optionally further indicates an input supported by the first generator, the third message indicates all or a part of a third generator and optionally further indicates an input supported by the third generator, the input supported by the first generator includes first information of a first type, the input supported by the third generator includes fourth information of the first type, and the first generator and the third generator are configured to train a neural network corresponding to a second generator. The transceiver module 11 is further configured to send a second message to a first device, where the second message indicates all or a part of the second generator and an input supported by the second generator, the input supported by the second generator includes the first information of the first type and the fourth information of the first type, the fourth information is different from the first information, and the first generator, the third generator, and the second generator are different from each other.

Optionally, the input supported by the first generator is information of the first type, and an output is information of a second type. The input supported by the second generator is information of the first type, and an output is information of the second type. The input supported by the third generator is information of the first type, and an output is information of the second type. The first type is a scenario type, and the second type is a wireless channel characteristic type; the first type is a user profile and scenario type, and the second type is a wireless channel characteristic type; the first type is a wireless channel characteristic type, and the second type is a user profile type; the first type is a wireless channel characteristic and scenario type, and the second type is a user profile type; the first type is a wireless channel characteristic type, and the second type is a scenario type; or the first type is a wireless channel characteristic and user profile type, and the second type is a scenario type.

Optionally, the information generation apparatus 1 further includes an obtaining module 12 and a training module 13. The obtaining module 12 is configured to obtain a plurality of pieces of first information of the first type and a plurality of pieces of fourth information of the first type. The training module 13 is configured to train a third neural network by using a plurality of training samples in a training sample set, to obtain the second generator, where the second generator is a trained third neural network. One piece of first information and one piece of second information of the second type that is obtained by inputting the first information into the first generator form one third training sample, one piece of fourth information and one piece of fifth information of the second type that is obtained by inputting the fourth information into the third generator form one fourth training sample, and a plurality of third training samples and a plurality of fourth training samples form one training sample set. The second generator is separately configured to support generating second information of the second type based on the first information and generating fifth information of the second type based on the fourth information.

Optionally, the information generation apparatus 1 further includes an obtaining module 12 and a training module 13. The obtaining module 12 is configured to obtain a plurality of pieces of first information of the first type and a plurality of pieces of fourth information of the first type. The training module 13 is configured to train a third neural network and a fourth neural network by using a plurality of training samples in a training sample set, to separately obtain the second generator and a second discriminator, where the second generator is a trained third neural network, and the second discriminator is a trained fourth neural network. One piece of first information and one piece of second information of the second type that is obtained by inputting the first information into the first generator form one third training sample, one piece of fourth information and one piece of fifth information of the second type that is obtained by inputting the fourth information into the third generator form one fourth training sample, and a plurality of third training samples and a plurality of fourth training samples form one training sample set. The third neural network is a generator in a generative adversarial network, and the fourth neural network is a discriminator in the generative adversarial network. The second generator is separately configured to support generating second information of the second type based on the first information and generating fifth information of the second type based on the fourth information.

Optionally, each third training sample further includes one piece of information randomly selected from a latent space. Each fourth training sample further includes one piece of information randomly selected from the latent space.

Optionally, that the first message indicates the input supported by the first generator includes: the first message includes one or more of the first information, an identifier of the first information, the first type, and an identifier of the first type.

Optionally, that the third message indicates the input supported by the third generator includes: the third message includes one or more of the fourth information, an identifier of the fourth information, the first type, and the identifier of the first type.

Optionally, that the second message indicates the input supported by the second generator includes: the second message includes one or more of the fourth information, the identifier of the fourth information, the first type, and the identifier of the first type.

Optionally, the wireless channel characteristic type includes one or more of the following subtypes: a channel impulse response information subtype and a channel state information subtype.

Optionally, the scenario type includes one or more of the following types: an environment description information subtype and an environment perception information subtype.

Optionally, the user profile type includes one or more of the following subtypes: a user parameter subtype and a user behavior information subtype.

Optionally, the first information is an environmental image of an environment in which the first device is located and geographical location information of the first device, and the second information is a channel impulse response generated by inputting the first information into the first generator. The fourth information is an environmental image of an environment in which a third device is located and geographical location information of the third device, and the fifth information is a channel impulse response generated by inputting the fourth information into the third generator.

Optionally, the first information is an environmental image of an environment in which the first device is located and a channel impulse response of a measurement channel when the first device is located in the environment and geographical location, and the second information is geographical location information of the first device that is generated by inputting the first information into the first generator. The fourth information is an environmental image of an environment in which a third device is located and a channel impulse response of a measurement channel when the third device is located in the environment and geographical location, and the fifth information is geographical location information of the third device that is generated by inputting the fourth information into the third generator.

Optionally, the first message further includes an identifier of the first generator, and the identifier of the first generator corresponds to the input supported by the first generator. The third message further includes an identifier of the third generator, and the identifier of the third generator corresponds to the input supported by the third generator.

Optionally, the transceiver module 11 is further configured to send a first update indication to the first device, where the first update indication indicates the first device to retrain the first generator; and the transceiver module 11 is further configured to receive a retrained first generator sent by the first device.

Optionally, the first message indicates that all of the first generator includes a structure, a weight value, and an offset value of the first generator. The third message indicates that all of the third generator includes a structure, a weight value, and an offset value of the third generator.

Optionally, the first message indicates that the part of the first generator includes a structure of the first generator and weight values and offset values of some layers. The third message indicates that the part of the third generator includes a structure of the third generator and weight values and offset values of some layers.

The obtaining module 12 and the training module 13 may be integrated into one module, for example, a processing module.

In a specific implementation, for an implementation of each module or unit, refer to corresponding descriptions of the second device in Embodiment 1 or 3, and the method and the function performed by the second device in Embodiment 1 or 3 are performed.

Refer to FIG. 13. FIG. 13 is a schematic diagram of another structure of an information generation apparatus according to an embodiment of this application. The information generation apparatus may be a first device or a third device, or a chip or a circuit in the first device or the third device. As shown in FIG. 13, the information generation apparatus 2 may include a transceiver module 21.

In a design, the transceiver module 21 is configured to send a first message to a second device, where the first message indicates all or a part of a first generator and optionally further indicates an input supported by the first generator, the input supported by the first generator includes first information of a first type, and the first generator is configured to train a neural network corresponding to a second generator. The transceiver module 21 is further configured to receive a second message from the second device, where the second message indicates all or a part of the second generator and an input supported by the second generator, the input supported by the second generator includes the first information of the first type and fourth information of the first type, the fourth information is different from the first information, and the first generator is different from the second generator.

Optionally, the information generation apparatus 2 further includes a generation module 22. The generation module 22 is configured to input, based on the input supported by the second generator, the fourth information of the first type into the second generator to generate fifth information of a second type.

Optionally, the input supported by the first generator is information of the first type, and an output is information of the second type. The input supported by the second generator is information of the first type, and an output is information of the second type. The first type is a scenario type, and the second type is a wireless channel characteristic type; the first type is a user profile and scenario type, and the second type is a wireless channel characteristic type; the first type is a wireless channel characteristic type, and the second type is a user profile type; the first type is a wireless channel characteristic and scenario type, and the second type is a user profile type; the first type is a wireless channel characteristic type, and the second type is a scenario type; or the first type is a wireless channel characteristic and user profile type, and the second type is a scenario type.

Optionally, the information generation apparatus 2 further includes an obtaining module 23 and a training module 24. The obtaining module 23 is configured to obtain a plurality of pieces of first information of the first type and third information of the second type that corresponds to each piece of first information, where one piece of first information and the third information corresponding to the first information form one first training sample. The training module 24 is configured to train a first neural network by using a plurality of first training samples, to obtain the first generator, where the first generator is a trained first neural network.

Optionally, the information generation apparatus 2 further includes an obtaining module 23 and a training module 24. The obtaining module 24 is configured to obtain a plurality of pieces of first information of the first type and third information of the second type that corresponds to each piece of first information, where one piece of first information and the third information corresponding to the first information form one first training sample. The training module 24 is configured to train a first neural network and a second neural network by using a plurality of first training samples, to separately obtain the first generator and a first discriminator, where the first generator is a trained first neural network, and the first discriminator is a trained second neural network. The first neural network is a generator in a generative adversarial network, and the second neural network is a discriminator in the generative adversarial network.

Optionally, that the first message indicates the input supported by the first generator includes: the first message includes one or more of the first information, an identifier of the first information, the first type, and an identifier of the first type.

Optionally, that the second message indicates the input supported by the second generator includes: the second message includes one or more of the fourth information, an identifier of the fourth information, the first type, and the identifier of the first type.

Optionally, the wireless channel characteristic type includes one or more of the following subtypes: a channel impulse response information subtype and a channel state information subtype.

Optionally, the scenario type includes one or more of the following types: an environment description information subtype and an environment perception information subtype.

Optionally, the user profile type includes one or more of the following subtypes: a user parameter subtype and a user behavior information subtype.

Optionally, the first information is an environmental image of an environment in which the information generation apparatus 2 is located and geographical location information of the information generation apparatus 2, and the third information is a channel impulse response of a measurement channel when the information generation apparatus 2 is located in the environment and geographical location.

Optionally, the first information is an environmental image of an environment in which the information generation apparatus 2 is located and a channel impulse response of a measurement channel when the information generation apparatus 2 is located in the environment and geographical location, and the third information is geographical location information of the information generation apparatus 2.

Optionally, the first message further includes an identifier of the first generator, and the identifier of the first generator corresponds to the input supported by the first generator.

Optionally, the transceiver module 21 is further configured to receive a first update indication, where the first update indication indicates the first device to retrain the first generator; the obtaining module 23 is further configured to re-obtain a plurality of pieces of seventh information of the first type, eighth information of the second type that corresponds to each piece of seventh information, and a latent space; the training module 24 is further configured to retrain the first generator by using the plurality of pieces of seventh information, the eighth information corresponding to each piece of seventh information, and the latent space; and the transceiver module 21 is further configured to send a retrained first generator.

Optionally, the first message indicates that all of the first generator includes a structure, a weight value, and an offset value of the first generator.

Optionally, the first message indicates that the part of the first generator includes a structure of the first generator and weight values and offset values of some layers.

The generation module 22, the obtaining module 23, and the training module 24 may be integrated into one module, for example, a processing module.

In a specific implementation, for an implementation of each module or unit, refer to corresponding descriptions of the first device in Embodiment 1 or 2, and the method and the function performed by the first device in Embodiment 1 or 2 are performed.

In another design, a transceiver module 21 is configured to send a third message to a second device, where the third message indicates all or a part of a third generator and optionally further indicates an input supported by the third generator, the input supported by the third generator includes fourth information of a first type, and the third generator is configured to train a neural network corresponding to a second generator. The transceiver module 21 is further configured to receive a fourth message from the second device, where the fourth message indicates all or a part of the second generator and an input supported by the second generator, the input supported by the second generator includes first information of the first type and the fourth information of the first type, the fourth information is different from the first information, and the third generator is different from the second generator.

Optionally, the information generation apparatus 2 further includes a generation module 22. The generation module 22 is configured to input, based on the input supported by the second generator, the first information of the first type into the second generator to generate second information of a second type.

Optionally, the input supported by the third generator is information of the first type, and an output is information of the second type. The input supported by the second generator is information of the first type, and an output is information of the second type. The first type is a scenario type, and the second type is a wireless channel characteristic type; the first type is a user profile and scenario type, and the second type is a wireless channel characteristic type; the first type is a wireless channel characteristic type, and the second type is a user profile type; the first type is a wireless channel characteristic and scenario type, and the second type is a user profile type; the first type is a wireless channel characteristic type, and the second type is a scenario type; or the first type is a wireless channel characteristic and user profile type, and the second type is a scenario type.

Optionally, the information generation apparatus 2 further includes an obtaining module 23 and a training module 24. The obtaining module 24 is configured to obtain a plurality of pieces of fourth information of the first type and sixth information of the second type that corresponds to each piece of fourth information, where one piece of fourth information and the sixth information corresponding to the fourth information form one second training sample. The training module 24 is configured to train a fifth neural network by using a plurality of second training samples, to obtain the third generator, where the third generator is a trained fifth neural network.

Optionally, the information generation apparatus 2 further includes an obtaining module 23 and a training module 24. The obtaining module 24 is configured to obtain a plurality of pieces of fourth information of the first type and sixth information of the second type that corresponds to each piece of fourth information, where one piece of fourth information and the sixth information corresponding to the fourth information form one second training sample. The training module 24 is configured to train a fifth neural network and a sixth neural network by using a plurality of second training samples, to separately obtain the third generator and a third discriminator, where the third generator is a trained fifth neural network, and the third discriminator is a trained sixth neural network. The fifth neural network is a generator in a generative adversarial network, and the sixth neural network is a discriminator in the generative adversarial network.

Optionally, that the third message indicates the input supported by the third generator includes: the third message includes one or more of the fourth information, an identifier of the fourth information, the first type, and an identifier of the first type.

Optionally, that the fourth message indicates the input supported by the second generator includes: the fourth message includes one or more of the first information, an identifier of the first information, the first type, and the identifier of the first type.

Optionally, the wireless channel characteristic type includes one or more of the following subtypes: a channel impulse response information subtype and a channel state information subtype.

Optionally, the scenario type includes one or more of the following types: an environment description information subtype and an environment perception information subtype.

Optionally, the user profile type includes one or more of the following subtypes: a user parameter subtype and a user behavior information subtype.

Optionally, the fourth information is an environmental image of an environment in which the information generation apparatus 2 is located and geographical location information of the information generation apparatus 2, and the sixth information is a channel impulse response of a measurement channel when the information generation apparatus 2 is located in the environment and geographical location.

Optionally, the fourth information is an environmental image of an environment in which the information generation apparatus 2 is located and a channel impulse response of a measurement channel when the information generation apparatus 2 is located in the environment and geographical location, and the sixth information is geographical location information of the information generation apparatus 2.

Optionally, the third message further includes an identifier of the third generator, and the identifier of the third generator corresponds to the input supported by the third generator.

Optionally, the transceiver module 21 is further configured to receive a second update indication, where the second update indication indicates the third device to retrain the third generator; the obtaining module 23 is further configured to re-obtain a plurality of pieces of ninth information of the first type, tenth information of the second type that corresponds to each piece of ninth information, and a latent space; the training module 24 is further configured to retrain the third generator by using the plurality of pieces of ninth information, the tenth information corresponding to each piece of ninth information, and the latent space; and the transceiver module 21 is further configured to send a retrained third generator.

Optionally, the third message indicates that all of the third generator includes a structure, a weight value, and an offset value of the third generator.

Optionally, the third message indicates that the part of the third generator includes a structure of the third generator and weight values and offset values of some layers.

In a specific implementation, for an implementation of each module or unit, refer to corresponding descriptions of the third device in Embodiment 1, and the method and the function performed by the third device in Embodiment 1 are performed.

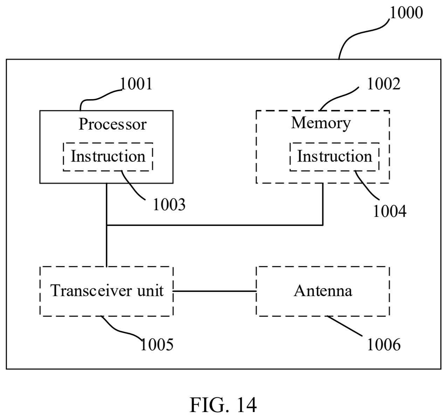

Refer to FIG. 14. FIG. 14 is a schematic diagram of a structure of a communication apparatus according to an embodiment of this application. As shown in FIG. 14, the communication apparatus 1000 provided in this embodiment of this application may be configured to implement the method described in the foregoing method embodiments. For details, refer to the descriptions in the foregoing method embodiments. The communication apparatus 1000 may be any one of the first device, the second device, and the third device.

The communication apparatus 1000 includes one or more processors 1001. The processor 1001 may be a general-purpose processor, a dedicated processor, or the like. For example, the processor may be a baseband processor or a central processing unit. The baseband processor may be configured to process a communication protocol and communication data. The central processing unit may be configured to control an apparatus (for example, a communication device, a base station, or a chip), execute a software program, and process data of the software program. The apparatus may include a transceiver unit, configured to input (receive) and output (send) a signal. For example, the apparatus may be a chip, and the transceiver unit may be an input and/or output circuit of the chip, or a communication interface. The chip may be used in a communication device or an access network device (for example, a base station). For another example, the apparatus may be a communication device (for example, a UE) or an access network device (for example, a base station), and the transceiver unit may be a transceiver, a radio frequency chip, or the like.

The communication apparatus 1000 includes one or more processors 1001, and the one or more processors 1001 may implement the method of the first device, the second device, or the third device in any one of the foregoing embodiments.

Optionally, the processor 1001 may further implement another function in addition to the method in any one of the foregoing embodiments.

Optionally, in a design, the processor 1001 may also include an instruction 1003. The instruction may be run on the processor, so that the communication apparatus 1000 performs the method described in any one of the foregoing method embodiments.

In still another possible design, the communication apparatus 1000 may alternatively include a circuit, and the circuit may implement the function of the first device, the second device, or the third device in any one of the foregoing method embodiments.

In another possible design, the communication apparatus 1000 may include one or more memories 1002. The memory stores an instruction 1004, and the instruction may be run on the processor, so that the communication apparatus 1000 performs the method described in any one of the foregoing method embodiments. Optionally, the memory may further store data. Optionally, the processor may also store instructions and/or data. For example, the one or more memories 1002 may store first application layer measurement configuration described in the foregoing embodiment, or other information such as a service type in the foregoing embodiment. The processor and the memory may be separately disposed, or may be integrated together.

In still another possible design, the communication apparatus 1000 may further include a transceiver unit 1005 and an antenna 1006, or include a communication interface. The transceiver unit 1005 may be referred to as a transceiver machine, a transceiver circuit, or a transceiver, and is configured to implement a transceiver function of the apparatus by using the antenna 1006. The communication interface (not shown in the figure) may be used for communication between a core network device and an access network device, or communication between an access network device and an access network device. Optionally, the communication interface may be a wired communication interface, for example, an optical fiber communication interface.

The processor 1001 may be referred to as a processing unit and control an apparatus (for example, a communication device, a base station, or an AMF).

It should be understood that, the processor in this embodiment of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the foregoing embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired manner, for example, an optical fiber, or a wireless manner, for example, infrared, wireless, or microwave. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a computer program product. The computer program product includes computer program code. When the computer program code is run on a computer, the computer performs the method steps of the first device described in the foregoing embodiments; or when the computer program code is run on a computer, the computer performs the method steps of the second device described in the foregoing embodiments; or when the computer program code is run on a computer, the computer performs the method steps of the third device described in the foregoing embodiments.

An embodiment of this application further provides a computer-readable storage medium. The computer-readable storage medium stores program instructions or a computer program. When the program instructions are run on a computer, the computer performs the method steps of the first device described in the foregoing embodiments; or when the computer program code is run on a computer, the computer performs the method steps of the second device described in the foregoing embodiments; or when the computer program code is run on a computer, the computer performs the method steps of the third device described in the foregoing embodiments.

An embodiment of this application further provides an apparatus. The apparatus may be a chip. The chip includes a processor. The processor is configured to read and execute a computer program stored in a memory, to perform the method in any possible implementation of any one of the foregoing embodiments. Optionally, the chip further includes a memory, and the memory is connected to the processor by using a circuit or a wire. Further, optionally, the chip further includes a communication interface, and the processor is connected to the communication interface. The communication interface is configured to receive data and/or a signal that need/needs to be processed. The processor obtains the data and/or the signal from the communication interface, processes the data and/or the signal, and outputs a processing result through the communication interface. The communication interface may be an input/output interface.

Optionally, the processor and the memory may be physically independent units, or the memory may be integrated with the processor.

Another embodiment of this application further provides a communication system. The communication system includes a communication device and a network device. For example, the communication device may be the first device and the third device in the foregoing embodiments, and the network device may be the second device in the foregoing embodiments.

Further embodiments of this application are provided as follows. It should be noted that the number in the following section does not necessarily comply with the number before.

Embodiment 1. An information generation method, comprising:

receiving, by a second device, a first message and a third message, wherein the first message indicates all or a part of a first generator, the third message indicates all or a part of a third generator, an input supported by the first generator comprises first information of a first type, an input supported by the third generator comprises fourth information of the first type, and the first generator and the third generator are configured to train a neural network corresponding to a second generator; and

sending, by the second device, a second message to a first device, wherein the second message indicates all or a part of the second generator, an input supported by the second generator comprises the first information of the first type and the fourth information of the first type, the fourth information is different from the first information, and the first generator, the third generator, and the second generator are different from each other.

Embodiment 2. The method according to embodiment 1, wherein the input supported by the first generator is information of the first type, and an output is information of a second type;

the input supported by the second generator is information of the first type, and an output is information of the second type; and

the input supported by the third generator is information of the first type, and an output is information of the second type, wherein

the first type is a scenario type, and the second type is a wireless channel characteristic type;

the first type is a user profile and scenario type, and the second type is a wireless channel characteristic type;

the first type is a wireless channel characteristic type, and the second type is a user profile type;

the first type is a wireless channel characteristic and scenario type, and the second type is a user profile type;

the first type is a wireless channel characteristic type, and the second type is a scenario type; or

the first type is a wireless channel characteristic and user profile type, and the second type is a scenario type.

Embodiment 3. The method according to embodiment 1 or 2, wherein before the sending, by the second device, a second message, the method further comprises:

obtaining, by the second device, a plurality of pieces of first information of the first type and a plurality of pieces of fourth information of the first type, wherein

one piece of first information and one piece of second information of the second type that is obtained by inputting the first information into the first generator form one third training sample, one piece of fourth information and one piece of fifth information of the second type that is obtained by inputting the fourth information into the third generator form one fourth training sample, and a plurality of third training samples and a plurality of fourth training samples form one training sample set; and

training, by the second device, a third neural network by using the plurality of training samples in the training sample set, to obtain the second generator, wherein the second generator is a trained third neural network; and

the second generator is separately configured to support generating second information of the second type based on the first information and generating fifth information of the second type based on the fourth information.

Embodiment 4. The method according to embodiment 1 or 2, wherein before the sending, by the second device, a second message, the method further comprises:

obtaining, by the second device, a plurality of pieces of first information of the first type and a plurality of pieces of fourth information of the first type, wherein

one piece of first information and one piece of second information of the second type that is obtained by inputting the first information into the first generator form one third training sample, one piece of fourth information and one piece of fifth information of the second type that is obtained by inputting the fourth information into the third generator form one fourth training sample, and a plurality of third training samples and a plurality of fourth training samples form one training sample set; and

training, by the second device, a third neural network and a fourth neural network by using the plurality of training samples in the training sample set, to separately obtain the second generator and a second discriminator, wherein the second generator is a trained third neural network, and the second discriminator is a trained fourth neural network; and the third neural network is a generator in a generative adversarial network, and the fourth neural network is a discriminator in the generative adversarial network.

Embodiment 5. The method according to embodiment 3 or 4, wherein each third training sample further comprises one piece of information randomly selected from a latent space; and
each fourth training sample further comprises one piece of information randomly selected from the latent space.

Embodiment 6. The method according to any one of embodiments 1 to 5, wherein the first message further indicates the input supported by the first generator; and

that the first message indicates the input supported by the first generator comprises:
the first message comprises one or more of the first information, an identifier of the first information, the first type, and an identifier of the first type.

Embodiment 7. The method according to any one of embodiments 1 to 6, wherein the third message further indicates the input supported by the third generator; and

that the third message indicates the input supported by the third generator comprises:
the third message comprises one or more of the fourth information, an identifier of the fourth information, the first type, and the identifier of the first type.

Embodiment 8. The method according to any one of embodiments 1 to 7, wherein the second message further indicates the input supported by the second generator; and

that the second message indicates the input supported by the second generator comprises:
the second message comprises one or more of the fourth information, the identifier of the fourth information, the first type, and the identifier of the first type.

Embodiment 9. The method according to any one of embodiments 2 to 8, wherein the wireless channel characteristic type comprises one or more of the following subtypes:
a channel impulse response information subtype and a channel state information subtype.

Embodiment 10. The method according to any one of embodiments 2 to 9, wherein the scenario type comprises one or more of the following types:
an environment description information subtype and an environment perception information subtype.

Embodiment 11. The method according to any one of embodiments 2 to 10, wherein the user profile type comprises one or more of the following subtypes:
a user parameter subtype and a user behavior information subtype.

Embodiment 12. The method according to any one of embodiments 3 to 5, wherein the first information is an environmental image of an environment in which the first device is located and geographical location information of the first device, and the second information is a channel impulse response generated by inputting the first information into the first generator; and
the fourth information is an environmental image of an environment in which a third device is located and geographical location information of the third device, and the fifth information is a channel impulse response generated by inputting the fourth information into the third generator.

Embodiment 13. The method according to any one of embodiments 3 to 5, wherein the first information is an environmental image of an environment in which the first device is located and a channel impulse response of a measurement channel when the first device is located in the environment and geographical location, and the second information is geographical location information of the first device that is generated by inputting the first information into the first generator; and
the fourth information is an environmental image of an environment in which a third device is located and a channel impulse response of a measurement channel when the third device is located in the environment and geographical location, and the fifth information is geographical location information of the third device that is generated by inputting the fourth information into the third generator.

Embodiment 14. The method according to any one of embodiments 1 to 13, wherein the first message further comprises an identifier of the first generator, and the identifier of the first generator corresponds to the input supported by the first generator; and

the third message further comprises an identifier of the third generator, and the identifier of the third generator corresponds to the input supported by the third generator.

Embodiment 15. The method according to any one of embodiments 1 to 14, wherein the method further comprises:

sending, by the second device, a first update indication to the first device, wherein the first update indication indicates the first device to retrain the first generator; and

receiving, by the second device, a first generator retrained and sent by the first device.

Embodiment 16. The method according to any one of embodiments 1 to 15, wherein the first message indicates that all of the first generator comprises a structure and a parameter of the first generator; and

the third message indicates that all of the third generator comprises a structure and a parameter of the third generator.

Embodiment 17. The method according to any one of embodiments 1 to 15, wherein the first message indicates that the part of the first generator comprises a structure of the first generator and parameters of some layers; and

the third message indicates that the part of the third generator comprises a structure of the third generator and parameters of some layers.

Embodiment 18. An information generation method, comprising:

sending, by a first device, a first message to a second device, wherein the first message indicates all or a part of a first generator, an input supported by the first generator comprises first information of a first type, and the first generator is configured to train a neural network corresponding to a second generator; and

receiving, by the first device, a second message from the second device, wherein the second message indicates all or a part of the second generator, an input supported by the second generator comprises the first information of the first type and fourth information of the first type, the fourth information is different from the first information, and the first generator is different from the second generator.

Embodiment 19. The method according to embodiment 18, wherein the method further comprises:

inputting, by the first device, the fourth information of the first type into the second generator based on the input supported by the second generator to generate fifth information of a second type.

Embodiment 20. The method according to embodiment 18 or 19, wherein the input supported by the first generator is information of the first type, and an output is information of the second type; and

the input supported by the second generator is information of the first type, and an output is information of the second type, wherein

the first type is a scenario type, and the second type is a wireless channel characteristic type;

the first type is a user profile and scenario type, and the second type is a wireless channel characteristic type;

the first type is a wireless channel characteristic type, and the second type is a user profile type;

the first type is a wireless channel characteristic and scenario type, and the second type is a user profile type;

the first type is a wireless channel characteristic type, and the second type is a scenario type; or

the first type is a wireless channel characteristic and user profile type, and the second type is a scenario type.

Embodiment 21. The method according to any one of embodiments 18 to 20, wherein before the sending, by a first device, a first message, the method further comprises:

obtaining, by the first device, a plurality of pieces of first information of the first type and third information of the second type that corresponds to each piece of first information, wherein one piece of first information and the third information corresponding to the first information form one first training sample; and

training, by the first device, a first neural network by using a plurality of first training samples, to obtain the first generator, wherein the first generator is a trained first neural network.

Embodiment 22. The method according to any one of embodiments 18 to 20, wherein before the sending, by a first device, a first message, the method further comprises:

obtaining, by the first device, a plurality of pieces of first information of the first type and third information of the second type that corresponds to each piece of first information, wherein one piece of first information and the third information corresponding to the first information form one first training sample; and

training, by the first device, a first neural network and a second neural network by using a plurality of first training samples, to separately obtain the first generator and a first discriminator, wherein the first generator is a trained first neural network, and the first discriminator is a trained second neural network; and

the first neural network is a generator in a generative adversarial network, and the second neural network is a discriminator in the generative adversarial network.

Embodiment 23. The method according to embodiment 21 or 22, wherein each first training sample further comprises one piece of information randomly selected from a latent space.

Embodiment 24. The method according to any one of embodiments 18 to 23, wherein the first message further indicates the input supported by the first generator; and

that the first message indicates the input supported by the first generator comprises:
the first message comprises one or more of the first information, an identifier of the first information, the first type, and an identifier of the first type.

Embodiment 25. The method according to any one of embodiments 18 to 24, wherein the second message further indicates the input supported by the second generator; and

that the second message indicates the input supported by the second generator comprises:

the second message comprises one or more of the fourth information, an identifier of the fourth information, the first type, and the identifier of the first type.

Embodiment 26. The method according to any one of embodiments 19 to 25, wherein the wireless channel characteristic type comprises one or more of the following subtypes:
a channel impulse response information subtype and a channel state information subtype.

Embodiment 27. The method according to any one of embodiments 19 to 26, wherein the scenario type comprises one or more of the following types:
an environment description information subtype and an environment perception information subtype.

Embodiment 28. The method according to any one of embodiments 19 to 27, wherein the user profile type comprises one or more of the following subtypes:
a user parameter subtype and a user behavior information subtype.

Embodiment 29. The method according to any one of embodiments 21 to 23, wherein the first information is an environmental image of an environment in which the first device is located and geographical location information of the first device, and the third information is a channel impulse response of a measurement channel when the first device is located in the environment and geographical location.

Embodiment 30. The method according to any one of embodiments 21 to 23, wherein the first information is an environmental image of an environment in which the first device is located and a channel impulse response of a measurement channel when the first device is located in the environment and geographical location, and the third information is geographical location information of the first device.

Embodiment 31. The method according to any one of embodiments 18 to 30, wherein the first message further comprises an identifier of the first generator, and the identifier of the first generator corresponds to the input supported by the first generator.

Embodiment 32. The method according to any one of embodiments 18 to 31, wherein after the sending, by a first device, a first message, the method further comprises:

receiving, by the first device, a first update indication, wherein the first update indication indicates the first device to retrain the first generator;
re-obtaining, by the first device, a plurality of pieces of seventh information of the first type, eighth information of the second type that corresponds to each piece of seventh information, and the latent space;
retraining, by the first device, the first generator by using the plurality of pieces of seventh information, the eighth information corresponding to each piece of seventh information, and the latent space; and
sending, by the first device, a retrained first generator.

Embodiment 33. The method according to any one of embodiments 18 to 32, wherein the first message indicates that all of the first generator comprises a structure and a parameter of the first generator.

Embodiment 34. The method according to any one of embodiments 18 to 32, wherein the first message indicates that the part of the first generator comprises a structure of the first generator and parameters of some layers.

Embodiment 35. A neural network training method, comprising:

obtaining, by a first device, a plurality of pieces of first information of a first type and third information of a second type that corresponds to each piece of first information, wherein one piece of first information and the third information corresponding to the first information form one first training sample; and
training, by the first device, a first neural network by using a plurality of first training samples, to obtain a first generator; or training, by the first device, a first neural network and a second neural network by using a plurality of first training samples, to separately obtain a first generator and a first discriminator, wherein the first generator is configured to generate second information of the second type based on the first information;
the first generator is a trained first neural network, and the first discriminator is a trained second neural network; and
the first neural network is a generator in a generative adversarial network, and the second neural network is a discriminator in the generative adversarial network.

Embodiment 36. The method according to embodiment 35, wherein each first training sample further comprises one piece of information randomly selected from a latent space.

Embodiment 37. The method according to embodiment 35 or 36, wherein the first type is a scenario type, and the second type is wireless channel characteristic type;

the first type is a user profile and scenario type, and the second type is a wireless channel characteristic type;
the first type is a wireless channel characteristic type, and the second type is a user profile type;
the first type is a wireless channel characteristic and scenario type, and the second type is a user profile type;
the first type is a wireless channel characteristic type, and the second type is a scenario type; or
the first type is a wireless channel characteristic and user profile type, and the second type is a scenario type.

Embodiment 38. The method according to any one of embodiments 35 to 37, wherein the first information is an environmental image of an environment in which the first device is located and geographical location information of the first device, the third information is a channel impulse response of a measurement channel when the first device is located in the environment and geographical location, and the second information is a channel impulse response generated by inputting the first information into the first generator.

Embodiment 39. The method according to any one of embodiments 35 to 37, wherein the first information is an environmental image of an environment in which the first device is located and a channel impulse response of a measurement channel when the first device is located in the environment and geographical location, the third information is geographical location information of the first device, and the second information is geographical location information of the first device generated by inputting the first information into the first generator.

Embodiment 40. A neural network training method, comprising:

obtaining, by a second device, a plurality of pieces of first information of a first type and a plurality of pieces of fourth information of the first type, wherein one piece of first information and one piece of second information of a second type that is obtained by inputting the first information into a first generator form one third training sample, one piece of fourth information and one piece of fifth information of the second type that is obtained by inputting the fourth information into a third generator form one fourth training sample, and a plurality of third training samples and a plurality of fourth training samples form one training sample set; and
training, by the second device, a third neural network by using a plurality of training samples in the training sample set, to obtain a second generator, wherein the second generator is a trained third neural network; or training, by the second device, a third neural network and a fourth neural network by using a plurality of training samples in the training sample set, to separately obtain a second generator and a second discriminator, wherein the second generator is a trained third neural network, and the second discriminator is a trained fourth neural network;
the second generator is separately configured to support generating second information of the second type based on the first information and generating fifth information of the second type based on the fourth information; and the third neural network is a generator in a generative adversarial network, and the fourth neural network is a discriminator in the generative adversarial network.

Embodiment 41. The method according to embodiment 40, wherein the first type is a scenario type, and the second type is a wireless channel characteristic type;

the first type is a user profile and scenario type, and the second type is a wireless channel characteristic type;
the first type is a wireless channel characteristic type, and the second type is a user profile type;
the first type is a wireless channel characteristic and scenario type, and the second type is a user profile type;

the first type is a wireless channel characteristic type, and the second type is a scenario type; or

the first type is a wireless channel characteristic and user profile type, and the second type is a scenario type.

Embodiment 42. An information generation apparatus, comprising a unit or module configured to perform the method according to any one of embodiments 1 to 17.

Embodiment 43. An information generation apparatus, comprising a unit or module configured to perform the method according to any one of embodiments 18 to 34.

Embodiment 44. A neural network training apparatus, comprising a unit or module configured to perform the method according to any one of embodiments 35 to 41.

Embodiment 45. A communication apparatus, comprising:

one or more processors and one or more memories, wherein
the one or more memories are configured to store a computer program, and the one or more processors are configured to execute the computer program stored in the one or more memories, to cause the communication apparatus to perform the method according to any one of embodiments 1 to 17.

Embodiment 46. A communication apparatus, comprising:

one or more processors and one or more memories, wherein
the one or more memories are configured to store a computer program, and the one or more processors are configured to execute the computer program stored in the one or more memories, to cause the communication apparatus to perform the method according to any one of embodiments 18 to 34.

Embodiment 47. A communication apparatus, comprising:

one or more processors and one or more memories, wherein
the one or more memories are configured to store a computer program, and the one or more processors are configured to execute the computer program stored in the one or more memories, to cause the communication apparatus to perform the method according to any one of embodiments 35 to 41.

Embodiment 48. A readable storage medium, configured to store a program, wherein the program is executed by one or more processors, to cause an apparatus comprising the one or more processors to perform the method according to any one of embodiments 1 to 17.

Embodiment 49. A readable storage medium, configured to store a program, wherein the program is executed by one or more processors, to cause an apparatus comprising the one or more processors to perform the method according to any one of embodiments 18 to 34.

Embodiment 50. A readable storage medium, configured to store a program, wherein the program is executed by one or more processors, to cause an apparatus comprising the one or more processors to perform the method according to any one of embodiments 35 to 41.

Embodiment 51. A communication system, comprising the apparatus according to embodiment 45 and the apparatus according to embodiment 46.

A person of ordinary skill in the art may understand that all or some of the processes of the methods in embodiments may be implemented by a computer program instructing relevant hardware. The program may be stored in a computer-readable storage medium. When the program is run, the processes of the foregoing method embodiments are performed. The foregoing storage medium includes any medium that can store program code, such as a ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.


**Claims**

1. An information generation method, performed by a first device, or, by a chip for the first device, comprising:

sending a first message to a second device, wherein the first message indicates all or a part of a first generator, an input supported by the first generator comprises first information of a first type, and the first generator is configured to train a neural network corresponding to a second generator; and
receiving a second message from the second device, wherein the second message indicates all or a part of the second generator, an input supported by the second generator comprises the first information of the first type and fourth information of the first type, the fourth information is different from the first information, and the first generator is different from the second generator;
wherein the input supported by the first generator is information of the first type, and an output is information of the second type; and
the input supported by the second generator is information of the first type, and an output is information of the second type.

2. The method according to claim 1, wherein the method further comprises:
inputting the fourth information of the first type into the second generator based on the input supported by the second generator to generate fifth information of a second type.

3. The method according to claim 1 or 2, wherein

the first type is a scenario type, and the second type is a wireless channel characteristic type;
the first type is a user profile and scenario type, and the second type is a wireless channel characteristic type;
the first type is a wireless channel characteristic type, and the second type is a user profile type;
the first type is a wireless channel characteristic and scenario type, and the second type is a user profile type;
the first type is a wireless channel characteristic type, and the second type is a scenario type; or
the first type is a wireless channel characteristic and user profile type, and the second type is a scenario type.

4. The method according to any one of claims 1 to 3, wherein before the sending a first message, the method further comprises:

obtaining a plurality of pieces of first information of the first type and third information of the second type that corresponds to each piece of first information, wherein one piece of first information and the third information corresponding to the first information form one first training sample; and
training a first neural network by using a plurality of first training samples, to obtain the first generator, wherein the first generator is a trained first neural network.

5. The method according to any one of claims 1 to 3, wherein before the sending a first message, the method further comprises:

obtaining a plurality of pieces of first information of the first type and third information of the second type that corresponds to each piece of first information, wherein one piece of first information and the third information corresponding to the first information form one first training sample; and
training a first neural network and a second neural network by using a plurality of first training samples, to separately obtain the first generator and a first discriminator, wherein the first generator is a trained first neural network, and the first discriminator is a trained second neural network; and
the first neural network is a generator in a generative adversarial network, and the second neural network is a discriminator in the generative adversarial network.

6. The method according to claim 5 or 6, wherein each first training sample further comprises one piece of information randomly selected from a latent space.

7. The method according to any one of claims 1 to 6, wherein the first message further indicates the input supported by the first generator; and
that the first message indicates the input supported by the first generator comprises:
the first message comprises one or more of the first information, an identifier of the first information, the first type, and an identifier of the first type.

8. The method according to any one of claims 1 to 7, wherein the second message further indicates the input supported by the second generator; and
that the second message indicates the input supported by the second generator comprises:
the second message comprises one or more of the fourth information, an identifier of the fourth information, the first type, and the identifier of the first type.

9. The method according to any one of claims 3 to 8, wherein the wireless channel characteristic type comprises one or more of the following subtypes:
a channel impulse response information subtype and a channel state information subtype.

10. The method according to any one of claims 3 to 9, wherein the scenario type comprises one or more of the following types:
an environment description information subtype and an environment perception information subtype.

11. The method according to any one of claims 3 to 10, wherein the user profile type comprises one or more of the following subtypes:
a user parameter subtype and a user behavior information subtype.

12. The method according to any one of claims 4 to 6, wherein the first information is an environmental image of an environment in which the first device is located and geographical location information of the first device, and the third information is a channel impulse response of a measurement channel when the first device is located in the environment and geographical location.

13. The method according to any one of claims 4 to 6, wherein the first information is an environmental image of an environment in which the first device is located and a channel impulse response of a measurement channel when the first device is located in the environment and geographical location, and the third information is geographical location information of the first device.

14. The method according to any one of claims 1 to 13, wherein the first message further comprises an identifier of the first generator, and the identifier of the first generator corresponds to the input supported by the first generator.

15. The method according to any one of claims 1 to 14, wherein after the sending, by a first device, a first message, the method further comprises:

receiving a first update indication, wherein the first update indication indicates the first device to retrain the first generator;
re-obtaining a plurality of pieces of seventh information of the first type, eighth information of the second type that corresponds to each piece of seventh information, and the latent space;
retraining the first generator by using the plurality of pieces of seventh information, the eighth information corresponding to each piece of seventh information, and the latent space; and
sending a retrained first generator.

16. The method according to any one of claims 1 to 15, wherein the first message indicates that all of the first generator comprises a structure and a parameter of the first generator.

17. The method according to any one of claims 1 to 16, wherein the first message indicates that the part of the first generator comprises a structure of the first generator and parameters of some layers.

18. An apparatus, comprising a unit or module configured to perform the method according to any one of claims 1 to 17.

FIG. 1a

FIG. 1b

FIG. 2

FIG. 3

FIG. 4

| First device | Second device | Third device |
|---|---|---|

S101. Send a first message, where the first message indicates all or a part of a first generator, an input supported by the first generator includes first information of a first type, and the first generator is configured to train a neural network corresponding to a second generator

S102. Send a third message, where the third message indicates all or a part of a third generator, an input supported by the third generator includes fourth information of the first type, and the third generator is configured to train the neural network corresponding to the second generator

S103. Receive the first message and the third message

S104. Send a second message, where the second message indicates all or a part of the second generator, an input supported by the second generator includes the first information of the first type and fourth information of the first type, the fourth information is different from the first information, and the first generator is different from the second generator

S105. Send a fourth message, where the fourth message indicates all or a part of the second generator, the input supported by the second generator includes the first information of the first type and the fourth information of the first type, the fourth information is different from the first information, and the third generator is different from the second generator

S106. Receive the second message

S107. Receive the fourth message

FIG. 5

FIG. 6a

FIG. 6b

FIG. 6c

FIG. 7

A first device obtains a plurality of pieces of first information of a first type and third information of a second type that corresponds to each piece of the first information, where one piece of first information and the third information corresponding to the first information form one first training sample

S201

The first device trains a first neural network by using a plurality of first training samples, to obtain a first generator, where the first generator is a trained first neural network

S202

FIG. 8

A second device obtains a plurality of pieces of first information of a first type and a plurality of pieces of fourth information of the first type, where one piece of first information and one piece of second information of a second type that is obtained by inputting the first information into a first generator form one third training sample, one piece of fourth information and one piece of fifth information of the second type that is obtained by inputting the fourth information into a third generator form one fourth training sample, and a plurality of third training samples and a plurality of fourth training samples form one training sample set

S301

The second device trains a third neural network by using a plurality of training samples in the training sample set, to obtain a second generator, where the second generator is a trained third neural network

S302

FIG. 9

FIG. 10

Scenario A+B (Scenario A+B)

random noise

Generator /Third neural network

Fake channel power delay spectrum

Second device

+

First information

Fourth information

Real channel power delay spectrum

Discriminator /Fourth neural network

real/fake probability

Air Interface (Air Interface)

TO FIG. 11B

TO FIG. 11B

FIG. 11A

random noise

Fake channel power delay spectrum

Generator /First neural network

Real channel power delay spectrum

Discriminator /Second neural network

real/fake probability

First information

First device

Scenario A (Scenario A)

random noise

Fake channel power delay spectrum

Generator /Fifth neural network

Real channel power delay spectrum

Discriminator /Sixth neural network

real/fake probability

Fourth information

Third device

Scenario B (Scenario B)

random noise: random noise
Generator: generator
Discriminator: discriminator
Real/fake probability: real/fake probability

FIG. 11B

FIG. 12

FIG. 13

1000

1001

Processor

Instruction

1003

1002

Memory

Instruction

1004

Transceiver unit

1005

Antenna

1006

FIG. 14

Europäisches
Patentamt

European
Patent Office

Office européen
des brevets

**EUROPEAN SEARCH REPORT**

**Application Number**

**EP 25 20 4784**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/149425 A1 (LARISH BRYAN CHRISTOPHER [US] ET AL) 16 May 2019 (2019-05-16) * paragraph [0029] * ----- | 1-15 | INV. G06N3/02 |
| A | US 2020/389645 A1 (ALAKUIJALA JYRKI [CH] ET AL) 10 December 2020 (2020-12-10) * paragraph [0110] * ----- | 1-15 | |
| A | US 2020/311986 A1 (TONG WEI [US] ET AL) 1 October 2020 (2020-10-01) * paragraphs [0029] - [0031] * ----- | 1-15 | |
| A | US 2019/333219 A1 (XU JIAOFENG [US] ET AL) 31 October 2019 (2019-10-31) * paragraphs [0112] - [0114] * ----- | 1-15 | |

**TECHNICAL FIELDS SEARCHED (IPC)**

G06F
G06N
G06V
H04L

The present search report has been drawn up for all claims

| Place of search | Date of completion of the search | Examiner |
|---|---|---|
| Munich | 13 February 2026 | Mele, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 4784

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | Publication date | Patent family member(s) | | Publication date |
|---|---|---|---|---|
| US 2019149425 A1 | 16-05-2019 | US | 2019149425 A1 | 16-05-2019 |
| | | US | 2021273857 A1 | 02-09-2021 |
| US 2020389645 A1 | 10-12-2020 | CN | 113678465 A | 19-11-2021 |
| | | EP | 3981161 A1 | 13-04-2022 |
| | | US | 2020389645 A1 | 10-12-2020 |
| | | US | 2022046242 A1 | 10-02-2022 |
| | | WO | 2020247014 A1 | 10-12-2020 |
| US 2020311986 A1 | 01-10-2020 | CN | 111754389 A | 09-10-2020 |
| | | DE | 102020103761 A1 | 01-10-2020 |
| | | US | 2020311986 A1 | 01-10-2020 |
| US 2019333219 A1 | 31-10-2019 | AU | 2019257675 A1 | 10-12-2020 |
| | | CN | 112204620 A | 08-01-2021 |
| | | EP | 3785231 A1 | 03-03-2021 |
| | | JP | 7039153 B2 | 22-03-2022 |
| | | JP | 2021521993 A | 30-08-2021 |
| | | US | 2019333219 A1 | 31-10-2019 |
| | | WO | 2019209820 A1 | 31-10-2019 |

EPO FORM P0459

For more details about this annex : see Official Journal of the European Patent Office, No. 12/82

**REFERENCES CITED IN THE DESCRIPTION**

**Patent documents cited in the description**

- CN 202011556035